(19) Europäisches Patentamt
European Patent Office
Office européen des brevets

(11) **EP 4 704 485 A1**

(12) **EUROPEAN PATENT APPLICATION**
published in accordance with Art. 153(4) EPC

(43) Date of publication:
**04.03.2026 Bulletin 2026/10**

(21) Application number: **23948910.7**

(22) Date of filing: **18.08.2023**

(51) International Patent Classification (IPC):
***H04W 72/40*** *(2023.01)*

(52) Cooperative Patent Classification (CPC):
**H04W 72/40**

(86) International application number:
**PCT/CN2023/113861**

(87) International publication number:
**WO 2025/035483 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2023 PCT/CN2023/112650**

(71) Applicant: **GUANGDONG OPPO MOBILE
TELECOMMUNICATIONS
CORP., LTD.
Dongguan, Guangdong 523860 (CN)**

(72) Inventors:
• **ZHAO, Zhenshan**
  **Dongguan, Guangdong 523860 (CN)**
• **DING, Yi**
  **Dongguan, Guangdong 523860 (CN)**
• **MA, Teng**
  **Dongguan, Guangdong 523860 (CN)**

(74) Representative: **Taor, Simon Edward William et al
Venner Shipley LLP
200 Aldersgate
London EC1A 4HD (GB)**

(54) **METHOD FOR SIDELINK TRANSMISSION AND TERMINAL DEVICE**

(57)    Provided are a method for sidelink transmission and a terminal device. The method comprises: a first terminal device determining transmission resources of a first PSFCH, wherein the transmission resource of the first PSFCH comprises one or more of the following: a common comb tooth occupied by the first PSFCH; and a dedicated RB occupied by the first PSFCH. On the basis of the present application, the first terminal device can determine transmission resources of a PSFCH in an unlicensed spectrum on the basis of a comb tooth structure. Thus, according to the present application, when determining a resource of a sidelink feedback channel, the comb tooth structure involved in the unlicensed spectrum is considered, thereby considering both the requirements for the unlicensed spectrum and the requirements for transmission of sidelink feedback information.

Determine transmission resources
for a first PSFCH ⎯⎯ S1910

**FIG. 19**

EP 4 704 485 A1

## Description

CROSS-REFERENCE TO RELATED APPLICATION(S)

The application claims priority to PCT application No. PCT/CN2023/112650, filed to World Intellectual Property Organization Administration on August 11, 2023 and entitled "METHOD FOR SIDELINK TRANSMISSION AND TERMINAL DEVICE", the disclosure of which is hereby incorporated by reference in its entirety.

TECHNICAL FIELD

Embodiments of the present disclosure relate to the technical field of communications, and more particularly to, a method for sidelink transmission and a terminal device.

BACKGROUND

A sidelink feedback channel is introduced into some sidelink communication systems, to improve reliability of sidelink communication. The unicast communication is taken as an example, a terminal device at a sending end may send sidelink data to a terminal device at a receiving end. The terminal device at the receiving end may send sidelink feedback information to the terminal device at the sending end. Herein, the sidelink feedback information may be carried on the sidelink feedback channel.

With the development of technology, the sidelink communication technology is applied to the unlicensed spectrum. In the unlicensed spectrum communication, it is not clear how to determine a resource for the sidelink feedback channel.

SUMMARY

The present disclosure provides a method for sidelink transmission and a terminal device. Various aspects of the present disclosure are described below.

In a first aspect, there is provided a method for sidelink transmission. The method includes: a first terminal device determines transmission resources for a first Physical Sidelink Feedback Channel (PSFCH), where the transmission resources for the first PSFCH include one or more of: a common interlace occupied by the first PSFCH; and at least one dedicated Resource Block (RB) occupied by the first PSFCH.

In a second aspect, there is provided a terminal device. The terminal device is a first terminal device. The terminal device includes a determining unit configured to determine transmission resources for a first PSFCH, where the transmission resources for the first PSFCH include one or more of: a common interlace occupied by the first PSFCH; and at least one dedicated RB occupied by the first PSFCH.

In a third aspect, there is provided a terminal device including a processor and a memory, where the memory is configured to store one or more computer programs, and the processor is configured to call the computer programs in the memory, to cause the terminal device to perform some of or all of the operations in the method of the first aspect.

In a fourth aspect, the embodiment of the present disclosure provides a communication system including the aforementioned terminal device. In another possible design, the system may further include other devices that interact with the terminal device in the solutions provided by the embodiments of the present disclosure.

In a fifth aspect, the embodiment of the present disclosure provides a computer-readable storage medium configured to store a computer program, where the computer program causes the terminal device to perform some of or all of the operations in the methods of the aforementioned aspects.

In a sixth aspect, the embodiment of the present disclosure provides a computer program product, where the computer program product includes a non-transitory computer-readable storage medium configured to store a computer program, and the computer program is operable to cause the terminal device to perform some of or all of the operations in the methods of the aforementioned aspects. In some implementations, the computer program product may be a software installation package.

In a seventh aspect, the embodiment of the present disclosure provides a chip including a memory and a processor, where the processor is configured to call and run a computer program from the memory, to implement some of or all of the operations in the methods of the aforementioned aspects.

According to the present disclosure, the first terminal device may determine the transmission resources for the PSFCH in the unlicensed spectrum based on the interlace structure. Therefore, according to the present disclosure, when determining the resource of the sidelink feedback channel, the interlace structure involved in the unlicensed spectrum is considered, thereby balancing a requirement of the unlicensed spectrum and a demand for the transmission of the sidelink feedback information.

BRIEF DESCRIPTION OF THE DRAWINGS

FIG. 1 is an example diagram of a system architecture of a wireless communication system to which an embodiment of the present disclosure is applied.

FIG. 2 is an example diagram of a scenario of sidelink communication within a network coverage.

FIG. 3 is an example diagram of a scenario of sidelink communication partially within a network coverage.

FIG. 4 is an example diagram of a scenario of sidelink communication outside a network coverage.

FIG. 5 is an example diagram of a scenario of sidelink communication based on a central control node.

FIG. 6 is an example diagram of a broadcast-based sidelink communication manner.

FIG. 7 is an example diagram of a unicast-based sidelink communication manner.

FIG. 8 is an example diagram of a multicast-based sidelink communication manner.

FIG. 9 is an example diagram of transmission of sidelink feedback information in a unicast communication.

FIG. 10 is a schematic diagram of a slot structure of sidelink communication.

FIG. 11 is an example diagram of a PSFCH feedback having a period of 4.

FIG. 12 is an example diagram of a correspondence between a PSFCH transmission resource subset and first Physical Sidelink Shared Channel (PSSCH) transmission resources.

FIG. 13 is an example diagram of indexes of PSFCH resources.

FIG. 14 is a schematic diagram of an RB set.

FIG. 15 is an example diagram of an interlace-based resource configuration.

FIG. 16 is an example diagram of a frame structure.

FIG. 17 is another example diagram of a frame structure.

FIG. 18 is an example diagram of slot positions corresponding to PSFCH transmission occasions.

FIG. 19 is a schematic flowchart of a method for sidelink transmission according to an embodiment of the present disclosure.

FIG. 20 is a schematic diagram of frequency-domain resources for a PSFCH transmission occasion.

FIG. 21 is an example diagram of transmission resources for a first PSFCH and a third PSFCH according to an embodiment of the present disclosure.

FIG. 22 is a schematic structural diagram of a terminal device 2200 according to an embodiment of the present disclosure.

FIG. 23 is a schematic structural diagram of a device for communication according to an embodiment of the present disclosure.

DETAILED DESCRIPTION

Hereinafter, technical solutions in the present disclosure are described with reference to the accompanying drawings.

Architecture of a communication system

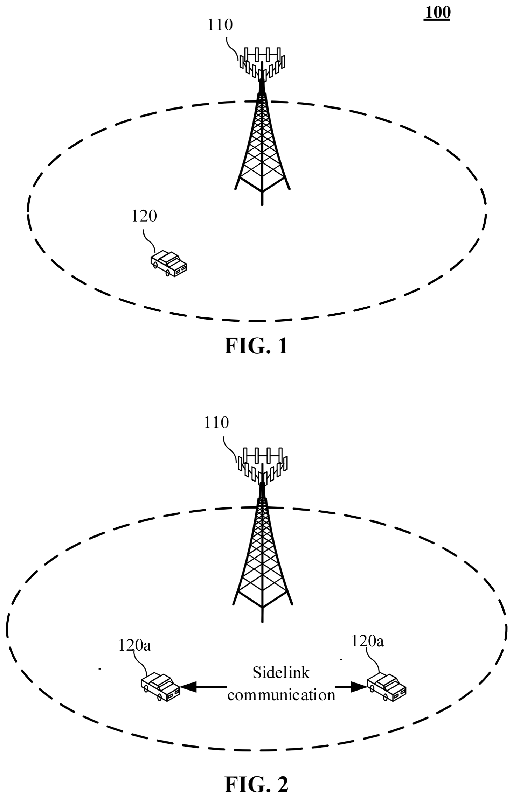

FIG. 1 is an example diagram of a system architecture of a wireless communication system 100 to which an embodiment of the present disclosure is applied. The wireless communication system 100 includes a network device 110 and a terminal device 120. The network device 110 may be a device that communicates with the terminal device 120. The network device 110 may provide communication coverage for a particular geographic area and may communicate with terminal devices 120 located within the coverage.

FIG. 1 exemplarily illustrates one network device and two terminal devices. Optionally, the wireless communication system 100 may include one or more network devices 110, and/or one or more network terminal devices 120. For one network device 110, the one or more terminal devices 120 may all be located within the network coverage of the network device 110, or may all be located outside the network coverage of the network device 110, or a part of the one or more terminal devices 120 may be located within the coverage of the network device 110, and the other part of the one or more terminal devices 120 may be located outside the network coverage of the network device 110, which is not limited in the embodiment of the present disclosure.

Optionally, the wireless communication system 100 may also include other network entities, such as, network controllers, mobility management entities, etc., which are not limited by the embodiments of the present disclosure.

It is to be understood that the technical solutions of the embodiments of the present disclosure may be applied to various communication systems, such as: a 5th Generation (5G) system or a New Radio (NR) system, a Long Term Evolution (LTE) system, a LTE Frequency Division Duplex (FDD) system, a LTE Time Division Duplex (TDD) system, etc.

The technical solutions provided by the present disclosure may also be applied to future communication systems, such as, a 6th generation mobile communication system, a satellite communication system, etc.

The terminal device in the embodiments of the present disclosure may also be referred to as User Equipment (UE), an access terminal, a user unit, a user station, a mobile station, a remote station, a remote terminal device, a mobile device, a user terminal, a wireless communication device, a user agent or a user device, etc. The terminal device in the embodiments of the present disclosure may be a device that provides voice and/or data connectivity to a user, and may be used to connect people, objects and machines, such as a handheld device with wireless connection function, a vehicle-mounted device, etc. The terminal device in the embodiments of the present disclosure may be a mobile phone, a Pad, a notebook computer, a palmtop computer, a Mobile Internet Device (MID), a wearable device, a vehicle, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. For example, the terminal device may act as a scheduling entity that provides sidelink signal(s) between terminal devices in the Vehicle to Everything (V2X), the Device to Device (D2D) or the like. For example, a cellular phone communicates with a car by using the sidelink signal(s). The cellular phone communicates with the device in smart home without relaying communication signal(s) by the base station. Optionally, the terminal device may be used to act as a base station.

The network device in the embodiments of the present disclosure may be a device configured to communicate with a terminal device, and the network device may also be referred to as an access network device or a radio access network device, for example, the network device may be a base station. The network device in the embodiments of the present disclosure may refer to a Radio Access Network (RAN) node (or device) that accesses a terminal device to a wireless network. The base station may broadly cover or be replaced with following names, such as, Node B (NodeB), evolved NodeB (eNB), next generation NodeB (gNB), relay station, access point, Transmitting and Receiving Point (TRP), Transmitting Point (TP), Master eNB (MeNB), Secondary eNB (SeNB), Multi-standard radio (MSR) node, home base station, network controller, access node, wireless node, Access Point (AP), transmission node, transceiver node, Base Band Unit (BBU), Remote Radio Unit (RRU), Active Antenna Unit (AAU), Remote Radio Head (RRH), Central Unit (CU), Distributed Unit (DU), positioning node, etc. The base station may be a macro base station, a micro base station, a relay node, a donor node or a combination thereof. The base station may also be a communication module, a modem or a chip provided inside the device or device. The base station may also be a mobile switching center and a device that undertakes a function of the base station in D2D communication, V2X communication, Machine-to-Machine (M2M) communication, a device in network side in a 6G network, a device that undertakes a function of the base station in a future communication system, etc. The base station may support networks with the same technology or different access technologies. The specific technology and the specific device form adopted by the network device are not limited in the embodiments of the present disclosure.

The base station may be fixed or mobile. For example, a helicopter or unmanned aerial vehicle may be configured to act as a mobile base station, and one or more cells may be moved according to the location of the mobile base station. In other examples, the helicopter or unmanned aerial vehicle may be configured to function as a device that communicates with another network device.

In some deployments, the network device in the embodiment of the present disclosure may be a CU or a DU, or the network device may include a CU and a DU. The gNB may also include an AAU

The network device and the terminal device may be deployed on land, and include indoor or outdoor device, hand-held device, or vehicle-mounted device. The network device and the terminal device may also be deployed on the water. The network device and the terminal device may also be deployed in airplanes, in balloons and in satellites in the air. The scenario where the network device and the terminal device are located is not limited in the embodiment of the present disclosure.

### Sidelink communications in different network coverage situations.

The sidelink communication refers to a communication technology based on the Sidelink (SL, which is also known as a direct communication link). For example, The sidelink communication may be the D2D communication or the V2X communication. In the traditional cellular system, communication data is received or sent between a terminal device and a network device, while the sidelink communication supports direct transmission of communication data between terminal devices. Compared with the traditional cellular communication, the manner of the direct transmission of the communication data between terminal devices may have higher spectrum efficiency and lower transmission delay. For example, the sidelink communication technology may be applied to the V2X system.

In the sidelink communication, according to the network coverage situation where the terminal device is located, the sidelink communication may be classified into: the sidelink communication within the network coverage; the sidelink communication partially within the network coverage; and the sidelink communication outside the network coverage.

FIG. 2 is an example diagram of a scenario of sidelink communication within a network coverage. In the scenario illustrated in FIG. 2, both the two terminal devices 120a are located within the coverage of the network device 110. Therefore, both the two terminal devices 120a may receive configuration signaling from the network device 110 (the configuration signaling in the present disclosure may also be replaced with configuration information), and determine a sidelink configuration according to the configuration signaling from the network device 110. After the sidelink configuration is performed on both the two terminal devices 120a, the two terminal devices 120a may perform the sidelink communication on the sidelink.

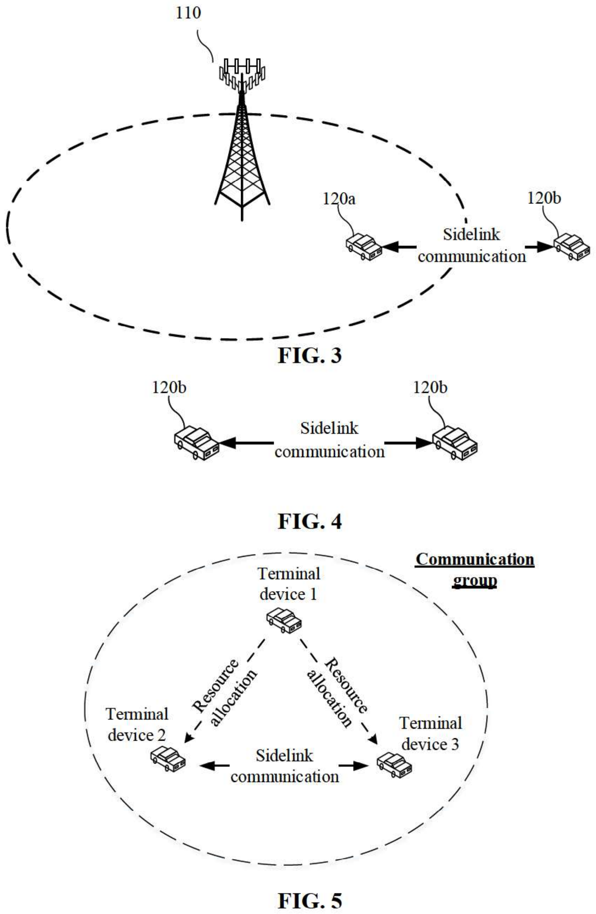

FIG. 3 is an example diagram of a scenario of sidelink communication partially within a network coverage. In the scenario illustrated in FIG. 3, the terminal device 120a performs the sidelink communication with the terminal device 120b. The terminal device 120a is located within the coverage of the network device 110, and therefore, the terminal device 120a may receive the configuration signaling from the network device 110 and determine the sidelink configuration according to the configuration signaling from the network device 110. The terminal device 120b is located outside the network coverage and cannot receive the configuration signaling from the network device 110. In this case, the terminal device 120b may determine the sidelink configuration according to pre-configuration information and/or information carried in a Physical Sidelink Broadcast Channel (PSBCH) sent by the terminal device 120a located within the network coverage. After the sidelink configuration is performed on both the terminal device 120a and the terminal device 120b, the sidelink communication may be performed on the sidelink.

FIG. 4 is an example diagram of a scenario of sidelink communication outside a network coverage. In the scenario illustrated in FIG. 4, both the two terminal devices 120b are located outside the network coverage. In this case, both the two terminal devices 120b may determine the sidelink configuration according to the pre-configuration information. After the sidelink configuration is performed on both the two terminal devices 120b, the two terminal devices 120b may perform the sidelink communication on the sidelink.

### Sidelink communication based on a central control node.

FIG. 5 is an example diagram of a scenario of sidelink communication based on a central control node. In the scenario of the sidelink communication scenario, multiple terminal devices may constitute one communication group, and a central control node exists in the communication group. The central control node may be one terminal device (e.g., the terminal device 1 in FIG. 5) in the communication group, and the terminal device may also be referred to as a Cluster Header (CH) terminal device. The central control node may be responsible for completing one or more of the following functions: establishing a communication group, admitting/removing a group member into/from the communication group, coordinating resources within the communication group, allocating sidelink transmission resources for other terminal devices, receiving sidelink feedback information from other terminal devices, and coordinating resources with other communication groups.

### Sidelink communication modes

Certain standards or protocols (e.g., the 3rd Generation Partnership Project (3GPP)) define two sidelink communication modes: a first mode and a second mode.

In the first mode, resources (the resources mentioned in the present disclosure may also be referred to as transmission resources, such as time-frequency resources) of the terminal device are allocated by a network device. The terminal device sends data on the sidelink according to the resources allocated by the network device. The network device may allocate, to the terminal device, resources for single transmission or semi-static transmission. The first mode may be applied to a scenario with network device coverage, such as the scenario illustrated in FIG. 2. In the scenario illustrated in FIG. 2, since the terminal device 120a is located within the network coverage of the network device 110, the network device 110 may allocate, to the terminal device 120a, resources used in the procedure of the sidelink transmission.

In the second mode, the terminal device may autonomously select one or more resources from the Resource Pool (RP). Then, the terminal device may perform the sidelink transmission according to the selected resources. For example, in the scenario illustrated in FIG. 4, the terminal device 120b is located outside the network coverage of a cell. Therefore, the terminal device 120b may autonomously select resources from the pre-configured resource pool to perform the sidelink transmission. Optionally, in the scenario illustrated in FIG. 2, the terminal device 120a may also autonomously select one or more resources from the resource pool configured by the network device 110, to perform the sidelink transmission.

### Data transmission manner of the sidelink communication

Certain sidelink communication systems (e.g. Long Term Evolution Vehicle to Everything (LTE-V2X)) support a broadcast-based data transmission manner (hereinafter referred to as the broadcast transmission). For the broadcast transmission, the terminal at the receiving end may be any one of terminal devices around the terminal at the sending end.

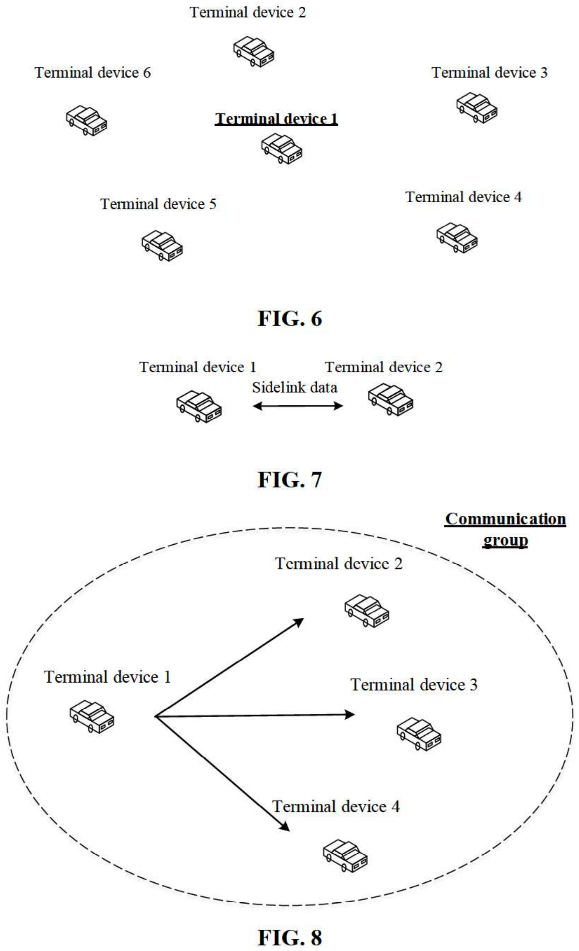

FIG. 6 is taken as an example, the terminal device 1 is the terminal at the sending end, and the terminal at the receiving end corresponding to the terminal at the sending end is any one of the terminal devices around the terminal device 1, for example, the terminal at the receiving end may be the terminal device 2 to the terminal device 6 in FIG. 6.

In addition to the broadcast transmission, certain communication systems further support a unicast-based data transmission manner (hereinafter referred to as the unicast transmission) and/or a multicast-based data transmission manner (hereinafter referred to as the multicast transmission). For example, the New Radio Vehicle to Everything (NR-V2X) expects to support the self-driving. The self-driving puts forward higher requirements for the data interaction between vehicles. For example, the higher throughput, the lower latency, the higher reliability, the greater coverage, the more flexible resource allocation manner, etc. are required for the data interaction between vehicles. Therefore, in order to improve the data interaction performance between vehicles, the NR-V2X introduces the unicast transmission and the multicast transmission.

For the unicast transmission, the terminal at the receiving end generally has only one terminal device. FIG. 7 is taken as an example, the unicast transmission is performed between the terminal device 1 and the terminal device 2. The terminal device 1 may be a terminal at the sending end, and the terminal device 2 may be a terminal at the receiving end. Alternatively, the terminal device 1 may be a terminal at the receiving end, and the terminal device 2 may be a terminal at the sending end.

For the multicast transmission, the terminals at the receiving end may be terminal devices in one communication group, or the terminals at the receiving end may be terminal devices within a certain transmission distance. FIG. 8 is taken as an example, the terminal device 1, the terminal device 2, the terminal device 3, and the terminal device 4 constitute one communication group. If the terminal device 1 sends data, all the other terminal devices (the terminal device 2 to the terminal device 4) in the group may be terminals at the receiving end.

## Sidelink feedback channel

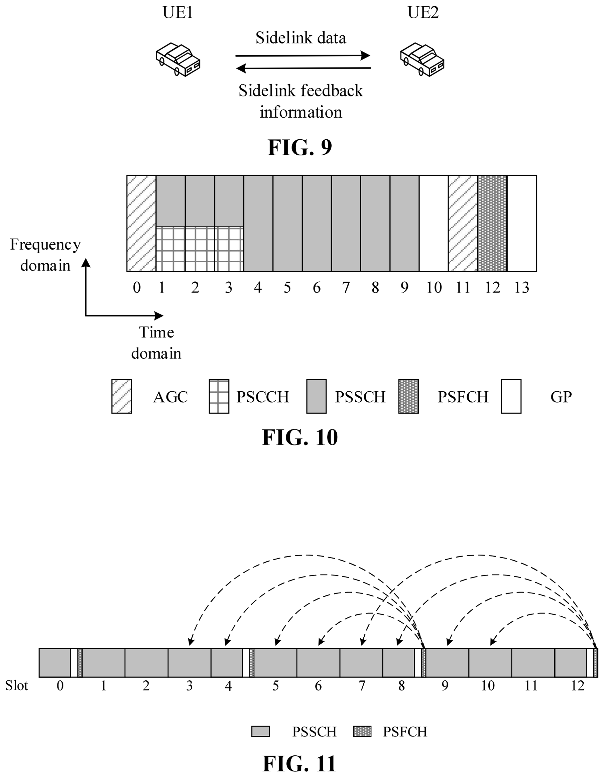

The sidelink feedback channel is introduced into some sidelink communication systems (e.g., the NR-V2X systems), to improve the reliability of the sidelink communication. FIG. 9 illustrates the unicast communication as an example, the terminal device at the sending end may send sidelink data (for example, the sidelink data may include a Physical Sidelink Control Channel (PSCCH) and/or a Physical Sidelink Shared Channel (PSSCH)) to the terminal device at the receiving end; and the terminal device at the receiving end may send the sidelink feedback information to the terminal device at the sending end. The sidelink feedback information may be carried in the sidelink feedback channel (e.g., the PSFCH). The sidelink feedback information may include Hybrid Automatic Repeat Request (HARQ) feedback information. The HARQ feedback information may include an Acknowledgement (ACK) or a Negative Acknowledgement (NACK). The terminal device at the sending end may determine whether the retransmission is needed according to the sidelink feedback information.

The sidelink feedback may be activated or deactivated through the pre-configuration information or the network configuration information, or may be activated or deactivated by the terminal device at the sending end. If the sidelink feedback is activated, the terminal device at the receiving end receives the sidelink data sent by the terminal device at the sending end, and feeds back the sidelink feedback information to the terminal device at the sending end according to a detection result. The terminal device at the sending end determines whether to retransmit the data or send new data according to the received sidelink feedback information. If the sidelink feedback is deactivated, the terminal device at the receiving end does not need to send the sidelink feedback information, and the terminal device at the sending end may send data in a blind retransmission manner. For example, the terminal device at the sending end may repeatedly send each piece of sidelink data for K times, instead of determining whether it is necessary to retransmit the data according to the sidelink feedback information sent by the terminal device at the receiving end.

## Format of the sidelink feedback channel

As described above, the sidelink feedback channel is introduced into some sidelink communication systems. The PSFCH is taken as an example to explain the sidelink feedback channel.

In some sidelink communication systems (e.g. the NR-V2X systems), the PSFCH carries only 1-bit HARQ-ACK information. The HARQ-ACK information occupies two time-domain symbols in the time domain. Herein, the second symbol carries the sidelink feedback information. The data on the first symbol is a duplication of the data on the second symbol. The first symbol is usually used for Automatic Gain Control (AGC) at the receiving end. The HARQ-ACK information occupies 1 RB in the frequency domain. In one slot, the structures of the PSFCH and the PSSCH/PSCCH may be as illustrated in FIG. 10. The positions of time-domain symbols occupied by the PSFCH, the PSCCH, and the PSSCH in one slot are schematically illustrated in FIG. 10. In one slot, the last symbol is used as a Guard Period (GP), the second-to-last symbol is used for PSFCH transmission, data on the third-to-last symbol is the same as the data on the symbol for the PSFCH, and is used for AGC, and the fourth-to-last symbol is also used as a GP. The first symbol in the slot is used for AGC, and the data on the symbol is the same as the data on the second time-domain symbol in the slot. In this slot, the PSCCH occupies 3 time-domain symbols, and the remaining symbols may be used for PSSCH transmission.

### Resources of the sidelink sidelink channel

In order to reduce the overhead of the PSFCH channel, it is defined that one slot in every P slots includes the PSFCH transmission resource, i.e., the period of the sidelink feedback resource is P slots. Herein, P may satisfy: P={1, 2, 4}. The parameter P may be preconfigured or be configured by the network.

FIG. 11 is an example diagram of a PSFCH feedback with P=4. As illustrated in FIG. 11, the minimum time interval between the PSSCH and a PSFCH associated with the PSSCH is 2 slots. Therefore, for the PSSCHs sent in a slot 3, a slot 4, a slot 5, and a slot 6, the feedback information of these PSSCHs is sent in a slot 8. For the PSSCHs sent in a slot 7, a slot 8, a slot 9, and a slot 10, the feedback information of these PSSCHs is sent in a slot 12. In FIG. 11, slots {3, 4, 5, 6} may be regarded as one slot set, and slots {7, 8, 9, 10} may be regarded as another slot set. The PSFCHs corresponding to the PSSCHs sent in all slots in the slot set are sent in the same slot. It is to be understood that FIG. 11 schematically shows the time-domain positions of the PSSCHs and the PSFCHs when the PSSCH and the PSFCH are included in one slot, and the last GP symbol in the slot is not illustrated.

The NR-V2X system is taken as an example to explain how the sidelink feedback resource is determined in the related art below.

The sidelink feedback resource may be determined according to the following information: information of a slot and a subchannel where the PSSCH is located, source Identification (ID) information, and target ID information. Specifically, the PSFCH transmission resource set is divided into multiple subsets according to the PSFCH period parameter in the resource pool configuration information and the number of subchannels available for the PSSCH transmission. The PSFCH transmission resources in each subset correspond to the PSSCH transmission in one slot and one subchannel. Furthermore, the specific PSFCH transmission resource is determined in the subset according to the source ID information and the target ID information.

For one resource pool, if the PSFCH period is represented as P (e.g., P is determined according to the parameter sl-PSFCH-Period), the parameter $N_{\text{PSSCH}}^{\text{PSFCH}} = P$, the resource pool includes $N_{\text{such}}$ (e.g., $N_{\text{such}}$ is determined according to the parameter sl-NumSubchannel) subchannels, the number of RBs, i.e., the Physical Resource Blocks (PRB) included in the configured resource set available for the PSFCH transmission is $M_{\text{PRB, set}}^{\text{PSFCH}}$ (e.g., $M_{\text{PRB, set}}^{\text{PSFCH}}$ is determined according to sl-PSFCH-RB-Set), then the number of RBs available for the PSFCH transmission corresponding to one PSSCH subchannel in one slot is:

$$M_{\text{su ch, slot}}^{\text{PSFCH}} = M_{\text{PRB, set}}^{\text{PSFCH}} / \left( N_{\text{su ch}} \cdot N_{\text{PSSCH}}^{\text{PSFCH}} \right).$$

For the PSSCH sent on the j-th subchannel of the i-th slot, the available RBs for the PSFCH corresponding to the PSSCH may be:

$$\left[ \left( i + j \cdot N_{\text{PSSCH}}^{\text{PSFCH}} \right) \cdot M_{\text{su ch, slot}}^{\text{PSFCH}}, \ \left( i + 1 + j \cdot N_{\text{PSSCH}}^{\text{PSFCH}} \right) \cdot M_{\text{su ch, slot}}^{\text{PSFCH}} - 1 \right] \text{RBs}.$$

Herein, $i = 0, 1, \ldots \ldots, N_{\text{PSSCH}}^{\text{PSFCH}} - 1$; $j = 0, 1, \ldots \ldots, N_{\text{su ch}} - 1$.

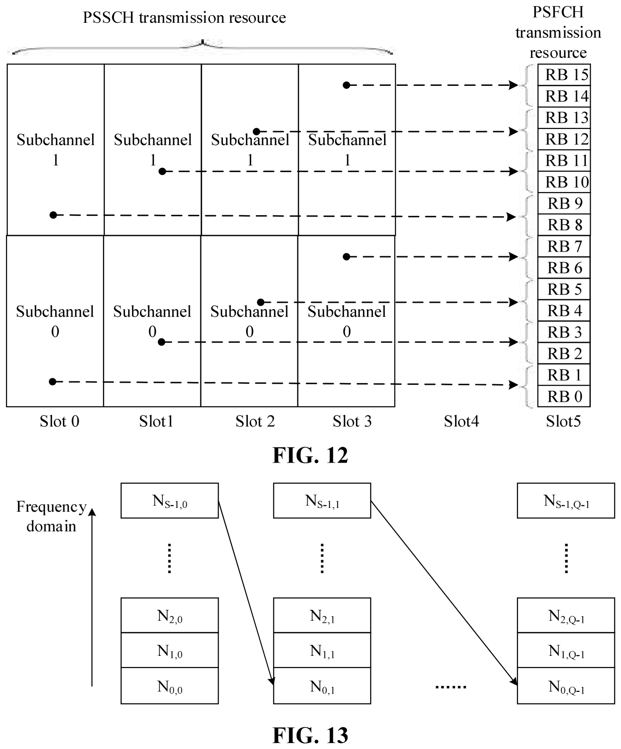

These RBs constitute one PSFCH transmission resource subset. FIG. 12 is an example diagram of a mapping between a PSFCH transmission resource subset and PSSCH transmission resources. As illustrated in FIG. 12, the period of the PSFCH is four slots, i.e., one PSFCH slot corresponds to four PSSCH slots. The resource pool includes 2 subchannels. 16 RBs are configured in the resource pool configuration information for the transmission of the PSFCH. Therefore, one subchannel of one slot corresponds to two RBs for the PSFCH. The mapping from PSSCH sub-channels to PSFCH RBs follows a time-domain-first, frequency-domain-second order. As illustrated in FIG. 12, subchannel 0 of slot 0 corresponds to RB0 and RB1 for the PSFCH, subchannel 0 of slot 1 corresponds to the RB2 and RB3 for the PSFCH, and so on.

The number of PSFCHs that can be Code-Division-Multiplexed (CDM) in one RB is determined by the parameter $N_{\text{CS}}^{\text{PSFCH}}$. Herein, one cyclic shift pair represents a pair of cyclic shift values for carrying the ACK or the NACK. Alternatively, in the case of the NACK-only feedback (i.e., the receiving end only feeds back in a case of an NACK, and the receiving end does not need feedback in a case of an ACK), one cyclic shift pair represents one cyclic shift for carrying the NACK (in this case, there is no cyclic shift for carrying the ACK). In the PSFCH transmission resource set corresponding to one PSSCH subchannel, the PSFCH transmission resources are indexed in a frequency-domain-first, code-domain-second manner. FIG. 13 is an example diagram of indexes of PSFCH resources. In FIG. 13, the index of the PSFCH resource is represented as $N_{PRB,CS}$. The PSFCH transmission resource set in FIG. 13 includes S RBs, and each RB includes Q cyclic shift pairs, then, indexes of all the PSFCH transmission resources are illustrated in FIG. 13.

Two manners of determining the PSFCH transmission resource according to the PSSCH transmission resource are introduced in the NR-V2X, and which manner to be selected may be indicated by a resource pool configuration parameter. In the first manner, the transmission resources for the PSFCH are determined according to an index of a starting subchannel occupied by the PSSCH. In the second manner, the transmission resources for the PSFCH are determined according to the indexes of all subchannels occupied by the PSSCH.

The PSFCH transmission resource set corresponding to one PSSCH channel is:

$$R_{\mathrm{PRB,\ CS}}^{\mathrm{PSFCH}} = N_{\mathrm{t\ e}}^{\mathrm{PSFCH}} \cdot M_{\mathrm{su\ ch,\ slot}}^{\mathrm{PSFCH}} \cdot N_{\mathrm{CS}}^{\mathrm{PSFCH}}.$$

Herein, $N_{\mathrm{CS}}^{\mathrm{PSFCH}}$ represents the number of cyclic shift pairs supported within the RBs for one PSFCH. In the first manner, $N_{\mathrm{t\ e}}^{\mathrm{PSFCH}} = 1$, and in the second manner, $N_{\mathrm{t\ e}}^{\mathrm{PSFCH}} = N_{\mathrm{su\ ch}}^{\mathrm{PSSCH}} \cdot N_{\mathrm{su\ ch}}^{\mathrm{PSSCH}}$ represents the number of subchannels occupied by the PSSCH. One PSSCH corresponds to $R_{\mathrm{PRB,\ CS}}^{\mathrm{PSFCH}}$ transmission resources. The terminal device determines the transmission resource corresponding to the PSSCH from the PSFCH transmission resource set according to the following formula:

$$(P_{\mathrm{ID}} + M_{\mathrm{ID}}) mod R_{\mathrm{PRB,\ CS}}^{\mathrm{PSFCH}}.$$

Herein, $P_{\mathrm{ID}}$ represents the ID information of the terminal device sending the PSSCH, i.e., the source ID carried in the Sidelink Control Information (SCI) format 2-A or the SCI format 2-B. For the first sidelink feedback manner in the multicast communication (i.e., the receiving end feeds back the ACK information or the NACK information), $M_{\mathrm{ID}}$ represents a member ID of a terminal at the receiving end in the communication group. The ID information is different from the target ID and Radio Network Temporary Identity (RNTI) information of the terminal at the receiving end, and the terminal in the communication group has a unique member ID in the group. Therefore, the terminal device at the receiving end in the group may determine different PSFCH transmission resources according to the ID. For the second sidelink feedback manner in the unicast communication or the multicast communication (i.e., the receiving end only feeds back the NACK information), $M_{\mathrm{ID}} = 0$.

## Unlicensed spectrum.

The unlicensed spectrum is a spectrum divided by countries and regions and may be used for radio device communication. This spectrum is usually considered as a shared spectrum. That is to say, the communication devices may use this spectrum as long as the communication devices satisfy regulatory requirements set by the countries or the regions on this spectrum, without applying for dedicated spectrum license from the dedicated spectrum management agencies of the countries or regions. The unlicensed spectrum may also be referred to as shared spectrum, grant-free frequency spectrum, unlicensed bands, grant-free frequency bands, and the like.

The use of the unlicensed spectrum needs to satisfy the requirements of specific laws and regulations of each country and region. For example, a communication device may implement channel access on the unlicensed spectrum through channel monitoring to use the unlicensed spectrum, so as to avoid conflicts with other communication devices or other communication systems (such as WiFi systems). As an implementation, the communication device may follow the principle of Listen Before Talk (LBT), in order to use the unlicensed spectrum. That is to say, the communication device needs to perform the channel listening before sending a signal on the channel of the unlicensed spectrum. Only when the result of the channel listening is that the channel is idle, the communication device is able to send the signal. If the result of the channel listening performed by the communication device on the channel of the unlicensed spectrum is that the channel is busy, the communication device is unable to send the signal. In order to ensure the fairness, in one transmission, the duration of the signal transmission performed by the communication device using the channel of the unlicensed spectrum cannot exceed the Maximum Channel Occupancy Time (MCOT).

The NR-based access to unlicensed spectrum (NR-U) is studied in the 3GPP Rel-16. In the NR-U, the LBT manner may include a Type-1 LBT and a Type-2 LBT. Hereinafter, each of the LBT manners will be described.

Type-1 LBT

The Type-1 LBT is a contention window adjustment-based random backoff multi-slot channel detection. The communication device may initiate a channel occupancy having a length of Tmcot (e.g., Tmcot is equal to the MCOT duration) according to the priorities of channel access priorities. For example, if the base station uses the Type-1 LBT, after the channel access, the base station may share the Channel Occupancy Time (COT) with the terminal device, in addition to sending the data of the base station. Alternatively, if the terminal device uses the Type-1 LBT, after the channel access, the terminal device may share the COT with the base station in addition to sending the data of the terminal device. Table 1 shows the channel access priorities and the corresponding channel access parameters when the terminal device performs the Type-1 LBT.

Table 1

| CAPC (p) | $m_p$ | $CW_{min,p}$ | $CW_{max,p}$ | $T_{mcot,p}$ | Allowed values of $CW_p$ |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

It is to be noted that in Table 1 above, $m_p$ represents the number of backoff slots corresponding to the channel access priority class p, $CW_p$ is the contention window size corresponding to the channel access priority class p, $CW_{min,p}$ is the minimum value of $CW_p$ corresponding to the channel access priority class p, $CW_{max,p}$ is the maximum value of $CW_p$ corresponding to the channel access priority class p, and $T_{mcot,p}$ is the length of the MCOT corresponding to the channel access priority class p.

Furthermore, it is to be noted that among the four types of channel access priorities of the type 1 in the NR-U, p=1 represents the highest priority.

Type-2 LBT

The Type-2 LBT is a channel access scheme based on a fixed-length monitoring slot. The Type-2 LBT may include a Type-2A LBT, a Type-2B LBT, and a Type-2C LBT.

For the Type-2A LBT, the communication device may perform a single-slot channel detection for 25 μs, i.e., the communication device ma start the channel detection at 25 μs efore the data transmission starts. The detection for 25 μs includes one detection for 16 μs and one detection for 9 μs. If the channel is idle during oth the detections, the communication device considers that the channel is idle and ma er form the channel access.

For the Type-2B LBT, the communication device may perform the single-slot channel detection for a fixed time duration of 16 μs. During latest 9 μs before the data transmission starts, if the terminal device detects that the channel is idle for more than 4 μs, the terminal device may consider that the channel is idle.

For the Type-2C LBT, the communication device may directly perform the data transmission without performing the channel detection. Since the time difference between the previous transmission and the current transmission is less than 16 μs, the re vious transmission and the current transmission may be considered as being included in one transmission, but the transmission duration of current transmission does not exceed 584 μs.

A Sidelink Unlicensed Spectrum (SL-U) communication system may also support channel access mechanisms similar to the aforementioned channel access mechanisms. For example, the SL-U communication system may support channel access types such as type-1 channel access, type-2A channel access, type-2B channel access, and type-2C channel access.

**RB set**

The SL-U system may configure a resource pool on the unlicensed spectrum through pre-configuration information or network configuration information, to perform the sidelink transmission. In some implementations, the resource pool includes M1 resource block sets (i.e., RB sets). Herein, one resource block set includes M2 resource blocks. M1 and M2 are positive integers. In some implementations, one resource block set may correspond to one channel in the unlicensed spectrum. Alternatively, one resource block set may correspond to the minimum frequency-domain granularity for performing the LBT. Alternatively, one resource block set may correspond to an LBT subband.

For example, the bandwidth corresponding to a channel in the unlicensed spectrum is 20 MHz, i.e., the bandwidth corresponding to one resource block set is also 20 MHz. Alternatively, the bandwidth of the channel in the unlicensed spectrum is 20 MHz that corresponds to M3 RBs, the M3 RBs are all RBs included in one channel, or all RBs available for the data transmission in one channel. M3 is a positive integer. For example, if M3=100 (corresponding to a subcarrier spacing of 15 kHz), then, one resource block set also corresponds to 100 RBs, i.e., M2=100.

For another example, on the unlicensed spectrum, it is necessary to determine whether the unlicensed spectrum is able to be used through the result of the LBT. If the minimum frequency-domain granularity for performing the LBT is 20 MHz, one resource block set corresponds to the number of RBs included in 20 MHz. Alternatively, if one resource block set includes M2=100 RBs (corresponding to the subcarrier spacing of 15 kHz), the minimum frequency-domain granularity for performing the LBT is the RBs included in one resource block set, i.e., 100 RBs.

It is to be noted that the resource block set may also be referred to as a channel or an LBT subband, which is not limited in the embodiment of the present disclosure.

In the sidelink communication system in the unlicensed spectrum, the resource pool may include an integer number of resource block sets.

In some implementations, the starting frequency-domain position of the resource pool may be the same as the starting frequency-domain position of the first resource block set among the M1 resource block sets. Herein, the first resource block set is a resource block set having the lowest frequency-domain position among the M1 resource block sets.

In some implementations, the ending frequency-domain position of the resource pool may be the same as the ending frequency-domain position of the second resource block set among the M1 resource block sets. Herein, the second resource block set is a resource block set having the highest frequency-domain position among the M1 resource block sets.

For example, the resource pool includes M1=3 resource block sets, and indexes of the corresponding resource block sets are a resource block set 0, a resource block set 1, and a resource block set 2, respectively. Herein, the frequency-domain position of the resource block set 0 is the lowest, and the frequency-domain position of the resource block set 2 is the highest. Therefore, the starting frequency-domain position of the resource pool is the same as the starting frequency-domain position of the resource block set 0, or the starting frequency-domain position of the resource pool is determined according to the starting frequency-domain position of the resource block set 0. The ending frequency-domain position of the resource pool is the same as the ending frequency-domain position of the resource block set 2, or the ending frequency-domain position of the resource pool is determined according to the ending frequency-domain position of the resource block set 2.

In some implementations, a Guard Band (GB) exists between two adjacent resource block sets among M1 resource block sets included in the resource pool.

In some implementations, a starting frequency-domain position and a frequency-domain size of the guard band are determined according to pre-configuration information or network configuration information. The terminal acquires the pre-configuration information or the network configuration information, and the pre-configuration information or the network configuration information is used to configure the guard band. In some implementations, the guard band is used to separate the resource block sets.

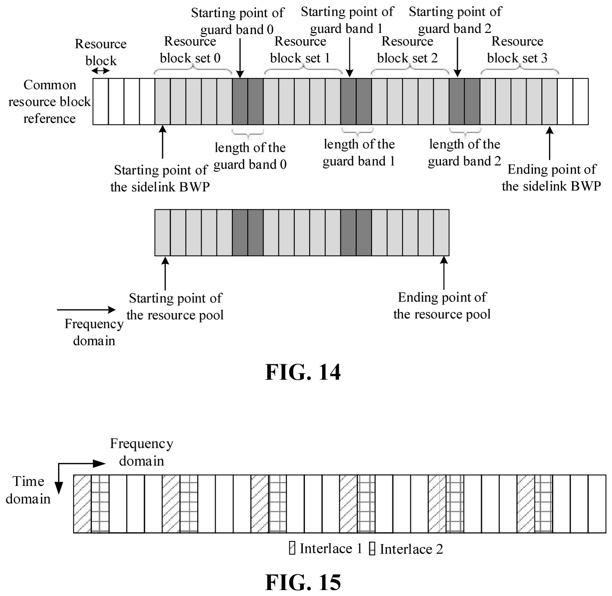

For example, FIG. 14 may be referred to for understanding. As illustrated in FIG. 14, three guard bands are configured in the sidelink Bandwidth Part (BWP), corresponding to a guard band 0, a guard band 1, and a guard band 2, respectively. These three guard bands separate 4 resource block sets. The starting frequency-domain position and the ending frequency-domain position of each resource block set may be determined according to the starting frequency-domain position of the sidelink BWP (i.e., the starting point of the sidelink BWP illustrated in FIG. 14), the starting frequency-domain position of each guard band (i.e., the starting point of each guard band illustrated in FIG. 14), and the frequency-domain size of the guard band (i.e., the length of the guard band illustrated in FIG. 14). As illustrated in FIG. 14, one sidelink resource pool is configured in the sidelink BWP. The sidelink resource pool includes three resource block sets, i.e., a resource block set 0 to a resource block set 2. Therefore, the starting frequency-domain position of the resource pool (i.e., the starting point of the resource pool illustrated in FIG. 14) corresponds to the starting frequency-domain position of the resource block set 0. The ending frequency-domain position of the resource pool (i.e., the ending point of the resource pool illustrated in FIG. 14) corresponds to the ending frequency-domain position of the resource block set 2.

In some implementations, one resource block set may include multiple interlaces. For example, each resource block set in FIG. 14 may include multiple interlaces.

In some implementations, one PSSCH may be sent in one or more resource block sets. In yet other implementations, one PSSCH may be sent in one or more resource block sets, and the PSSCH occupies one or more interlaces in the one or more resource block sets. For example, in FIG. 14, the resource pool includes three resource block sets, i.e., the resource block set 0, the resource block set 1, and the resource block set 2. When the subcarrier spacing is 15 kHz, one resource block set includes 100 RBs, corresponding to 10 interlaces, i.e., an interlace 0 to an interlace 9. One PSSCH may be sent/received in one resource block set. Furthermore, the PSSCH may occupy some or all of the interlace resources in one resource block set. For example, the PSSCH1 may be sent in the resource block set 0, and the PSSCH1 may occupy all interlace resources in the resource block set 0, i.e., the PSSCH1 may occupy resources corresponding to the interlace 0 to the interlace 9 in the resource block set 0. For another example, the PSSCH2 may be sent in the resource block set 1, and the PSSCH2 may occupy 2 interlace resources in the resource block set 1, i.e., the PSSCH2 may occupy resources corresponding to the interlace 0 to the interlace 1 in the resource block set 1. The PSSCH3 may be sent in the resource block set 1 and the resource block set 2, and the PSSCH3 may occupy 3 interlace resources in the resource block set 1 and the resource block set 2, e.g., the PSSCH3 may occupy resources corresponding to the interlace 3, the interlace 4 and the interlace 5 in each of the resource block set 1 and the resource block set 2.

## Interlace structure

Communication on the unlicensed frequency bands usually requires satisfying corresponding regulatory requirements. For example, if the terminal device performs the communication using the unlicensed frequency band, the frequency band range occupied by the terminal device is required to be greater than or equal to 80% of the system bandwidth (i.e., the regulatory requirement of the Occupied Channel Bandwidth (OCB)). Therefore, in order to enable as many users as possible to simultaneously access the channel, an interlace-based resource configuration manner is defined in some unlicensed spectrum communication systems (such as NR-U systems). For example, one interlace includes N RBs. N may be a positive integer. RBs included in one interlace may constitute an Interlaced Resource Block (IRB). RBs included in one interlace are equally spaced in the frequency-domain range. If a total of M interlaces are included in the frequency band range, the RBs included in the m-th interlace may be {m, M+m, 2M+m, 3M+m,...}.

FIG. 15 is an example diagram of an interlace-based resource configuration. As illustrated in FIG. 15, the system bandwidth includes 30 RBs and includes 5 interlaces (i.e. M=5). Each interlace includes 6 RBs (i.e. N=6). The frequency-domain spacing of every two adjacent RBs in one interlace are the same, i.e., they are 5 RBs apart.

## Interlace structure in the unlicensed spectrum sidelink communication system

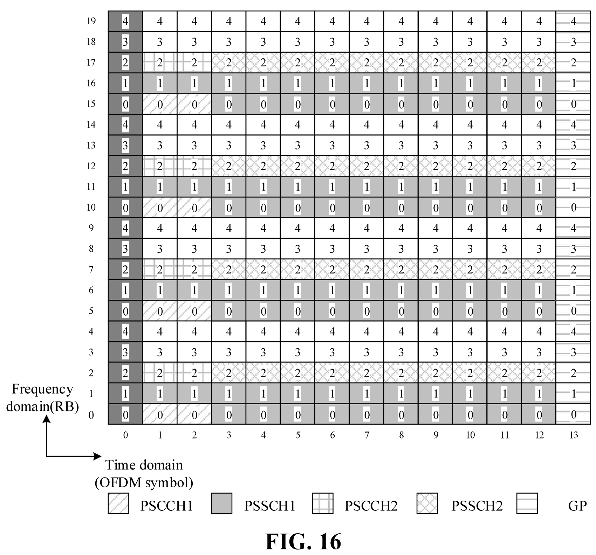

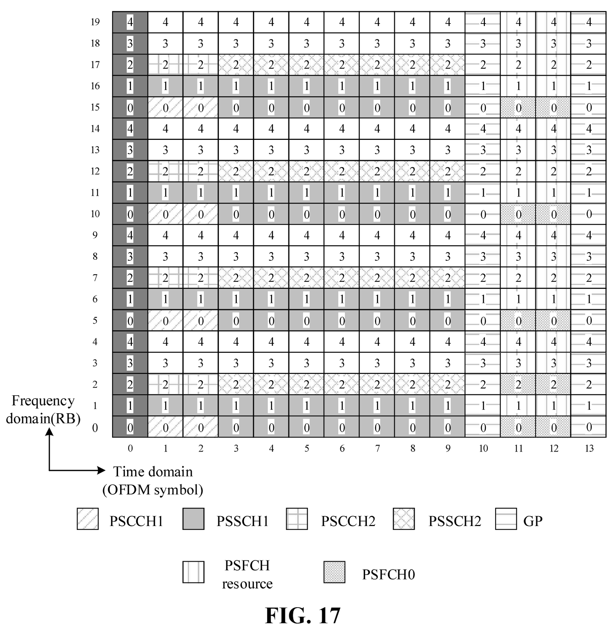

In the SL-U system, if interlace-based resource allocation granularity is adopted, channels such as the PSCCH, the PSSCH and the PSFCH are all based on the interlace structure. In this case, the frame structure of the communication system may be as illustrated in FIG. 16 and FIG. 17. Herein, the numbers within the boxes in FIG. 16 and FIG. 17 represent interlace indexes. RBs with the same interlace index belong to the same interlace resource.

FIG. 16 is an example diagram of a frame structure where a slot includes the PSCCH and the PSSCH and does not include the PSFCH. FIG. 17 is an example diagram of a frame structure where a slot includes the PSCCH, the PSSCH and the PSFCH. The bandwidth illustrated in each of FIG. 16 and FIG. 17 includes 20 RBs, 5 interlace resources are configured, i.e., M=5, and each interlace resource includes 4 RBs. In FIG. 16, the system configures the PSCCH to occupy one interlace resource, and two Orthogonal Frequency Division Multiplexing (OFDM) symbols in the time domain. The PSSCH is in the granularity of the interlace. The first symbol in the slot is the AGC symbol, and the data on the first symbol may be a duplication of the data on the second symbol. The last symbol in the slot is the GP symbol. In FIG. 16 and FIG. 17, the PSSCH1 occupies the interlace#0 and the interlace#1, and the PSCCH1 corresponding to the PSSCH1 occupies the interlace#0. The PSSCH2 occupies the interlace#2, and PSCCH2 corresponding to the PSSCH2 also occupies the interlace#2. In FIG. 17, the PSFCHO occupies the interlace# 0 and one RB of the interlace# 2 (e.g., the RB#2 illustrated in FIG. 17).

It is to be noted that, for the sake of simplification, resources occupied by the second-order SCI and resources occupied by the PSCCH Demodulation Reference Symbol (DMRS) and the PSSCH DMRS are not illustrated in FIG. 16 and FIG. 17.

## PSFCH channel structure in the SL-U System

In the SL-U system, the PSFCH channel may adopt the following channel structure: the transmission of the first PSFCH may occupy one common interlace (hereinafter referred to as the common interlace) and K3 dedicated RBs. The K3 dedicated RBs are RBs belonging to the same interlace. The values of K3 may include, e.g., {1, 2, 5}. It is to be noted that the interlace (hereinafter, referred to as the dedicated interlace) to which the K3 dedicated RBs belong may be an interlace different from the common interlace.

In the embodiment of the present disclosure, the K3 dedicated RBs occupied by the first PSFCH are referred to as the resource block group. It is to be understood that when K3=1, one resource block group includes one RB. In this case, the index of the resource block group may also be referred to as the RB index.

It is to be understood that the common interlace occupied for the PSFCH transmission may satisfy the requirements of the OCB regulations. Different PSFCH transmissions may correspond to different K3 dedicated RBs.

The dedicated RB may not only ensure sufficient resources for the PSFCH transmission, but also avoid interference between different PSFCHs.

With continued reference to FIG. 17, in FIG. 17, one PSFCH occupies one common interlace resource and one dedicated RB. The first PSFCH being the PSFCH0 is taken as an example, as illustrated in FIG. 17, PSFCH0 occupies the common interlace#0 and one dedicated RB (e.g., the RB#2 illustrated in FIG. 17) of the interlace#2. That is to say, for the PSFCH0, K3=1. The index of the RB#2 may be used as the index of the resource block group occupied by the first PSFCH.

**Transmission occasion for the PSFCH**

In the SL-U system, in order to overcome the problem that the PSFCH is unable to be sent/received due to the LBT failure, a mechanism of configuring N transmission occasions for one PSFCH is supported. Herein, N may be a positive integer. For example, N may satisfy: N=1, 2, 3, 4. For example, for one PSSCH, the terminal device at the receiving end determines the transmission resources for the PSFCH corresponding to the PSSCH according to the PSSCH. For the first one of PSFCH transmission occasions, the terminal device performs the LBT before the transmission of the PSFCH, and if the LBT is successful, the terminal device sends the PSFCH in the PSFCH transmission occasion. If the LBT is failed, the terminal device is unable to send the PSFCH, and needs to further determine, in the next PSFCH transmission occasion, whether the PSFCH can be transmitted according to the result of the LBT.

If the slot where the PSSCH is located is n, and one PSFCH is configured with four transmission occasions, i.e., N=4, the slots corresponding to the four PSFCH transmission occasions are n+k1, n+k2, n+k3, and n+k4, respectively. Herein, k1, k2, k3, and k4 are positive integers and have different values. That is to say, multiple transmission occasions corresponding to the PSFCH are located in different slots respectively. For example, PSFCH transmission resources are periodic, and four transmission occasions corresponding to the PSFCH correspond to PSFCH transmission slots in different periods, respectively.

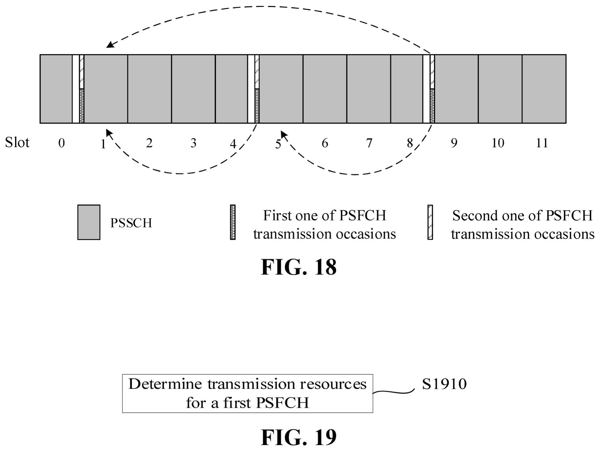

FIG. 18 is an example diagram of slot positions corresponding to PSFCH transmission occasions. As illustrated in FIG. 18, for the PSSCH sent in the slot 1, the first transmission occasion for the corresponding PSFCH is in the slot 4, and the second transmission occasion for the corresponding PSFCH is in the slot 8. For the PSSCH sent in the slot 5, the first transmission occasion for the corresponding PSFCH is in the slot 8. Therefore, two PSFCH transmissions may be required to be performed at the PSFCH transmission occasion corresponding to the slot 8.

The applicant of the present disclosure has found that when determining the transmission resources for the PSFCH, in the related art, only the technical scheme of how to satisfy that one PSFCH occupies one RB is considered, and the above requirements for the unlicensed spectrum is not considered. For example, if the PSFCH uses the interlace as the granularity, the manner of determining the resource for the PSFCH proposed in the related art is not applicable. Therefore, the technical scheme of determining the transmission resources for the PSFCH in the related art is difficult to be applied to the unlicensed sidelink communication system.

A schematic structural diagram of a method for sidelink transmission according to an embodiment of the present disclosure is illustrated in FIG. 19, so as to solve the above problem. The method illustrated in FIG. 19 may be performed by a first terminal device. The method illustrated in FIG. 19 may include operation S1910.

In operation S1910, the first terminal device determines transmission resources for a first PSFCH.

The first terminal device may perform the sidelink communication with one or more other terminal devices on the unlicensed spectrum. The first terminal device may be a terminal device that sends the first PSFCH or may be a terminal device that receives the first PSFCH.

The first PSFCH may be used to carry sidelink feedback information corresponding to sidelink data. For example, the first PSFCH may be associated with the first PSSCH. That is to say, the sidelink feedback information corresponding to the first PSSCH may be carried by the first PSFCH.

The transmission resources for the first PSFCH may include one or more of: a common interlace occupied by the first PSFCH; and at least one dedicated Resource Block (RB) occupied by the first PSFCH.

In some implementations, the determination of the transmission resources for the first PSFCH by the first terminal device includes: the at least one dedicated RB occupied by the first PSFCH is determined.

In some implementations, the determination of the transmission resources for the first PSFCH by the first terminal device includes: the common interlace occupied by the first PSFCH is determined.

In some implementations, the determination of the transmission resources for the first PSFCH by the first terminal device includes: the at least one dedicated RB and the common interlace occupied by the first PSFCH is determined.

According to the present disclosure, the first terminal device may determine the transmission resources for the PSFCH in the unlicensed spectrum based on the interlace structure. Therefore, according to the present disclosure, when determining the resource for the sidelink feedback channel, the interlace structure involved in the unlicensed spectrum is considered, thereby balancing the requirement of the unlicensed spectrum and the requirement of the transmission of the sidelink feedback information.

Hereinafter, how to determine the transmission resources for the first PSFCH may be described.

It is to be noted that the transmission resources for the first PSFCH may include: time-domain resources, frequency-domain resources, and code-domain resources. The manners of determining the frequency-domain resources or the code-domain resources or manners of determining the frequency-domain resources and the code-domain resources are mainly introduced in the embodiment of the present disclosure. The manners of determining the time-domain resources are not limited in the present disclosure.

The common interlace may be an interlace that is commonly used for transmissions of multiple PSFCHs. For example, in a case where the first terminal device determines transmission resources for a second PSFCH, if the at least one RB set where the transmission resources for the first PSFCH are located is the same as at least one RB set where the transmission resources for the second PSFCH are located, the transmission resources for the first PSFCH and the transmission resources for the second PSFCH may include a same common interlace.

In some embodiments, the common interlace is determined based on one or more of: information predefined in a protocol; pre-configuration information; configuration information of a network device; and indication information sent by a target terminal device.

It is to be noted that the target terminal device is a terminal device sending the first PSFCH, a terminal device receiving the first PSFCH, a terminal device sending a PSSCH, or a terminal device receiving the first PSSCH. It can be seen that the target terminal device may be the first terminal device. Alternatively, the target terminal device may be a terminal device that performs the sidelink communication with the first terminal device.

For example, resource pool configuration information is included in the pre-configuration information or the configuration information of the network device, and the resource pool configuration information includes indication information for indicating the common interlace.

Hereinafter, a method for determining the at least one dedicated RB for the first PSFCH or the transmission resource occupied by the first PSFCH may be described through examples of a first embodiment to a third embodiment.

<u>First embodiment</u>

In the first embodiment, for one PSFCH transmission occasion, the at least one dedicated RB occupied by the first PSFCH or the transmission resource occupied by the first PSFCH may be determined from a first candidate transmission resource set.

The first candidate transmission resource set may be a candidate transmission resource set for the PSFCH. In some implementations, the candidate transmission resource set for the PSFCH includes all resources available for the PSFCH transmission. For example, the candidate transmission resource set for the PSFCH includes not only a common interlace resource for the PSFCH transmission, but also at least one dedicated interlace resource or at least one dedicated RB resource for the PSFCH transmission. In some implementations, the candidate transmission resource set for the PSFCH does not include the common interlace resource. In some implementations, the candidate transmission resource set for the PSFCH includes the at least one dedicated interlace resource or at least one dedicated RB resource for the PSFCH transmission. For example, the first candidate transmission resource set may include all dedicated RB resources or dedicated interlace resources available for the transmission of the first PSFCH in one PSFCH transmission occasion. Exemplarily, the first candidate transmission resource set may be a set of all resources available for the transmission of the PSFCH in the first slot.

It is to be noted that the total number of resources included in the first candidate transmission resource set may be determined based on one or more of: a number of RB sets available for the PSFCH transmission included in the first candidate transmission resource set, a number of interlaces available for the PSFCH transmission included in one RB set, a number of resource block groups available for the PSFCH transmission included in one interlace, a number of transmission resources that can be code-division-multiplexed, a number of at least one RB set corresponding to the transmission resources for the first PSSCH, and a number of subchannels or interlaces corresponding to the transmission resources for the first PSSCH. The following first manner to eighth manner of determining the indexes of the transmission resources in the first candidate transmission resource set are provided in the present disclosure.

In the first manner, the transmission resources in the first candidate transmission resource set may be indexed in an order of: an index(es) of at least one available RB set in an ascending order, then indexes of interlaces in an ascending order, then indexes of resource block groups in an ascending order, and then indexes of code-domain resources in an ascending order.

In the second manner, the transmission resources in the first candidate transmission resource set may be indexed in an order of: indexes of interlaces in an ascending order, then indexes of resource block groups in an ascending order, then an index(es) of at least one available RB set in an ascending order, and then indexes of code-domain resources in an ascending order.

In the third manner, the transmission resources in the first candidate transmission resource set may be indexed in an order of: indexes of interlaces in an ascending order, then an index(es) of at least one available RB set in an ascending order, then indexes of resource block groups in an ascending order, and then indexes of code-domain resources in an ascending order.

In the fourth manner, the transmission resources in the first candidate transmission resource set may be indexed in an order of: indexes of resource block groups in an ascending order, then indexes of interlaces in an ascending order, then an index(es) of at least one available RB set in an ascending order, and then indexes of code-domain resources in an ascending order.

In the fifth manner, the transmission resources in the first candidate transmission resource set may be indexed in an order of: an index(es) of at least one available RB set in a descending order, then indexes of interlaces in a descending order, then indexes of resource block groups in a descending order, and then indexes of code-domain resources in a descending order.

In the sixth manner, the transmission resources in the first candidate transmission resource set may be indexed in an order of: indexes of interlaces in a descending order, then indexes of resource block groups in a descending order, then an index(es) of at least one available RB set in a descending order, and then indexes of code-domain resources in a descending order.

In the seventh manner, the transmission resources in the first candidate transmission resource set may be indexed in an order of: indexes of interlaces in a descending order, then an index(es) of at least one available RB set in a descending order, then indexes of resource block groups in a descending order, and then indexes of code-domain resources in a descending order.

In the eighth manner, the transmission resources in the first candidate transmission resource set may be indexed in an order of: indexes of resource block groups in a descending order, then indexes of interlaces in a descending order, then an index(es) of at least one available RB set in a descending order, and then indexes of code-domain resources in a descending order.

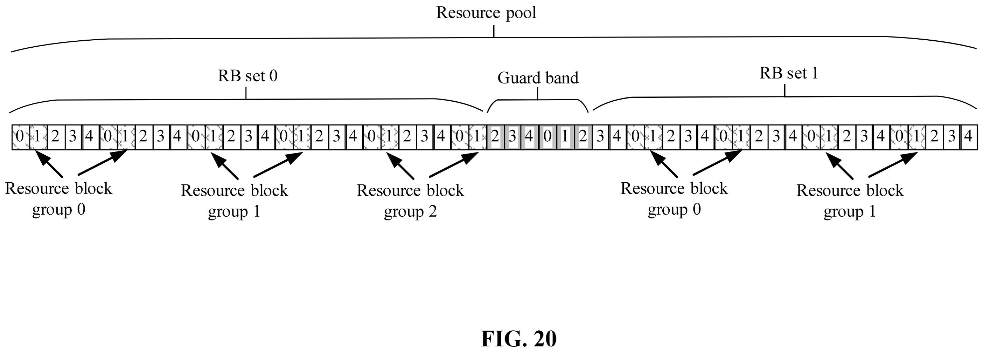

Hereinafter, the first candidate transmission resource set may be described with reference to FIG. 20. FIG. 20 is a schematic diagram of frequency-domain resources in one PSFCH transmission occasion. The subcarrier spacing of the frequency-domain resources illustrated in FIG. 20 is 30 kHz. The resource pool includes two RB sets, and a guard band is configured between the two RB sets. Herein, the numbers within the boxes in FIG. 20 represent indexes of the interlace resources. Five interlace resources are supported within each RB set. Herein, the interlace 0 is configured as a common interlace, and the remaining four interlaces are the dedicated interlaces. K3=2, i.e., one PSFCH is mapped to the common interlace and two dedicated RBs, and the two dedicated RBs are used as the resource block group. As illustrated in FIG. 20, two adjacent RBs of the interlace 1 in the RB set 0 constitute one resource block group; and two adjacent RBs of the interlace 1 in the RB set 1 constitute one resource block group. The first candidate transmission resource set includes the interlace 1 to the interlace 4 in the RB set 0 and the interlace 1 to the interlace 4 in the RB set 1. Therefore, the frequency-domain resources illustrated in FIG. 20 may be indexed according to any one of the first manner to the eighth manner.

Hereinafter, each of the available RB set, the interlace, the resource block group, and the code-domain resources is described in detail.

As a possible implementation, the available RB set may be determined based on one or more of: at least one RB set corresponding to transmission resources for a first PSSCH; at least one RB set included in a resource pool corresponding to the first PSSCH; and whether a transmission occasion corresponding to the first PSFCH is a first one of N PSFCH transmission occasions associated with the first PSSCH. For example, at least one available RB set of the transmission resources for the first PSFCH may be equal to the at least one RB set corresponding to the transmission resources for the first PSSCH. For another example, the at least one available RB set of the transmission resources for the first PSFCH may be equal to the first one of RB sets corresponding to the transmission resources for the first PSSCH. For another example, the at least one available RB set of the transmission resources for the first PSFCH may be equal to the RB sets included in the resource pool where the transmission resources for the first PSSCH are located. For another example, if the transmission occasion corresponding to the first PSFCH is the first one of the N PSFCH transmission occasions, the at least one available RB set may include the at least one RB set corresponding to the transmission resources for the first PSSCH. For another example, if the transmission occasion corresponding to the first PSFCH is not the first one of the N PSFCH transmission occasions, the at least one available RB set may include the at least one RB set included in the resource pool.

Exemplarily, if the PSSCH resource pool includes 4 RB sets, and the transmission resources for the first PSSCH are located in the first one of the RB sets and the second one of the RB sets. Optionally, the available RB sets for the transmission of the first PSFCH may include only the first one of RB sets and the second one of RB sets. Optionally, the available RB set for the transmission of the first PSFCH may include only the first one of the RB sets. Optionally, the available RB sets for the transmission of the first PSFCH may include all four RB sets included in the resource pool. Optionally, if the first PSFCH corresponds to the first one of N PSFCH transmission occasions, the available RB sets for the transmission of the first PSFCH may include only the first one of the RB sets and the second one of the RB sets. Optionally, if the first PSFCH corresponds to any one of transmission occasions other than the first one transmission occasion among the N PSFCH transmission occasions, the available RB sets for the transmission of the first PSFCH may include all four RB sets included in the resource pool.

It is to be understood that in a case where the at least one available RB set is determined based on the at least one RB set corresponding to the transmission resources for the first PSSCH, the at least one RB set where the transmission resources for the PSFCH are the same as the at least one RB set where the transmission resources for the PSSCH associated with the PSFCH are located, or the at least one RB set where the transmission resources for the PSFCH are located is included in the at least one RB set corresponding to the transmission resources for the PSSCH associated with the PSFCH, or the RB set where the transmission resources for the PSFCH are located is the first one of the RB sets where the transmission resources for the PSSCH associated with the PSFCH are located, or the transmission resources for the PSFCH is determined from the at least one RB set corresponding to the transmission resources for the PSSCH.

It is to be understood that in a case where the at least one available RB set is determined based on the at least one RB set included in the resource pool corresponding to the first PSSCH, the transmission resources for the PSFCH may be located in any one of the RB sets corresponding to the candidate PSFCH transmission resources configured by the resource pool.

It is to be note that a frequency-domain range of one interlace in the first candidate transmission resource set corresponds to a frequency-domain range of one interlace within one RB set, or a frequency-domain range of one interlace in the first candidate transmission resource set is located within one RB set. For example, in FIG. 20, interlaces in the first candidate transmission resource set includes the interlace 1, the interlace 2, the interlace 3, and the interlace 4 in the RB set 0, and the interlace 1, the interlace 2, the interlace 3, and the interlace 4 in the RB set 1. Optionally, the interlaces may not include the common interlace for the PSFCH transmission. In other words, the first candidate transmission resource set may be determined according to at least one non-common interlace or dedicated interlaces included in the at least one available RB set. Herein, the dedicated interlace refers to the interlace where the dedicated RB for mapping the PSFCH transmission resource is located.

For example, one resource pool may include 4 RB sets. The subcarrier spacing of the resource pool is 30 kHz. Each RB set includes 5 interlaces (corresponding to the interlace 0 to the interlace 4). If the first interlace (i.e. the interlace 0) in each RB set is configured as a common interlace, the RBs included in the remaining 4 interlaces are the dedicated RBs available for the transmission of the first PSFCH, and the 4 interlaces are also referred to as the dedicated interlaces or non-common interlaces. That is to say, four interlaces are included in each RB set. Therefore, when determining the first candidate transmission resource set, the first candidate transmission resource set is determined according to the dedicated interlaces (corresponding to the interlace 1 to the interlace 4) included in each RB set.

In some embodiments, interlaces used for the PSFCH transmission may be configured separately for different RB sets in the resource pool. That is to say, the interlaces in each of the RB sets may be configured separately. In this case, different RB sets within the resource pool may include not exactly the same numbers of interlaces and/or not exactly the same interlace resources.

For example, the resource pool includes two RB sets, and the interlace resources available for the PSFCH transmission configured in the first one of the RB sets include: the interlace 0, the interlace 1, and the interlace 2. The interlace 0 is a common interlace for the PSFCH transmission in the RB set, RBs included in the interlace 1 and the interlace 2 are the dedicated RBs available for the PSFCH transmission, and the interlace 1 and the interlace 2 are also referred to as non-common interlaces or dedicated interlaces. The interlace resources available for the PSFCH transmission configured in the second one of the RB sets include: the interlace 3, and the interlace 4. The interlace 3 is a common interlace for the PSFCH transmission in the RB set, RBs included in the interlace 4 are the dedicated RBs available for the PSFCH transmission, and the interlace 4 are also referred to as a non-common interlace or dedicated interlace.

For example, the resource pool includes two RB sets, and the interlace resources available for the PSFCH transmission configured in the first one of the RB sets include: the interlace 0, the interlace 1, and the interlace 2. The interlace 0 is a common interlace for the PSFCH transmission in the RB set, RBs included in the interlace 1 and the interlace 2 are dedicated RBs available for the PSFCH transmission, and the interlace 1 and the interlace 2 are also referred to as non-common interlaces or dedicated interlaces. The interlace resources available for the PSFCH transmission configured in the second one of the RB sets include: the interlace 0, and the interlace 4. The interlace 0 is common interlace for the PSFCH transmission in the RB set, RBs included in the interlace 4 are the dedicated RBs available for the PSFCH transmission, and the interlace 4 are also referred to as non-common interlaces or dedicated interlaces.

It is to be note that, for different RB sets in the resource pool, the interlaces in all RB sets may be uniformly configured. In this case, different RB sets may include the same number of interlaces.

The K3 dedicated RBs for carrying one PSFCH constitute one resource block group, and one resource block group may be used to carry one PSFCH. One resource block group may correspond to K3 RBs in one interlace. Herein, K3 may be equal to a number of dedicated RBs, and K3 may be a positive integer greater than or equal to 1. Since one PSFCH occupies K3 dedicated RBs, and the K3 RBs belong to the same interlace, the K3 RBs may be regarded as one resource block group. If one interlace includes A RBs, the resource block group available for the PSFCH transmission included in the interlace may be determined in the following manner 1 to manner 3. Herein, A is a positive integer greater than or equal to 1.

For example, A is equal to 10 or 11.

In the manner 1, the number of resource blocks included in one interlace may be equal to $C_A^{K3}$. Herein, $C_A^{K3}$ represents the number of combinations formed by randomly selecting K3 elements from A elements.

It is to be understood that in the manner1, K3 RBs may be randomly selected among the A RBs as a resource block group. Any two resource block groups may include RBs that are partially the same.

Hereinafter, A=10 and K3=2 are taken as an example to explain. Based on the manner 1, the number of resource block groups included in the interlace is $C_{10}^2 = 45$.

For one interlace including A RBs, the correspondences between the indexes of the resource block groups included in the interlace and the indexes of RBs included in the interlace may be determined in the following manner. $n_0$, $n_1$, ..., $n_{K_3-1}$ represents K3 RBs included in one resource block group, and $n_i$ ($i = 0,1, ..., K_3 - 1$) represents an RB index corresponding to the i+1-th RB in the resource block group. The resource block groups are indexed in an order of: indexes of $n_{K_3-1}$ in an ascending order, and then indexes of $n_{K_3-2}$ in an ascending order, and so on, and finally indexes of $n_0$ in an ascending order.

Exemplarily, the correspondences between the indexes of the resource block groups of the interlace and indexes of RBs corresponding to the resource block groups may be as illustrated in Table 2. Herein, an index of an RB represents an index of the RB among 10 RBs included in the interlace.

Tale 2

| Index of the resource lock grou | 0 | 1 | 2 | 3 | 4 | 5 | 6 | 7 | 8 | 9 |
|---|---|---|---|---|---|---|---|---|---|---|
| Index of the RB | {0, 1} | {0, 2} | {0, 3} | {0, 4} | {0, 5} | {0, 6} | {0, 7} | {0, 8} | {0, 9} | {1, 2} |
| Index of the resource lock grou | 10 | 11 | 12 | 13 | 14 | 15 | 16 | 17 | 18 | 19 |
| Index of the RB | {1, 3} | {1, 4} | {1, 5} | {1, 6} | {1,7} | {1, 8} | {1,9} | {2, 3} | {2,4} | {2, 5} |
| Index of the resource lock grou | 20 | 21 | 22 | 23 | 24 | 25 | 26 | 27 | 28 | 29 |
| Index of the RB | {2,6} | {2, 7} | {2, 8} | {2,9} | {3, 4} | {3, 5} | {3, 6} | {3, 7} | {3, 8} | {3, 9} |
| Index of the resource lock grou | 30 | 31 | 32 | 33 | 34 | 35 | 36 | 37 | 38 | 39 |
| Index of the RB | {4, 5} | {4, 6} | {4,7} | {4, 8} | {4, 9} | {5, 6} | {5,7} | {5,8} | {5, 9} | {6, 7} |
| Index of the resource lock grou | 40 | 41 | 42 | 43 | 44 | | | | | |
| Index of the RB | {6, 8} | {6, 9} | {7, 8} | {7, 9} | {8, 9} | | | | | |

In the manner 2, the number of resource block groups included in one interlace may be equal to floor(A/K3). Herein, floor () represents downward rounding. Alternatively, the number of resource block groups included in one interlace may be equal to the value of the integer part of the result obtained by dividing A by K3. In some implementations, the number of resource block groups included in one interlace may be equal to ceil(A/K3); or the number of resource block groups included in one interlace may be equal to round(A/K3), where, cei() represents upward rounding and round () represents rounding a number to the nearest integer.

It is to be understood that, in the manner 2, an RB once assigned to one resource block group cannot be assigned to any other resource block group. In other words, no same RB is included in any two of the resource block groups, or any two of the resource block groups contain entirely different RBs.

Hereinafter, A=10 and K3=2 are taken as an example to explain. Based on the manner 2, the number of resource block groups included in the interlace is floor(10/2)=5. Exemplarily, the correspondences between the indexes of the resource block groups and indexes of RBs corresponding to the resource block groups are as illustrated in Table 3. Herein, the index of the RB represents an index of the RB among 10 RBs included in the interlace.

Ta le 3

| Index of the resource lock gr ou | 0 | 1 | 2 | 3 | 4 |
|---|---|---|---|---|---|
| Index of the RB | {1, 2} | {2, 3} | {4, 5} | {6, 7} | {8, 9} |

In the manner 3, if K3=1, the number of resource block groups included in one interlace may be equal to A. That is to say, each of the A RBs included in the interlace may correspond to one resource block group.

Hereinafter, A=10 and K3=1 are taken as an example to explain. Based on the manner 3, the number of resource block groups included in the interlace is 10. The correspondences between the indexes of the resource block groups and indexes of RBs corresponding to the resource block groups may be as illustrated in Table 4. Herein, an index of an RB represents an index of the RB among 10 RBs included in the interlace.

Tale 4

| Index of the resource lock grou | 0 | 1 | 2 | 3 | 4 | 5 | 6 | 7 | 8 | 9 |
|---|---|---|---|---|---|---|---|---|---|---|
| index of the RB | {0} | {1} | {2} | {3} | {4} | {5} | {6} | {7} | {8} | {9} |

It is to be noted that each of the multiple interlaces included in one RB set may include the same number of RBs or the different number of RBs. For example, if one RB set includes a first interlace and a second interlace, the number of RBs included in the first interlace may be the same as or different from the number of RBs included in the second interlace. In a case where the number of RBs included in the first interlace is different from the number of RBs included in the second interlace, the resource block groups included in the first interlace may be calculated separately from the resource block groups included in the second interlace.

For example, one RB set includes two dedicated interlaces available for the transmission of the PSFCH, such as the interlace 1 (i.e. the first interlace) and the interlace 2 (i.e. the second interlace). Herein, the interlace 1 includes 10 RBs and the interlace 2 includes 11 RBs. In this case, the first terminal device may respectively calculate the resource block groups included in each interlace. Hereinafter, for the manner 1 to manner 3, how to calculate the resource block groups included in the interlace will be respectively described by providing examples in conjunction with the embodiment.

### For the manner 1

If K3=2, the number of resource block groups included in interlace 1 may be $C_{120}$=45. The index range of the 45 resource block groups in the interlace may be: [0, 44]. The number of resource block groups included in interlace 2 may be $C_{11}^2 = 55$. The index range of the 55 resource block groups in the interlace may be: [0, 54].

If K3=1, the number of resource block groups included in interlace 1 is $C_{10}^1 = 10$. The index range of the 10 resource block groups in the interlace may be: [0, 9]. The number of resource block groups included in interlace 2 is $C_{11}^1 = 11$. The index range of the 11 resource block groups in the interlace may be: [0, 10].

### For the manner 2

If K3=2, the number of resource block groups included in interlace 1 may be floor(10/2)=5. The index range of the 5 resource block groups in the interlace may be: [0, 4]. The number of resource block groups included in interlace 2 may be floor(11/2)=5. The index range of the 5 resource block groups in the interlace may be: [0, 4].

If K3=1, the number of resource block groups included in interlace 1 may be floor(10/1)=10. The index range of the 10 resource block groups in the interlace is: [0, 9]. The number of resource block groups included in interlace 2 is floor(11/1)=11. The index range of the 11 resource block groups in the interlace is: [0, 10].

### For the manner 3

K3=1, and the number of resource block groups included in interlace 1 may be 10. The index range of the 10 resource block groups in the interlace may be: [0, 9]. The number of resource block groups included in interlace 2 is 11. The index range of these resource block groups in the interlace may be: [0, 10].

The code-domain resources may be described below. The code-domain resources may be the resources that can be code-division-multiplexed within the resource block group. The number of code-domain resources may be determined based on one or more of the following: a number of cyclic shift pairs that can be code-division-multiplexed within one RB; and a number of resources that can be code-division-multiplexed among RBs included in one resource block group (i.e., K3 RBs).

In some embodiments, the number of code-domain resources is equal to the number of cyclic shift pairs that can be code-division-multiplexed within one RB. In some embodiments, the number of code-domain resources is equal to the number of resources that can be code-division-multiplexed among RBs included in one resource block group (i.e., K3 RBs). In some embodiments, the number of code-domain resources is equal to a product of the number of cyclic shift pairs that can be code-division-multiplexed within one RB and the number of resources that can be code-division-multiplexed among RBs included in one resource block group (i.e., K3 RBs).

It is to be noted that the number of cyclic shift pairs that can be code-division-multiplexed within one RB may be determined according to a configuration parameter of the resource pool. For example, the configuration parameter may be sl-NumMuxCS-Pair. As described above, the PSFCH may be used to carry the HARQ information including the ACK or the NACK. The ACK information and NACK information are carried by sequences, each of the sequence corresponding to the ACK and the sequence corresponding to the NACK may respectively correspond to one cyclic shift value. That is to say, the HARQ information carried by the PSFCH corresponds to one cyclic shift pair. Multiple cyclic shift pairs may be supported to be multiplexed for the transmission in one RB.

Exemplarily, the number of code-domain resources may be determined based on the number of cyclic shift pairs that can be code-division-multiplexed within one RB and the number of resources that can be code-division-multiplexed among RBs included in one resource block group. For example, the number of cyclic shift pairs that can be code-division-multiplexed within one RB may be represented as C1, and the number of resources that can be code-division-multiplexed among RBs included in one resource block group may be represented as C2. The number of total resources that can be code-division-multiplexed within the K3 RBs may be determined based on C1 and C2. For example, the number is equal to $C1 \times C2$.

In some embodiments, the at least one dedicated RB or the transmission resource occupied by the first PSFCH may be determined from the first candidate transmission resource set based on a first parameter.

The first parameter may include one or more of: a second parameter, a third parameter, a fourth parameter, a fifth parameter, a sixth parameter, a seventh parameter, an eighth parameter, a ninth parameter, and a tenth parameter. Each of these parameters will be described below.

The second parameter may be determined based on an index corresponding to a first subchannel of transmission resources for the first PSSCH, an index corresponding to a first interlace of the transmission resources for the first PSSCH, or an index corresponding to a first RB of the transmission resources for the first PSSCH. For example, the second parameter may include the index information corresponding to the first subchannel of the transmission resources for the first PSSCH. Alternatively, the second parameter may include the index information corresponding to the first interlace of the transmission resources for the first PSSCH. The second parameter may be denoted as $M_{F\_index\_1}$.

The third parameter may be determined based on a number of subchannels included in the transmission resources for the first PSSCH, a number of interlaces included in the transmission resources for the first PSSCH, or a number of RBs included in the transmission resources for the first PSSCH. For example, the third parameter may include the number of subchannels included in the transmission resources for the first PSSCH. Alternatively, the third parameter may include the number of interlaces included in the transmission resources for the first PSSCH. The third parameter may be denoted as $M_{num\_1}$. Exemplary, the number of subchannels included in the transmission resources for the first PSSCH is equal to the sum of subchannels included in all RB sets corresponding to the transmission resources for the first PSSCH; and the number of interlaces included in the transmission resources for the first PSSCH is equal to the sum of interlaces included in all RB sets corresponding to the transmission resources for the first PSSCH.

The fourth parameter may be determined based on a slot index corresponding to the transmission resources for the first PSSCH. For example, the fourth parameter may include one of a slot index corresponding to the transmission resources for the first PSSCH. Exemplarily, the value range of the fourth parameter may be [0, P-1]. P may be determined based on the periodic parameter of the first PSFCH, or P may be determined based on the periodic parameter of the first PSFCH and the total number N of transmission occasions corresponding to the first PSFCH. For example, P may satisfy: P=P1 or P=N $\times$ P1, where P1 represents the PSFCH period. The fourth parameter may be denoted as $M_{T\_index\_1}$.

The fifth parameter may be determined based on an index of at least one RB set corresponding to the transmission resources for the first PSSCH. The index information of the at least one RB set corresponding to transmission resources for a first PSSCH may include: an index of a first one of RB sets corresponding to the transmission resources for the first PSSCH, or indexes corresponding to all RB sets corresponding to the transmission resources for the first PSSCH. For example, the fifth parameter may include the index of the first one of RB sets corresponding to the transmission resources for the first PSSCH, or the fifth parameter may include indexes of all RB sets corresponding to the transmission resources for the first PSSCH. The fifth parameter may be denoted as $M_{F\_index\_2}$.

The sixth parameter may be determined based on a number of at least one RB set corresponding to the transmission resources for the first PSSCH. For example, the sixth parameter may include the number of at least one RB set corresponding to the transmission resources for the first PSSCH.

The seventh parameter may be determined based on an index n of a transmission occasion corresponding to the first PSFCH. For example, the seventh parameter may include the transmission occasion corresponding to the first PSFCH. The value range of n may be [0, N-1], where N is the total number of transmission occasions corresponding to the first PSFCH. The seventh parameter may be denoted as $M_{T\_index\_2}$.

It is to be understood that, based on the seventh parameter, the first terminal device may determine, according to the index of the transmission occasion corresponding to the first PSFCH, the at least one dedicated RB occupied by the first PSFCH or the transmission resource occupied by the first PSFCH from the first candidate resource set.

The eighth parameter may be determined based on a total number N of transmission occasions corresponding to the first PSFCH. For example, the eighth parameter may include the total number N of transmission occasions corresponding to the first PSFCH. Exemplarily, the first PSFCH associated with the first PSSCH corresponds to N transmission occasions, and the sidelink feedback information corresponding to the first PSSCH is carried by the first PSFCH. If the first PSFCH is not successfully sent in the first transmission occasion, for example, the first PSFCH is dropped due to the LBT failure or the collision between the sidelink transmission and the uplink transmission, then, the first PSFCH is tried to be sent in the second transmission occasion, and so on.

The ninth parameter may be determined based on first identification information. The first identification information may include the second identification information and/or the third identification information. The second identification information is determined based on a source identification included in the first SCI. Herein, the first SCI may be used to schedule the first PSSCH. For example, the first SCI may be SCI 2-A/2-B/2-C. The second identification information may be denoted as $P_{ID}$. The third identification information may be 0. Alternatively, the third identification information is determined based on a member identification (ID) of the terminal device in a communication group, and for example, the terminal device is a terminal device that receives the first PSSCH. The third identification information may be denoted as $M_{ID}$.

The tenth parameter may be determined based on a total number of resources included in the first candidate transmission resource set. For example, the tenth parameter may include a total number of resources included in the first candidate transmission resource set. The tenth parameter may be denoted as $M_{total-1}$.

In some implementations, the first parameter includes: the index corresponding to a first subchannel of the transmission resources for the first PSSCH, an index of a slot corresponding to the transmission resources for the first PSSCH, an index of a first one of RB sets corresponding to the transmission resources for the first PSSCH, an index of a transmission occasion corresponding to the first PSFCH, a total number of at least one transmission occasion corresponding to the first PSFCH, a total number of resources included in the first candidate transmission resource set, and first identification information.

In some implementations, the first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, the index of the transmission occasion corresponding to the first PSFCH, a total number of at least one transmission occasion corresponding to the first PSFCH, a total number of resources included in the first candidate transmission resource set, and first identification information.

In some implementations, the first parameter includes: the index corresponding to the first subchannel of the transmission resources for the first PSSCH, a number of subchannels included in the transmission resources for the first PSSCH, the index of the slot corresponding to the transmission resources for the first PSSCH, the index of the first one of RB sets corresponding to the transmission resources for the first PSSCH, the index of the transmission occasion corresponding to the first PSFCH, a total number of at least one transmission occasion corresponding to the first PSFCH, a total number of resources included in the first candidate transmission resource set, and first identification information.

In some implementations, the first parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, the number of RBs corresponding to the transmission resources for the first PSSCH, the index of the transmission occasion corresponding to the first PSFCH, a total number of at least one transmission occasion corresponding to the first PSFCH, a total number of resources included in the first candidate transmission resource set, and first identification information.

In some implementations, the first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the index of the transmission occasion corresponding to the first PSFCH, a total number of at least one transmission occasion corresponding to the first PSFCH, a total number of resources included in the first candidate transmission resource set, and first identification information.

In some implementations, the first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, the index of the transmission occasion corresponding to the first PSFCH, a total number of at least one transmission occasion corresponding to the first PSFCH, a total number of resources included in the first candidate transmission resource set, and first identification information.

In some implementations, the first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, the index of the transmission occasion corresponding to the first PSFCH, a total number of at least one transmission occasion corresponding to the first PSFCH, and first identification information.

In some implementations, the first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, the index of the transmission occasion corresponding to the first PSFCH, a total number of at least one transmission occasion corresponding to the first PSFCH, and first identification information.

In some implementations, the first parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, the index of the transmission occasion corresponding to the first PSFCH, a total number of at least one transmission occasion corresponding to the first PSFCH, and first identification information.

In some implementations, the first parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, the index of the transmission occasion corresponding to the first PSFCH, a total number of at least one transmission occasion corresponding to the first PSFCH, and first identification information.

In some implementations, the first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the index of the transmission occasion corresponding to the first PSFCH, a total number of at least one transmission occasion corresponding to the first PSFCH, and first identification information.

In some implementations, the first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, the index of the transmission occasion corresponding to the first PSFCH, a total number of at least one transmission occasion corresponding to the first PSFCH, and first identification information.

As can be seen from the first embodiment, in the first embodiment, the first terminal device may firstly index the transmission resources included in the first candidate transmission resource set, and furthermore, the first terminal device may determine, through the first parameter, the resource indexes corresponding to the transmission resources for the first PSFCH from the first candidate transmission resources, thereby determining the at least one dedicated RB occupied by the first PSFCH or the transmission resource occupied by the first PSFCH.

In the second embodiment and third embodiment, the PSFCH transmission resource set (for example, the first candidate transmission resources in the first embodiment) may be divided into multiple candidate transmission resource subsets. The first terminal device may determine a specific candidate transmission resource subset from the multiple candidate transmission resource subsets, and further determine the transmission resource or the at least one dedicated RB for the first PSFCH from the specific candidate transmission resource subset.

In view of this, a part of description of the first candidate transmission resource set in the first embodiment is also applicable to a subset of the first candidate transmission resource set involved in the second embodiment and third embodiment.

One of the differences between the second embodiment and the third embodiment is that the manners of dividing the candidate transmission resource subsets are different.

Second embodiment

In the second embodiment, the candidate transmission resource subset may be referred to as a second candidate transmission resource set.

The at least one dedicated RB occupied by the first PSFCH or the transmission resource occupied by the first PSFCH may be determined from the second candidate transmission resource set.

The second candidate transmission resource set may be determined based on information of the PSFCH transmission occasions. In other words, the PSFCH transmission resource set may be divided into multiple candidate resource sets, and one of the candidate transmission resource sets may be determined as the second candidate transmission resource set based on the information of the PSFCH transmission occasions.

As a possible implementation, the at least one dedicated RB or the transmission resource occupied by the first PSFCH may be determined from the second candidate transmission resource set. The second candidate transmission resource set may be determined based on at least one index of at least one PSFCH transmission occasion. In other words, the first terminal device may firstly determine one second candidate transmission resource set based on at least one index of at least one PSFCH transmission occasion corresponding to the first PSFCH, and then determine the at least one dedicated RB or transmission resource occupied by the first PSFCH from the second candidate transmission resource set.

Exemplarily, the PSFCH transmission resource set may be divided into N second candidate transmission resource sets according to the total number N of PSFCH transmission occasions. The first terminal device may determine, according to the index n of the transmission occasion for the first PSFCH, one of the N second candidate transmission resource sets as the second candidate transmission resource set corresponding to the first PSFCH.

As described in the first embodiment, the PSFCH transmission resource set may be determined based on the information of the at least one available RB set, the information of interlaces included in the RB set, the information of the resource block groups included in one interlace, and the information of the code-domain resources, etc. That is to say, the PSFCH transmission resource set may be represented in the granularity of one or more of the RB set, the interlace, the resource block group, and the code-domain resources. Therefore, the present disclosure proposes, based on different granularities, multiple embodiments where the PSFCH transmission resource set is divided into multiple candidate transmission resource subsets.

It is to be noted that, the candidate transmission resource subset being the second candidate transmission resource set is taken as an example, the manners of dividing the PSFCH transmission resource set into multiple candidate transmission resource subsets are described below. It is to be understood that the division manners described below are not only applicable to the second candidate transmission resource set, but also applicable to other embodiments (e.g., the third embodiment) where the PSFCH transmission resource set is required to be divided into multiple candidate transmission resource subsets.

In some embodiments, the transmission resources in the second candidate transmission resources may be determined according to the number of transmission resources included in the second candidate transmission resource set. Therefore, in order to facilitate understanding, the present disclosure firstly describes the parameter or parameters based on which the number of transmission resources included in the second candidate transmission resource set may be determined.

In some embodiments, the number of transmission resources included in the second candidate transmission resource set may be determined based on one or more of: the first number, the second number, the third number, and the fourth number.

The first number may be determined based on a number of first RB set(s) available for the PSFCH transmission. The first number may be represented as A. A may be equal to the number of first RB sets available for the PSFCH transmission.

The second number may be determined based on a number of interlaces available for the PSFCH transmission that are included in one RB set in the first RB set(s). The second number may be represented as $B_a$, and Ba represents the number of interlaces available for the PSFCH transmission that are included in the RB set a. The number of interlaces available for the PSFCH transmission that are included in one RB set in the first RB set(s) may include or may not include the number of common interlaces. Hereinafter, the number of interlaces available for the PSFCH transmission that are included in one RB set in the first RB set(s) not including the number of common interlaces is taken as an example to explain. For example, $B_a$ may be equal to the number of interlaces available for the PSFCH transmission that are included in the RB set a in the first RB set(s).

The third number may be determined based on a number of resource block groups available for the PSFCH transmission that are included in one interlace in the one RB set. The third number may be represented as $C_{a,b}$. $C_{a,b}$ represents the number of resource block groups available for the PSFCH transmission that are included in the interlace b in RB set a. For example, $C_{a,b}$ may be equal to the number of resource block groups available for the PSFCH transmission that are included in the interlace b in the RB set a.

The fourth number may be determined based on a number N of PSFCH transmission occasions. It is to be understood that N may be the total number of the transmission occasions for the first PSFCH. For example, the fourth number may be equal to N.

The technical solution where the PSFCH transmission resource set is divided into multiple (for example, N) second candidate transmission resource sets in a frequency-domain granularity of each of the RB set, the interlace, and the resource block group is explained below.

### The second candidate transmission resource set is determined in the granularity of the RB set

The PSFCH transmission resource set may be divided into multiple second candidate transmission resource sets in the granularity of the RB set. Exemplarily, at least one RB set available for the transmission of the first PSFCH is determined based on at least one index of at least one PSFCH transmission occasion. Herein, the at least one RB set may constitute the second candidate transmission resource set.

The number of transmission resources included in the second candidate transmission resource set may be determined based on the first number and the fourth number. The first number being A and the fourth number being N are taken as an example, the number $L_0$ of RB sets included in the second candidate transmission resource set may satisfy: $L_0$ = A/N, $L_0$ = floor(A/N), $L_0$ = ceil(A/N) or $L_0$ = round(A/N). Herein, floor () represents downward rounding; ceil () represents upward rounding; and round () represents rounding a number to the nearest integer.

After the number $L_0$ of RB sets included in the second candidate transmission resource set is determined, the at least one index of the at least one RB set corresponding to each second candidate transmission resource set may be determined according to $L_0$.

For example, it is assumed that A is an integer multiple of N, the number of RB sets included in one second candidate transmission resource set may be $L_0$ = A/N. The first one of the second candidate transmission resource sets includes RB set(s) with index(es) [0, $L_0$-1], a second one of the second candidate transmission resource sets includes RB set(s) with index(es) [$L_0$, 2$L_0$-1], and so on.

The present disclosure also provides a manner of indexing resources in the second candidate transmission resource set determined in the granularity of the RB set. For example, the manner of indexing the resources may include:

1) the transmission resources in the second candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or

2) the transmission resources in the second candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or

3) the transmission resources in the second candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or

4) the transmission resources in the second candidate transmission resource set are indexed in an order of: indexes of resource block groups in an ascending order, then indexes of interlaces in an ascending order, then at least one index of the at least one RB set in an ascending order, and then indexes of code-domain resources in an ascending order; or

5) the transmission resources in the second candidate transmission resource set are indexed in an order of: at least one index of the at least one RB set in a descending order, then indexes of interlaces in a descending order, then indexes of resource block groups in a descending order, and then indexes of code-domain resources in a descending order; or

6) the transmission resources in the second candidate transmission resource set are indexed in an order of: indexes of interlaces in a descending order, then indexes of resource block groups in a descending order, then at least one index of the at least one RB set in a descending order, and then indexes of code-domain resources in a descending order; or

7) the transmission resources in the second candidate transmission resource set are indexed in an order of: indexes of interlaces in a descending order, then at least one index of the at least one RB set in a descending order, then indexes of resource block groups in a descending order, and then indexes of code-domain resources in a descending order; or

8) the transmission resources in the second candidate transmission resource set are indexed in an order of: indexes of resource block groups in a descending order, then indexes of interlaces in a descending order, then at least one index of the at least one RB set in a descending order, and then indexes of code-domain resources in a descending order.

<u>The second candidate transmission resource set is determined in the granularity of the interlace</u>

The PSFCH transmission resource set may be divided into multiple second candidate transmission resource sets in the granularity of the interlace. Exemplarily, at least one interlace available for the transmission of the first PSFCH is determined based on at least one index of at least one PSFCH transmission occasion. Herein, the one or more interlaces may constitute the second candidate transmission resource set.

The number of transmission resources included in the second candidate transmission resource set may be determined based on the first number, the second number, and the fourth number. For example, the total number of interlaces included in the A RB sets is $\sum_{a=0}^{A-1} B_a$, where a is an integer, and the value range of a is [0, A-1]. The number $L_1$ of interlaces included in the second candidate transmission resource set satisfies: $L_1 = \text{floor}(\frac{\sum_{a=0}^{A-1} B_a}{N})$, $L_1 = \text{ceil}\left(\frac{\sum_{a=0}^{A-1} B_a}{N}\right)$, or $L_1 = \text{round}(\frac{\sum_{a=0}^{A-1} B_a}{N})$. Exemplarily, if the number of interlaces available for the PSFCH transmission included in each RB set is the same, for example, each RB set include B interlaces, the total number of interlaces included in the A RB set may be A × B. The number $L_1$ of interlaces included in the second candidate transmission resource set satisfies: $L_1 = \text{floor}(\frac{A \times B}{N}), L_1 = \text{ceil}(\frac{A \times B}{N})$ or $L_1 = \text{round}(\frac{A \times B}{N})$, where the meanings of A, Ba and N are as mentioned in the foregoing, which are not be repeated herein.

For all interlaces in A RB sets, the manner of indexing the interlaces may include: indexing in an order of: at least one index of the at least one RB set in an ascending order, and then indexes of interlaces in an ascending order; or indexing in an order of: at least one index of the at least one RB set in a descending order, and then indexes of interlaces in a descending order.

The number of interlaces included in one second candidate transmission resource set and the corresponding interlace information (such as the aforementioned indexing manner) are determined based on A, $B_a$ and N, then interlace information included in each second candidate transmission resource set may be determined. For example, the number of interlaces included in one second candidate transmission resource set is $L_1 = \text{floor}(\frac{\sum_{a=0}^{A-1} B_a}{N})$.

After the number $L_1$ of interlaces included in the second candidate transmission resource set is determined, index of the interlace corresponding to each second candidate transmission resource set may be determined according to $L_1$. For example, the first one of the second candidate transmission resource sets includes an interlace with an index of [0, $L_1$-1], and the second one of the second candidate transmission resource sets includes an interlace with an index of [$L_1$, 2 $L_1$-1], and so on.

The present disclosure also provides a manner of indexing the resources in the second candidate transmission resource set determined in the granularity of the interlace. For example, the manner of indexing the resources may include:

1) the transmission resources in the second candidate transmission resource set are indexed in an order of: indexes of interlaces in an ascending order, then indexes of resource block groups in an ascending order, and then indexes of code-domain resources in an ascending order; or

2) the transmission resources in the second candidate transmission resource set are indexed in an order of: indexes of resource block groups in an ascending order, then indexes of interlaces in an ascending order, and then indexes of code-domain resources in an ascending order; or

3) the transmission resources in the second candidate transmission resource set are indexed in an order of: indexes of interlaces in a descending order, then indexes of resource block groups in a descending order, and then indexes of code-domain resources in a descending order; or

4) the transmission resources in the second candidate transmission resource set are indexed in an order of: indexes of resource block groups in a descending order, then indexes of interlaces in a descending order, and then indexes of code-domain resources in a descending order.

The second candidate transmission resource set is determined in the granularity of the resource block group

The PSFCH transmission resource set may be divided into multiple second candidate transmission resource sets in the granularity of the resource block group. Exemplarily, at least one resource block group available for the transmission of the first PSFCH are determined based on at least one index of at least one PSFCH transmission occasion. Herein, the at least one resource block group may constitute the second candidate transmission resource set.

In some embodiments, the number of transmission resources included in the second candidate transmission resource set may be determined based on the first number, the second number, the third number, and the fourth number.

For example, the total number of resource block groups included in the A RB sets is $\sum_{a=0}^{A-1} \sum_{b=0}^{B_a-1} C_{a,b}$, where both a and b are an integer, the value range of a is [0, A-1], and the value range of b is [0, $B_a$-1]. The number $L_2$ of resource block groups included in the second candidate transmission resource set satisfies:

$L_2 = \text{floor}(\frac{\sum_{a=0}^{A-1} \sum_{b=0}^{B_a-1} C_{a,b}}{N}), L_2 = \text{ceil}(\frac{\sum_{a=0}^{A-1} \sum_{b=0}^{B_a-1} C_{a,b}}{N})$ or $L_2 = \text{round}(\frac{\sum_{a=0}^{A-1} \sum_{b=0}^{B_a-1} C_{a,b}}{N})$. Exemplarily, if the number of interlaces available for the PSFCH transmission included in each RB set is the same, for example, each RB set include B interlaces, and the number of resource block groups available for the PSFCH transmission included in each interlace is the same, for example, each interlace include C resource block groups, then, the total number of resource block groups included in the A RB set may be A × B × C. The number $L_2$ of resource blocks included in the second candidate transmission resource set satisfies: $L_2 = \text{floor}(\frac{A \times B \times C}{N}), L_2 = \text{ceil}(\frac{A \times B \times C}{N})$ or $L_2 = \text{round}(\frac{A \times B \times C}{N})$,

where the meanings of A, $B_a$, $C_{a,b}$ and N are as mentioned in the foregoing, which are not be repeated herein.

For all resource block groups in the A RB sets, the manner of indexing the resource block groups may include: indexing in an order of: at least one index of the at least one RB set in an ascending order, then indexes of interlaces in an ascending order, and then indexes of resource block groups in an ascending order; or indexing in an order of: indexes of interlaces in an ascending order, then at least one index of the at least one RB set in an ascending order, and then indexes of resource block groups in an ascending order; or indexing in an order of: at least one index of the at least one RB set in a descending order, then indexes of interlaces in a descending order, and then indexes of resource block groups in a descending order; or indexing in an order of: indexes of interlaces in a descending order, then at least one index of the at least one RB set in a descending order, and then indexes of resource block groups in a descending order.

The number of resource block groups included in one second candidate transmission resource set and the corresponding resource block group information (such as the aforementioned indexing manner) are determined based on A, $B_a$, $C_{a,b}$ and N, then resource block group information included in each second candidate transmission resource set may be determined. For example, the number of resource block groups included in one second candidate transmission resource set is $L_2 = \text{floor}(\frac{\sum_{a=0}^{A-1} \sum_{b=0}^{B_a-1} C_{a,b}}{N})$ . Then, the first one of the second candidate transmission resource sets includes a resource block group with an index of [0, $L_2$-1], and the second one of the second candidate transmission resource sets includes a resource block group with an index of [$L_2$, 2 $L_2$-1], and so on.

The present disclosure also provides a manner of indexing the resources in the second candidate transmission resource set determined in the granularity of the resource block group. For example, the manner of indexing the resources may include:

1) the transmission resources in the second candidate transmission resource set are indexed in an order of: indexes of resource block groups in an ascending order, and then indexes of code-domain resources in an ascending order; or
2) the transmission resources in the second candidate transmission resource set are indexed in an order of: indexes of resource block groups in a descending order, and then indexes of code-domain resources in a descending order.

It is to be understood that for one PSFCH transmission occasion or a PSFCH slot, the PSFCH candidate transmission resource set corresponding to the transmission occasion may be determined based on information such as the RB sets available for the PSFCH transmission, interlaces available for the PSFCH transmission that are included in the RB set, resource block groups available for the PSFCH transmission that are included in one interlace, and available code-domain resources. Herein, information of the RB sets available for the PSFCH transmission, information of the interlaces available for PSFCH transmission that are included in the RB set, information of the resource block groups available for PSFCH transmission that are included in one interlace may be used to determine frequency-domain resources available for the PSFCH, and the information of the code-domain resources may be used to determine the code-domain resources available for the PSFCH. As described above, the PSFCH candidate resource set is divided into N second candidate resource sets in the frequency-domain granularity of each of the RB set, the interlace, and the resource block group, respectively, and then the corresponding second candidate resource set may be determined according to the index n of the transmission occasion for the PSFCH.

After the second candidate transmission resource set to which the at least one dedicated RB or transmission resource of the first PSFCH belongs is determined, the at least one dedicated RB or transmission resource of the first PSFCH may be determined from the second candidate transmission resource set through the following embodiment 2-1 or embodiment 2-2.

Embodiment 2-1

The at least one dedicated RB or the transmission resource occupied by the first PSFCH may be determined from the second candidate transmission resource set based on a twenty-first parameter. The twenty-first parameter may include one or more of: a second parameter, a third parameter, a fourth parameter, a fifth parameter, a sixth parameter, a seventh parameter, an eighth parameter, a ninth parameter, and an eleventh parameter.

The description of the second parameter, the third parameter, the fourth parameter, the fifth parameter, the sixth parameter, the seventh parameter, the eighth parameter, and the ninth parameter may be referred to the first embodiment.

The eleventh parameter may be determined based on a total number of resources included in the second candidate transmission resource set. For example, the eleventh parameter may include the total number of resources included in the second candidate transmission resource set. The eleventh parameter may be denoted as $M_{total-2}$.

In some implementations, the twenty-first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, a total number of resources included in the second candidate transmission resource set, and first identification information.

In some implementations, the twenty-first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, a total number of resources included in the second candidate transmission resource set, and first identification information.

In some implementations, the twenty-first parameter includes: the index corresponding to the first subchannel of the transmission resources for the first PSSCH, a number of subchannels included in the transmission resources for the first PSSCH, the index of the slot corresponding to the transmission resources for the first PSSCH, the index of the first one of RB sets corresponding to the transmission resources for the first PSSCH, a total number of resources included in the second candidate transmission resource set, and first identification information.

In some implementations, the twenty-first parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, the number of RBs corresponding to the transmission resources for the first PSSCH, a total number of resources included in the second candidate transmission resource set, and first identification information.

In some implementations, the twenty-first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, a total number of resources included in the second candidate transmission resource set, and first identification information.

In some implementations, the twenty-first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, a total number of resources included in the second candidate transmission resource set, and first identification information.

In some implementations, the twenty-first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, and first identification information.

In some implementations, the twenty-first parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, and first identification information.

In some implementations, the twenty-first parameter includes: the index corresponding to the first subchannel of the transmission resources for the first PSSCH, a number of subchannels included in the transmission resources for the first PSSCH, the index of the slot corresponding to the transmission resources for the first PSSCH, the index of the first one of RB sets corresponding to the transmission resources for the first PSSCH, and first identification information.

In some implementations, the twenty-first parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, the number of RBs corresponding to the transmission resources for the first PSSCH, and first identification information.

In some implementations, the twenty-first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, and first identification information.

In some implementations, the twenty-first parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, and first identification information.

In some embodiments, the terminal device may determine the index corresponding to the transmission resources for the first PSFCH from the second candidate transmission resource set based on the twenty-first parameter, and determine the at least one dedicated RB or the transmission resource occupied by the first PSFCH based on the index. In different division granularities, the manners of indexing the resources in the second candidate transmission resource set are as described above, which will not be repeated herein.

Embodiment 2-2

In some embodiments, the at least one dedicated RB or the transmission resource occupied by the first PSFCH may be determined from a third candidate transmission resource set, and the third candidate transmission resource set may be determined from the second candidate transmission resource set. The second candidate transmission resource set may be divided into multiple third candidate transmission resource sets. The first terminal device may firstly determine a third candidate transmission resource set carrying the first PSFCH from the multiple third candidate transmission resource sets, and then determine the at least one dedicated RB or the transmission resource occupied by the first PSFCH from the third candidate resource set.

In some implementations, the third candidate transmission resource set may be determined from the second candidate transmission resource set based on a twelfth parameter. The twelfth parameter may include one or more of: a second parameter, a third parameter, a fourth parameter, a fifth parameter, a sixth parameter and an eleventh parameter. The meaning of each parameter may be referred to the foregoing description, which will not be repeated herein.

In some implementations, the twelfth parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, and a total number of resources included in the second candidate transmission resource set.

In some implementations, the twelfth parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, and a total number of resources included in the second candidate transmission resource set.

In some implementations, the twelfth parameter includes: the index corresponding to the first subchannel of the transmission resources for the first PSSCH, a number of subchannels included in the transmission resources for the first PSSCH, the index of the slot corresponding to the transmission resources for the first PSSCH, the index of the first one of RB sets corresponding to the transmission resources for the first PSSCH, and a total number of resources included in the second candidate transmission resource set.

In some implementations, the twelfth parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, the number of RBs corresponding to the transmission resources for the first PSSCH, and a total number of resources included in the second candidate transmission resource set.

In some implementations, the twelfth parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, and a total number of resources included in the second candidate transmission resource set.

In some implementations, the twelfth parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, the number of at least one RB set corresponding to the transmission resources for the first PSSCH, and a total number of resources included in the second candidate transmission resource set.

In some implementations, the twelfth parameter includes: the index corresponding to the first subchannel of the transmission resources for the first PSSCH, the index of the slot corresponding to the transmission resources for the first PSSCH, and the index of the first one of RB sets corresponding to the transmission resources for the first PSSCH.

In some implementations, the twelfth parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, and the number of at least one RB set corresponding to the transmission resources for the first PSSCH.

In some implementations, the twelfth parameter includes: the index corresponding to the first subchannel of the transmission resources for the first PSSCH, a number of subchannels included in the transmission resources for the first PSSCH, the index of the slot corresponding to the transmission resources for the first PSSCH, and the index of the first one of RB sets corresponding to the transmission resources for the first PSSCH.

In some implementations, the twelfth parameter includes: the index corresponding to the first subchannel of the transmission resources for the first PSSCH, the number of subchannels included in the transmission resources for the first PSSCH, the index of the slot corresponding to the transmission resources for the first PSSCH, the index of the first one of RB sets corresponding to the transmission resources for the first PSSCH, and the number of RBs corresponding to the transmission resources for the first PSSCH.

In some implementations, the twelfth parameter includes: the index corresponding to the first interlace of the transmission resources for the first PSSCH, the index of the slot corresponding to the transmission resources for the first PSSCH, and the index of the first one of RB sets corresponding to the transmission resources for the first PSSCH.

In some implementations, the twelfth parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, and the number of at least one RB set corresponding to the transmission resources for the first PSSCH.

In some embodiments, the at least one dedicated RB or the transmission resource occupied by the first PSFCH may be determined from the third candidate transmission resource set based on a thirteenth parameter. The thirteenth parameter may include one or more of: a third parameter, a fifth parameter, a sixth parameter, a ninth parameter, and a fourteenth parameter.

The fourteenth parameter may be determined based on a total number of resources included in the third candidate transmission resource set. For example, the fourteenth parameter may be equal to the total number of resources included in the third candidate transmission resource set.

In some implementations, the thirteenth parameter includes: first identification information and a total number of resources included in the third candidate transmission resource set.

In some implementations, the thirteenth parameter includes: the first identification information, a total number of resources included in the third candidate transmission resource set, and a number of subchannels included in the transmission resources for the first PSSCH.

In some implementations, the thirteenth parameter includes: the first identification information, a total number of resources included in the third candidate transmission resource set, and a number of at least one RB set corresponding to the transmission resources for the first PSSCH.

In some implementations, the thirteenth parameter includes: the first identification information, a total number of resources included in the third candidate transmission resource set, a number of subchannels included in the transmission resources for the first PSSCH, and a number of at least one RB set corresponding to the transmission resources for the first PSSCH.

Optionally, one of the twelfth parameter and the thirteenth parameter may include the third parameter described above. That is to say, the twelfth parameter includes the third parameter and the thirteenth parameter does not include the third parameter.

Optionally, one of the twelfth parameter and the thirteenth parameter may include the fifth parameter described above. That is to say, the twelfth parameter includes the fifth parameter and the thirteenth parameter does not include the fifth parameter.

Optionally, one of the twelfth parameter and the thirteenth parameter may include the sixth parameter described above. That is to say, the twelfth parameter includes the sixth parameter and the thirteenth parameter does not include the sixth parameter.

Therefore, if the third candidate transmission resource set is determined according to one or more of the third parameter, the fifth parameter, and the sixth parameter, the corresponding parameters may not be considered when determining the at least one dedicated RB or the transmission resource of the first PSFCH. Therefore, if the third candidate transmission resource set is not determined according to one or more of the third parameter, the fifth parameter, and the sixth parameter, the corresponding parameters are required to be considered when determining the at least one dedicated RB or the transmission resource of the first PSFCH.

As can be seen from the parameters for determining the third candidate transmission resource set, the third candidate transmission resource set may be determined based on information of the slot, information of the subchannel, and information of the RB set that correspond to the PSSCH transmission. In the third candidate transmission resource set, the first terminal device may further determine the specific PSFCH transmission resource according to the ninth parameter (i.e., identification information).

As described above, the manner of determining the second candidate transmission resource set is associated with the granularity of the frequency-domain resources. For the second candidate transmission resource sets determined by different granularities of the frequency-domain resources, the manners of determining the third candidate transmission resource set will be described below.

If the second candidate transmission resource set is determined in the granularity of the RB set (i.e., at least one RB set available for the transmission of the first PSFCH are determined based on at least one index of at least one PSFCH transmission occasion, and the at least one RB set constitutes the second candidate transmission resource set), the third candidate transmission resource set may be determined in following manner 1 or manner 2.

In the manner 1, the third candidate transmission resource set is determined in the granularity of the interlace (i.e., at least one interlace available for the transmission of the first PSFCH is determined from the second candidate transmission resource set based on the twelfth parameter, and the at least one interlace constitutes the third candidate transmission resource set).

The total number of interlaces included in the second candidate transmission resource set may be determined in the following manner. The second candidate resource set includes A2 RB sets, $B2_a$ represents the number of interlaces (not including the common interlace) available for the PSFCH transmission that are included in the RB set a, and the total number of interlaces included in A2 RB sets is $\sum_{a=0}^{A2-1} B2_a$.

In a case where the third candidate transmission resource set is determined in the granularity of the interlace, a manner of indexing the resources in the second candidate transmission resource set may be:

1) the transmission resources in the second candidate transmission resources are indexed in an order of: at least one index of the at least one RB set in an ascending order, and then indexes of interlaces in an ascending order, or
2) the transmission resources in the second candidate transmission resources are indexed in an order of: indexes of interlaces in an ascending order, and then at least one index of the at least one RB set in an ascending order; or
3) the transmission resources in the second candidate transmission resources are indexed in an order of: at least one index of the at least one RB set in a descending order, and then indexes of interlaces in a descending order, or
4) the transmission resources in the second candidate transmission resources are indexed in an order of: indexes of interlaces in a descending order, and then at least one index of the at least one RB set in a descending order.

Furthermore, the first terminal device may determine the third candidate transmission resource set from the second candidate transmission resource set based on the twelfth parameter. In the case, the determined third candidate transmission resource set is in the granularity of the interlace.

It is to be noted that the total number of resources included in the third candidate transmission resource set may be determined based on one or more of: a number of interlaces included in the third candidate transmission resource set, a number of resource block groups available for the PSFCH transmission included in each interlace, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the third candidate transmission resource set in the granularity of the interlace may be indexed in the following manner:

1) the transmission resources in the third candidate transmission resources are indexed in an order of: indexes of interlaces in an ascending order, then indexes of resource block groups in an ascending order, and then indexes of code-domain resources in an ascending order; or
2) the transmission resources in the third candidate transmission resources are indexed in an order of: indexes of resource block groups in an ascending order, then indexes of interlaces in an ascending order, and then indexes of code-domain resources in an ascending order; or
3) transmission resources in the third candidate transmission resources are indexed in an order of: indexes of interlaces in a descending order, then indexes of resource block groups in a descending order, and then indexes of code-domain resources in a descending order; or
4) transmission resources in the third candidate transmission resources are indexed in an order of: indexes of resource block groups in a descending order, then indexes of interlaces in a descending order, and then indexes of code-domain resources in a descending order.

The first terminal device may determine an index corresponding to the transmission resources for the first PSFCH from the third candidate transmission resource set based on the thirteenth parameter. For example, the thirteenth parameter includes the ninth parameter, then the first terminal device may determine the index of the transmission resources for the first PSFCH in the third candidate transmission resource set based on the ninth parameter. Furthermore, the at least one dedicated RB or transmission resource occupied by the first PSFCH is determined based on the index.

In the manner 2, that third transmission resource set is determined in the granularity of the resource block group (i.e., at least one resource block group available for the transmission of the first PSFCH are determined from the second candidate transmission resource set based on the twelfth parameter, and the at least one resource block group constitutes the third candidate transmission resource set).

The total number of resource block groups included in the second candidate transmission resource set may be determined in the following manner. The second candidate resource set includes A2 RB sets, $B2_a$ represents the number of interlaces (not including the common interlace) available for the PSFCH transmission that are included in RB set a, $C2_{a,b}$ represents the number of resource block groups available for the PSFCH transmission that are included in the interlace b in the RB set a, and the total number of resource block groups included in A2 RB sets is $\sum_{a=0}^{A2-1} \sum_{b=0}^{B2_a-1} C2_{a,b}$.

In a case where the third candidate transmission resource set is determined in the granularity of the resource block group, a manner of indexing the resources in the second candidate transmission resource set may be:

1) the transmission resources in the second candidate transmission resources are indexed in an order of: at least one index of the at least one RB set in an ascending order, then indexes of interlaces in an ascending order, and then indexes of resource block groups in an ascending order; or
2) the transmission resources in the second candidate transmission resources are indexed in an order of: indexes of resource block groups in an ascending order, then indexes of interlaces in an ascending order, and then at least one index of the at least one RB set in an ascending order; or
3) the transmission resources in the second candidate transmission resources are indexed in an order of: indexes of interlaces in an ascending order, then at least one index of the at least one RB set in an ascending order, and then indexes of resource block groups in an ascending order; or
4) the transmission resources in the second candidate transmission resources are indexed in an order of: indexes of interlaces in an ascending order, then indexes of resource block groups in an ascending order, and then at least one index of the at least one RB set in an ascending order; or
5) the transmission resources in the second candidate transmission resources are indexed in an order of: at least one index of the at least one RB set in a descending order, then indexes of interlaces in a descending order, and then indexes of resource block groups in a descending order; or
6) the transmission resources in the second candidate transmission resources are indexed in an order of: indexes of resource block groups in a descending order, then indexes of interlaces in a descending order, and then at least one index of the at least one RB set in a descending order; or
7) the transmission resources in the second candidate transmission resources are indexed in an order of: indexes of interlaces in a descending order, then at least one index of the at least one RB set in a descending order, and then indexes of resource block groups in a descending order; or
8) the transmission resources in the second candidate transmission resources are indexed in an order of: indexes of interlaces in a descending order, then indexes of resource block groups in a descending order, and then at least one index of the at least one RB set in a descending order.

Furthermore, the first terminal device may determine the third candidate transmission resource set from the second candidate transmission resource set based on the twelfth parameter. In this case, the determined third candidate transmission resource set is in the granularity of the resource block group.

It is to be noted that the total number of resources included in the third candidate transmission resource set may be determined based on one or more of: a number of resource block groups available for the PSFCH transmission that are included in the third candidate transmission resource set, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the third candidate transmission resource set in the granularity of the resource block group may be indexed in the following manner:

1) the transmission resources in the third candidate transmission resources are indexed in an order of: indexes of resource block groups in an ascending order, and then indexes of code-domain resources in an ascending order; or
2) the transmission resources in the third candidate transmission resources are indexed in an order of: indexes of resource block groups in a descending order, and then indexes of code-domain resources in a descending order.

The first terminal device may determine an index corresponding to the transmission resources for the first PSFCH from the third candidate transmission resource set based on the thirteenth parameter. For example, the thirteenth parameter includes the ninth parameter, then the first terminal device may determine the index of the transmission resources for the first PSFCH in the third candidate transmission resource set based on the ninth parameter. Furthermore, the at least one dedicated RB or transmission resource occupied by the first PSFCH is determined based on the index.

If the second candidate transmission resource set is determined in the granularity of the interlace (i.e., one or more interlace available for the transmission of the first PSFCH are determined based on at least one index of at least one PSFCH transmission occasion, and the at least one interlace constitutes the second candidate transmission resource set), the third candidate transmission resource set may be determined in following manner 3 or manner 4.

In the manner 3, the third transmission resource set is determined in the granularity of the interlace (i.e., at least one interlace available for the transmission of the first PSFCH is determined from the second candidate transmission resource set based on the twelfth parameter, and the at least one interlace constitutes the third candidate transmission resource set).

The total number of interlaces included in the second candidate transmission resource set may be represented as B, where B may not include the number of common interlaces.

In a case where the third transmission resource set is determined in the granularity of the interlace, a manner of indexing the resources in the second candidate transmission resource set may be:

1) resources in the second candidate transmission resource set are indexed according to indexes of interlaces in a descending order; or
2) resources in the second candidate transmission resource set are indexed according to indexes of interlaces in an ascending order.

Furthermore, the first terminal device may determine the third candidate transmission resource set from the second candidate transmission resource set based on the twelfth parameter. In the case, the determined third candidate transmission resource set is in the granularity of the interlace.

It is to be noted that the total number of resources included in the third candidate transmission resource set may be determined based on one or more of: a number of interlaces included in the third candidate transmission resource set, a number of resource block groups available for the PSFCH transmission included in the interlaces, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the third candidate transmission resource set in the granularity of the interlace may be indexed in the following manner:

1) the transmission resources in the third candidate transmission resources are indexed in an order of: indexes of interlaces in an ascending order, then indexes of resource block groups in an ascending order, and then indexes of code-domain resources in an ascending order; or
2) the transmission resources in the third candidate transmission resources are indexed in an order of: indexes of resource block groups in an ascending order, then indexes of interlaces in an ascending order, and then indexes of code-domain resources in an ascending order; or
3) the transmission resources in the third candidate transmission resources are indexed in an order of: indexes of interlaces in a descending order, then indexes of resource block groups in a descending order, and then indexes of code-domain resources in a descending order; or
4) the transmission resources in the third candidate transmission resources are indexed in an order of: indexes of resource block groups in a descending order, then indexes of interlaces in a descending order, and then indexes of code-domain resources in a descending order; or

The first terminal device may determine an index corresponding to the transmission resources for the first PSFCH from the third candidate transmission resource set based on the thirteenth parameter. For example, the thirteenth parameter includes the ninth parameter, then the first terminal device may determine the index of the transmission resources for the first PSFCH in the third candidate transmission resource set based on the ninth parameter. Furthermore, the at least one dedicated RB or transmission resource occupied by the first PSFCH is determined based on the index.

In the manner 4, the third transmission resource set is determined in the granularity of the resource block group (i.e., at least one resource block group available for the transmission of the first PSFCH are determined from the second candidate transmission resource set based on the twelfth parameter, and the at least one resource block group constitutes the third candidate transmission resource set).

The total number of resource block groups included in the second candidate transmission resource set may be determined in the following manner. B represents the number of interlaces (not including the common interlace) included in the second candidate transmission resource set, $C_b$ represents the number of resource block groups available for the PSFCH transmission that are included in the interlace b, and the total number of resource block groups included in the second candidate transmission resource set is $\sum_{b=0}^{B-1} C_b$.

In a case where the third candidate transmission resource set is determined in the granularity of the resource block group, a manner of indexing the resources in the second candidate transmission resource set may be:

1) the transmission resources in the second candidate transmission resources are indexed in an order of: indexes of interlaces in an ascending order, and then indexes of resource block groups in an ascending order; or
2) the transmission resources in the second candidate transmission resources are indexed in an order of: indexes of resource block groups in an ascending order, and then indexes of interlaces in an ascending order; or
3) the transmission resources in the second candidate transmission resources are indexed in an order of: indexes of interlaces in a descending order, and then indexes of resource block groups in a descending order; or
4) the transmission resources in the second candidate transmission resources are indexed in an order of: indexes of resource block groups in a descending order, and then indexes of interlaces in a descending order.

Furthermore, the first terminal device may determine the third candidate transmission resource set from the second candidate transmission resource set based on the twelfth parameter. In the case, the determined third candidate transmission resource set is in the granularity of the resource block group.

It is to be noted that the total number of resources included in the third candidate transmission resource set may be determined based on one or more of: a number of resource block groups available for the PSFCH transmission that are included in the third candidate transmission resource set, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the third candidate transmission resource set in the granularity of the resource block group may be indexed in the following manner:

1) the transmission resources in the third candidate transmission resources are indexed in an order of: indexes of resource block groups in an ascending order, and then indexes of code-domain resources in an ascending order; or
2) the transmission resources in the third candidate transmission resources are indexed in an order of: indexes of resource block groups in a descending order, and then indexes of code-domain resources in a descending order.

The first terminal device may determine an index corresponding to the transmission resources for the first PSFCH from the third candidate transmission resource set based on the thirteenth parameter. For example, the thirteenth parameter includes the ninth parameter, then the first terminal device may determine the index of the transmission resources for the first PSFCH in the third candidate transmission resource set based on the ninth parameter. Furthermore, the at least one dedicated RB or transmission resource occupied by the first PSFCH is determined based on the index.

If the second candidate transmission resource set is determined in the granularity of the resource block group (i.e., at least one resource block group available for the transmission of the first PSFCH are determined based on at least one index of at least one PSFCH transmission occasion, and the at least one resource block group constitutes the second candidate transmission resource set), the third candidate transmission resource set may be determined in following manner 5.

In the manner 5, the third transmission resource set is determined in the granularity of the resource block group (i.e., at least one resource block group available for the transmission of the first PSFCH are determined from the second candidate transmission resource set based on the twelfth parameter, and the at least one resource block group constitutes the third candidate transmission resource set).

The total number of resource block groups included in the second candidate transmission resource set may be represented as C.

In a case where the third candidate transmission resource set is determined in the granularity of the resource block group, a manner of indexing the resources in the second candidate transmission resource set may be:

1) the transmission resources in the second candidate transmission resources are indexed according to indexes of resource block groups in an ascending order; or
2) the transmission resources in the second candidate transmission resources are indexed according to indexes of resource block groups in a descending order.

Furthermore, the first terminal device may determine the third candidate transmission resource set from the second candidate transmission resource set based on the twelfth parameter. In the case, the determined third candidate transmission resource set is in the granularity of the resource block group.

It is to be noted that the total number of resources included in the third candidate transmission resource set may be determined based on one or more of: a number of resource block groups available for the PSFCH transmission that are included in the third candidate transmission resource set, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the third candidate transmission resource set in the granularity of the resource block group may be indexed in the following manner:

1) the transmission resources in the third candidate transmission resources are indexed in an order of: indexes of resource block groups in an ascending order, and then indexes of code-domain resources in an ascending order; or
2) the transmission resources in the third candidate transmission resources are indexed in an order of: indexes of resource block groups in a descending order, and then indexes of code-domain resources in a descending order.

The first terminal device may determine an index corresponding to the transmission resources for the first PSFCH from the third candidate transmission resource set based on the thirteenth parameter. For example, the thirteenth parameter includes the ninth parameter, then the first terminal device may determine the index of the transmission resources for the first PSFCH in the third candidate transmission resource set based on the ninth parameter. Furthermore, the at least one dedicated RB or transmission resource occupied by the first PSFCH is determined based on the index.

The index corresponding to the transmission resources for the first PSFCH in the third candidate transmission resource set can be determined through each of the aforementioned manner 1 to manner 5. The first terminal device may determine the at least one dedicated RB or transmission resource occupied by the first PSFCH based on the index.

Third embodiment

In the third embodiment, the candidate transmission resource subset may be referred to as a fourth candidate transmission resource set. That is to say, the at least one dedicated RB occupied by the first PSFCH or the transmission resource occupied by the first PSFCH may be determined from the fourth candidate transmission resource set.

The fourth candidate transmission resource set may be determined based on the transmission resources for the PSSCH associated with the PSFCH. In other words, the PSFCH transmission resource set may be divided into multiple fourth candidate resource sets, and one fourth candidate transmission resource set may be determined form the multiple fourth candidate resource sets based on the transmission resources for the PSSCH associated with the PSFCH.

In some embodiments, the fourth candidate transmission resource set may be determined based on the fifteenth parameter. The fifteenth parameter may include one or more of: a second parameter, a third parameter, a fourth parameter, a fifth parameter, and a sixth parameter. The descriptions of the second parameter, the third parameter, the fourth parameter, the fifth parameter, and the sixth parameter are referred to the foregoing description, which will not be repeated herein.

In some implementations, the fifteenth parameter includes: the index corresponding to the first subchannel of the transmission resources for the first PSSCH, the index of the slot corresponding to the transmission resources for the first PSSCH, and the index of the first one of RB sets corresponding to the transmission resources for the first PSSCH.

In some implementations, the fifteenth parameter includes: the index corresponding to the first subchannel of the transmission resources for the first PSSCH, the index of the slot corresponding to the transmission resources for the first PSSCH, the index of the first one of RB sets corresponding to the transmission resources for the first PSSCH, and the number of at least one RB set corresponding to the transmission resources for the first PSSCH.

In some implementations, the fifteenth parameter includes: the index corresponding to the first subchannel of the transmission resources for the first PSSCH, a number of subchannels included in the transmission resources for the first PSSCH, the index of the slot corresponding to the transmission resources for the first PSSCH, and the index of the first one of RB sets corresponding to the transmission resources for the first PSSCH.

In some implementations, the fifteenth parameter includes: the index corresponding to the first subchannel of the transmission resources for the first PSSCH, a number of subchannels included in the transmission resources for the first PSSCH, the index of the slot corresponding to the transmission resources for the first PSSCH, the index of the first one of RB sets corresponding to the transmission resources for the first PSSCH, and the number of RBs corresponding to the transmission resources for the first PSSCH.

In some implementations, the fifteenth parameter includes: the index corresponding to the first interlace of the transmission resources for the first PSSCH, the index of the slot corresponding to the transmission resources for the first PSSCH, and the index of the first one of RB sets corresponding to the transmission resources for the first PSSCH.

In some implementations, the fifteenth parameter includes: the index corresponding to the first interlace of the transmission resources for the first PSSCH, the index of the slot corresponding to the transmission resources for the first PSSCH, the index of the first one of RB sets corresponding to the transmission resources for the first PSSCH, and the number of at least one RB set corresponding to the transmission resources for the first PSSCH.

The technical solution where the PSFCH transmission resource set is divided into multiple fourth candidate transmission resource sets in a frequency-domain granularity of each of the RB set, the interlace, and the resource block group is explained below.

The fourth candidate transmission resource set is determined in the granularity of the RB set

The PSFCH transmission resource set may be divided into multiple fourth candidate transmission resource sets in the granularity of the RB set. Exemplarily, at least one RB set available for the transmission of the first PSFCH are determined based on the fifteenth parameter. Herein, the at least one RB set constitutes a fourth candidate transmission resource set.

Exemplarily, the number of transmission resources included in the fourth candidate transmission resources and the corresponding information of the at least one RB set may be determined based on the first number A and the fifteenth parameter. The first number may be determined based on a number of first RB set(s) available for the PSFCH transmission.

The present disclosure also provides a manner of indexing the resources in the fourth candidate transmission resource set determined in the granularity of the RB set. For example, the manner of indexing the resources may include:

1) the transmission resources in the fourth candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or
2) the transmission resources in the fourth candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or
3) the transmission resources in the fourth candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or
4) the transmission resources in the fourth candidate transmission resource set are indexed in an order of: indexes of resource block groups in an ascending order, then indexes of interlaces in an ascending order, then at least one index of the at least one RB set in an ascending order, and then indexes of code-domain resources in an ascending order; or
5) the transmission resources in the fourth candidate transmission resource set are indexed in an order of: at least one index of the at least one RB set in a descending order, then indexes of interlaces in a descending order, then indexes of resource block groups in a descending order, and then indexes of code-domain resources in a descending order; or
6) the transmission resources in the fourth candidate transmission resource set are indexed in an order of: indexes of interlaces in a descending order, then indexes of resource block groups in a descending order, then at least one index of the at least one RB set in a descending order, and then indexes of code-domain resources in a descending order; or
7) the transmission resources in the fourth candidate transmission resource set are indexed in an order of: indexes of interlaces in a descending order, then at least one index of the at least one RB set in a descending order, then indexes of resource block groups in a descending order, and then indexes of code-domain resources in a descending order; or
8) the transmission resources in the fourth candidate transmission resource set are indexed in an order of: indexes of resource block groups in a descending order, then indexes of interlaces in a descending order, then at least one index of the at least one RB set in a descending order, and then indexes of code-domain resources in a descending order.

<u>The fourth candidate transmission resource set is determined in the granularity of the interlace</u>

The PSFCH transmission resource set may be divided into multiple fourth candidate transmission resource sets in the granularity of the interlace. Exemplarily, at least one interlace available for the transmission of the first PSFCH may be determined based on the fifteenth parameter, where the at least one interlace constitutes the fourth candidate transmission resource set.

Exemplarily, the number of interlaces included in the fourth candidate transmission resource set and the corresponding information of the interlaces may be determined based on the first number A, the second number Ba, and the fifteenth parameter. The first number may be determined based on a number of first RB set(s) available for the PSFCH transmission. The second number may be determined based on a number of interlaces available for the PSFCH transmission that are included in one RB in the first RB set(s); For example, the total number of interlaces included in the A RB sets is $\sum_{a=0}^{A-1} B_a$.

The resources in the fourth candidate transmission resource set may be indexed in following manner:

1) the transmission resources in the fourth candidate transmission resource set are indexed in an order of: indexes of interlaces in an ascending order, then indexes of resource block groups in an ascending order, and then indexes of code-domain resources in an ascending order; or
2) the transmission resources in the fourth candidate transmission resource set are indexed in an order of: indexes of resource block groups in an ascending order, then indexes of interlaces in an ascending order, and then indexes of code-domain resources in an ascending order; or
3) the transmission resources in the fourth candidate transmission resource set are indexed in an order of: indexes of interlaces in a descending order, then indexes of resource block groups in a descending order, and then indexes of code-domain resources in a descending order; or
4) the transmission resources in the fourth candidate transmission resource set are indexed in an order of: indexes of resource block groups in a descending order, then indexes of interlaces in a descending order, and then indexes of code-domain resources in a descending order.

The fourth candidate transmission resource set is determined in the granularity of the resource block group

The PSFCH transmission resource set may be divided into multiple fourth candidate transmission resource sets in the granularity of the resource block group. Exemplarily, at least one resource block group available for the transmission of the first PSFCH may be determined based on the fifteenth parameter, and the at least one resource block group constitutes the fourth candidate transmission resource set.

In some embodiments, the number of resource block groups included in the fourth candidate transmission resource set and the corresponding information of the resource block groups may be determined based on the first number A, the second number $B_a$, the third number $C_{a,b}$, and the fifteenth parameter. The first number may be determined based on a number of first RB set(s) available for the PSFCH transmission. The second number may be determined based on a number of interlaces available for the PSFCH transmission that are included in one RB in the first RB set(s). The third number may be determined based on a number of resource block groups available for the PSFCH transmission that are included in one interlace in the one RB set. For example, A represents the number of RB sets, $B_a$ represents the number of interlaces (not including the common interlace) available for the PSFCH transmission that are included in RB set a, $C_{a,b}$ represents the number of resource block groups available for the PSFCH transmission that are included in the interlace b in the RB set a. The total number of resource block groups included in the A RB sets is $\sum_{a=0}^{A-1} \sum_{b=0}^{B_a-1} C_{a,b}$.

The resources in the fourth candidate transmission resource set may be indexed in the following manners:

1) the transmission resources in the fourth candidate transmission resource set are indexed in an order of: indexes of resource block groups in an ascending order, and then indexes of code-domain resources in an ascending order; or
2) the transmission resources in the fourth candidate transmission resource set are indexed in an order of: indexes of resource block groups in a descending order, and then indexes of code-domain resources in a descending order.

After the fourth candidate transmission resource set to which the at least one dedicated RB or transmission resource of the first PSFCH belongs is determined, the at least one dedicated RB or transmission resource of the first PSFCH may be determined from the fourth candidate transmission resource set through the following embodiment 3-1 or embodiment 3-2.

Embodiment 3-1

The at least one dedicated RB occupied by the first PSFCH may be determined from the fourth candidate transmission resource set based on a sixteenth parameter. The sixteenth parameter may include one or more of: a third parameter, a fifth parameter, a sixth parameter, a seventh parameter, an eighth parameter, a ninth parameter, and a seventeenth parameter.

The description of the third parameter, the fifth parameter, the sixth parameter, the seventh parameter, the eighth parameter, and the ninth parameter may be referred to the first embodiment.

The seventeenth parameter may be determined based on a total number of resources included in the fourth candidate transmission resource set. For example, the seventeenth parameter may include a total number of resources included in the fourth candidate transmission resource set. The eleventh parameter may be denoted as $M_{total-4}$.

In some implementations, the sixteenth parameter includes: an index of a transmission occasion corresponding to the first PSFCH and first identification information.

In some implementations, the sixteenth parameter includes: an index of a transmission occasion corresponding to the first PSFCH, a total number of resources included in the fourth candidate transmission resource set, and the first identification information.

In some implementations, the sixteenth parameter includes: the index of the transmission occasion corresponding to the first PSFCH, a total number of at least one transmission occasion corresponding to the first PSFCH, a total number of resources included in the fourth candidate transmission resource set, and first identification information.

In some embodiments, the sixteenth parameter includes: a number of at least one RB set corresponding to the transmission resources for the first PSSCH, an index of a transmission occasion corresponding to the first PSFCH, a total number of resources included in the fourth candidate transmission resource set, and the first identification information.

In some implementations, the sixteenth parameter includes: a number of subchannels included in the transmission resources for the first PSSCH, an index of a transmission occasion corresponding to the first PSFCH, a total number of resources included in the fourth candidate transmission resource set, and the first identification information.

In some implementations, the sixteenth parameter includes: a number of subchannels included in the transmission resources for the first PSSCH, a number of at least one RB set corresponding to the transmission resources for the first PSSCH, an index of a transmission occasion corresponding to the first PSFCH, a total number of resources included in the fourth candidate transmission resource set, and the first identification information.

In some embodiments, the terminal device may determine an index corresponding to the transmission resources for the first PSFCH from the fourth candidate transmission resource set based on the sixteenth parameter, and determine the at least one dedicated RB or the transmission resource occupied by the first PSFCH based on the index. In different division granularities, the manners of indexing the resources in the fourth candidate transmission resource set are as described above, which will not be repeated herein.

Embodiment 3-2

In some embodiments, the at least one dedicated RB or the transmission resource occupied by the first PSFCH may be determined from a fifth candidate transmission resource set, and the fifth candidate transmission resource set may be determined from the fourth candidate transmission resource set. The fourth candidate transmission resource set may be divided into multiple fifth candidate transmission resource sets. The first terminal device may firstly determine a fifth candidate transmission resource set carrying the first PSFCH from the multiple fifth candidate transmission resource sets, and then determine the at least one dedicated RB or the transmission resource occupied by the first PSFCH from the fifth candidate resource set.

In some embodiments, the fifth candidate transmission resource set may be determined from the fourth candidate transmission resource set based on an eighteenth parameter. The eighteenth parameter may include one or more of: a seventh parameter, an eighth parameter, and a seventeenth parameter. The meaning of each parameter may be referred to the foregoing description, which will not be repeated herein.

In some implementations, the eighteenth parameter includes: an index of a transmission occasion corresponding to the first PSFCH.

In some implementations, the eighteenth parameter includes: an index of a transmission occasion corresponding to the first PSFCH, and a total number of resources included in the fourth candidate transmission resource set.

In some implementations, the eighteenth parameter includes: the index of the transmission occasion corresponding to the first PSFCH, a total number of at least one transmission occasion corresponding to the first PSFCH, and a total number of resources included in the fourth candidate transmission resource set.

In some embodiments, the at least one dedicated RB or the transmission resource occupied by the first PSFCH may be determined from the fifth candidate transmission resource set based on a nineteenth parameter. The nineteenth parameter may include one or more of: a third parameter, a fifth parameter, a sixth parameter, a ninth parameter, and a twentieth parameter.

The twentieth parameter may be determined based on a total number of resources included in the fifth candidate transmission resource set. For example, the twentieth parameter may be equal to the total number of resources included in the fifth candidate transmission resource set.

In some implementations, the nineteenth parameter includes: first identification information.

In some implementations, the nineteenth parameter includes: a total number of resources included in the fifth candidate transmission resource set, and first identification information.

In some implementations, the nineteenth parameter includes: a number of at least one RB set corresponding to the transmission resources for the first PSSCH, a total number of resources included in the fifth candidate transmission resource set, and the first identification information.

In some embodiments, the nineteenth parameter includes: a number of subchannels included in the transmission resources for the first PSSCH, a total number of resources included in the fifth candidate transmission resource set, and the first identification information.

In some embodiments, the nineteenth parameter includes: a number of at least one RB set corresponding to the transmission resources for the first PSSCH, a number of subchannels included in the transmission resources for the first PSSCH, a total number of resources included in the fifth candidate transmission resource set, and the first identification information.

As described above, the manner of determining the fourth candidate transmission resource set is associated with the granularity of the frequency-domain resources. For the fourth candidate transmission resource sets determined with different granularities of the frequency-domain resources, the manners of determining the fifth candidate transmission resource set will be described below.

If the fourth candidate transmission resource set is determined in the granularity of the RB set (i.e., at least one RB set available for the transmission of the first PSFCH are determined based on the fifteenth parameter, and the at least one RB set constitutes the fourth candidate transmission resource set), the fifth candidate transmission resource set may be determined in following manner 1 or manner 2.

In the manner 1, the fifth candidate transmission resource set is determined in the granularity of the interlace (i.e., at least one interlace available for the transmission of the first PSFCH is determined from the fourth candidate transmission resource set based on the eighteenth parameter, and the at least one interlace constitutes the fifth candidate transmission resource set).

In a case where the fifth candidate transmission resource set is determined in the granularity of the interlace, a manner of indexing the resources in the fourth candidate transmission resource set may be:

1) the transmission resources in the fourth candidate transmission resources are indexed in an order of: at least one index of the at least one RB set in an ascending order, and then indexes of interlaces in an ascending order, or
2) the transmission resources in the fourth candidate transmission resources are indexed in an order of: indexes of interlaces in an ascending order, and then at least one index of the at least one RB set in an ascending order; or
3) the transmission resources in the fourth candidate transmission resources are indexed in an order of: at least one index of the at least one RB set in a descending order, and then indexes of interlaces in a descending order, or
4) the transmission resources in the fourth candidate transmission resources are indexed in an order of: indexes of interlaces in a descending order, and then at least one index of the at least one RB set in a descending order.

Furthermore, the first terminal device may determine the fifth candidate transmission resource set from the fourth candidate transmission resource set based on the eighteenth parameter. In the case, the determined fifth candidate transmission resource set is in the granularity of the interlace.

It is to be noted that the total number of resources included in the fifth candidate transmission resource set may be determined based on one or more of: a number of interlaces included in the fifth candidate transmission resource set, a number of resource block groups available for the PSFCH transmission included in the interlaces, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the fifth candidate transmission resource set in the granularity of the interlace may be indexed in the following manners:

1) the transmission resources in the fifth candidate transmission resources are indexed in an order of: indexes of interlaces in an ascending order, then indexes of resource block groups in an ascending order, and then indexes of code-domain resources in an ascending order; or
2) the transmission resources in the fifth candidate transmission resources are indexed in an order of: indexes of resource block groups in an ascending order, then indexes of interlaces in an ascending order, and then indexes of code-domain resources in an ascending order; or
3) the transmission resources in the fifth candidate transmission resources are indexed in an order of: indexes of interlaces in a descending order, then indexes of resource block groups in a descending order, and then indexes of code-domain resources in a descending order; or
4) the transmission resources in the fifth candidate transmission resources are indexed in an order of: indexes of resource block groups in a descending order, then indexes of interlaces in a descending order, and then indexes of code-domain resources in a descending order; or

The first terminal device may determine an index corresponding to the transmission resources for the first PSFCH from the fifth candidate transmission resource set based on the nineteenth parameter. For example, the nineteenth parameter includes the ninth parameter, and the index of the transmission resources for the first PSFCH in the fifth candidate transmission resource set may be may be determined based on the ninth parameter. Furthermore, the at least one dedicated RB or transmission resource occupied by the first PSFCH is determined based on the index.

In the manner 2, that fifth transmission resource set is determined in the granularity of the resource block group (i.e., at least one resource block group available for the transmission of the first PSFCH are determined from the fourth candidate transmission resource set based on the eighteenth parameter, and the at least one resource block group constitutes the fifth candidate transmission resource set).

In a case where the fifth candidate transmission resource set is determined in the granularity of the resource block group, a manner of indexing the resources in the fourth candidate transmission resource set may be:

1) the transmission resources in the fourth candidate transmission resources are indexed in an order of: at least one index of the at least one RB set in an ascending order, then indexes of interlaces in an ascending order, and then indexes of resource block groups in an ascending order; or
2) the transmission resources in the fourth candidate transmission resources are indexed in an order of: indexes of resource block groups in an ascending order, then indexes of interlaces in an ascending order, and then at least one index of the at least one RB set in an ascending order; or
3) the transmission resources in the fourth candidate transmission resources are indexed in an order of: indexes of interlaces in an ascending order, then at least one index of the at least one RB set in an ascending order, and then indexes of resource block groups in an ascending order; or

4) the transmission resources in the fourth candidate transmission resources are indexed in an order of: indexes of interlaces in an ascending order, then indexes of resource block groups in an ascending order, and then at least one index of the at least one RB set in an ascending order; or

5) the transmission resources in the fourth candidate transmission resources are indexed in an order of: at least one index of the at least one RB set in a descending order, then indexes of interlaces in a descending order, and then indexes of resource block groups in a descending order; or

6) the transmission resources in the fourth candidate transmission resources are indexed in an order of: indexes of resource block groups in a descending order, then indexes of interlaces in a descending order, and then at least one index of the at least one RB set in a descending order; or

7) the transmission resources in the fourth candidate transmission resources are indexed in an order of: indexes of interlaces in a descending order, then at least one index of the at least one RB set in a descending order, and then indexes of resource block groups in a descending order; or

8) the transmission resources in the fourth candidate transmission resources are indexed in an order of: indexes of interlaces in a descending order, then indexes of resource block groups in a descending order, and then at least one index of the at least one RB set in a descending order.

Furthermore, the first terminal device may determine the fifth candidate transmission resource set from the fourth candidate transmission resource set based on the eighteenth parameter. In the case, the determined fifth candidate transmission resource set is in the granularity of the resource block group.

It is to be noted that the total number of resources included in the fifth candidate transmission resource set may be determined based on one or more of: a number of resource block groups included in the fifth candidate transmission resource set, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the fifth candidate transmission resource set in the granularity of the resource block group may be indexed in the following manners:

1) the transmission resources in the fifth candidate transmission resources are indexed in an order of: indexes of resource block groups in an ascending order, and then indexes of code-domain resources in an ascending order; or

2) the transmission resources in the fifth candidate transmission resources are indexed in an order of: indexes of resource block groups in a descending order, and then indexes of code-domain resources in a descending order.

The first terminal device may determine an index corresponding to the transmission resources for the first PSFCH from the fifth candidate transmission resource set based on the nineteenth parameter. For example, the nineteenth parameter includes the ninth parameter, and the first terminal device may determine the index of the transmission resources for the first PSFCH in the fifth candidate transmission resource set based on the ninth parameter. Furthermore, the at least one dedicated RB or transmission resource occupied by the first PSFCH is determined based on the index.

In the manner 3, the fifth transmission resource set is determined in the granularity of the interlace (i.e., at least one interlace available for transmission of the first PSFCH is determined from the fourth candidate transmission resource set based on the eighteenth parameter, and the at least one interlace constitutes the fifth candidate transmission resource set).

In a case where the fifth transmission resource set is determined in the granularity of the interlace, a manner of indexing the resources in the fourth candidate transmission resource set may be:

1) the fourth candidate transmission resource set is indexed according to indexes of interlaces in a descending order; or

2) the fourth candidate transmission resource set is indexed according to indexes of interlaces in an ascending order.

Furthermore, the first terminal device may determine the fifth candidate transmission resource set from the fourth candidate transmission resource set based on the eighteenth parameter. In the case, the determined fifth candidate transmission resource set is in the granularity of the interlace.

It is to be noted that the total number of resources included in the fifth candidate transmission resource set may be determined based on one or more of: a number of interlaces included in the fifth candidate transmission resource set, a number of resource block groups available for the PSFCH transmission included in the interlaces, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the fifth candidate transmission resource set in the granularity of the interlace may be indexed in the following manner:

1) the transmission resources in the fifth candidate transmission resources are indexed in an order of: indexes of interlaces in an ascending order, then indexes of resource block groups in an ascending order, and then indexes of code-domain resources in an ascending order; or
2) the transmission resources in the fifth candidate transmission resources are indexed in an order of: indexes of resource block groups in an ascending order, then indexes of interlaces in an ascending order, and then indexes of code-domain resources in an ascending order; or
3) the transmission resources in the fifth candidate transmission resources are indexed in an order of: indexes of interlaces in a descending order, then indexes of resource block groups in a descending order, and then indexes of code-domain resources in a descending order; or
4) the transmission resources in the fifth candidate transmission resources are indexed in an order of: indexes of resource block groups in a descending order, then indexes of interlaces in a descending order, and then indexes of code-domain resources in a descending order; or

The first terminal device may determine an index corresponding to the transmission resources for the first PSFCH from the fifth candidate transmission resource set based on the nineteenth parameter. For example, the nineteenth parameter includes the ninth parameter, and the first terminal device may determine the index of the transmission resources for the first PSFCH in the fifth candidate transmission resource set based on the ninth parameter. Furthermore, the at least one dedicated RB or transmission resource occupied by the first PSFCH is determined based on the index.

In the manner 4, the fifth transmission resource set is determined in the granularity of the resource block group (i.e., at least one resource block group available for the transmission of the first PSFCH are determined from the fourth candidate transmission resource set based on the eighteenth parameter, and the at least one resource block group constitutes the fifth candidate transmission resource set).

In a case where the fifth candidate transmission resource set is determined in the granularity of the resource block group, a manner of indexing the resources in the fourth candidate transmission resource set may be:

1) the transmission resources in the fourth candidate transmission resources are indexed in an order of: indexes of interlaces in an ascending order, and then indexes of resource block groups in an ascending order; or
2) the transmission resources in the fourth candidate transmission resources are indexed in an order of: indexes of resource block groups in an ascending order, and then indexes of interlaces in an ascending order.
3) the transmission resources in the fourth candidate transmission resources are indexed in an order of: indexes of interlaces in a descending order, and then indexes of resource block groups in a descending order; or
4) the transmission resources in the fourth candidate transmission resources are indexed in an order of: indexes of resource block groups in a descending order, and then indexes of interlaces in a descending order.

Furthermore, the first terminal device may determine the fifth candidate transmission resource set from the fourth candidate transmission resource set based on the eighteenth parameter. In the case, the determined fifth candidate transmission resource set is in the granularity of the resource block group.

It is to be noted that the total number of resources included in the fifth candidate transmission resource set may be determined based on one or more of: a number of resource block groups included in the fifth candidate transmission resource set, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the fifth candidate transmission resource set in the granularity of the resource block group may be indexed in the following manners:

1) the transmission resources in the fifth candidate transmission resources are indexed in an order of: indexes of resource block groups in an ascending order, and then indexes of code-domain resources in an ascending order; or
2) the transmission resources in the fifth candidate transmission resources are indexed in an order of: indexes of resource block groups in a descending order, and then indexes of code-domain resources in a descending order.

The first terminal device may determine an index corresponding to the transmission resources for the first PSFCH from the fifth candidate transmission resource set based on the nineteenth parameter. For example, if the nineteenth parameter includes the ninth parameter, then the index of the transmission resources for the first PSFCH in the fifth candidate transmission resource set may be determined based on the ninth parameter. Furthermore, the at least one dedicated RB or transmission resource occupied by the first PSFCH is determined based on the index.

In the manner 5, the fifth transmission resource set is determined in the granularity of the resource block group (i.e., at least one resource block group available for the transmission of the first PSFCH are determined from the fourth candidate transmission resource set based on the eighteenth parameter, and the at least one resource block group constitutes the fifth candidate transmission resource set).

In a case where the fifth candidate transmission resource set is determined in the granularity of the resource block group, a manner of indexing the resources in the fourth candidate transmission resource set may be:

1) the transmission resources in the fourth candidate transmission resources are indexed according to indexes of resource block groups in an ascending order; or
2) the transmission resources in the fourth candidate transmission resources are indexed according to indexes of resource block groups in a descending order.

Furthermore, the first terminal device may determine the fifth candidate transmission resource set from the fourth candidate transmission resource set based on the eighteenth parameter. In this case, the determined fifth candidate transmission resource set is in the granularity of the resource block group.

It is to be noted that the total number of resources included in the fifth candidate transmission resource set may be determined based on one or more of: a number of resource block groups included in the fifth candidate transmission resource set, a number of transmission resources that can be code-division-multiplexed, a number of at least one RB set corresponding to the transmission resources for the first PSSCH, and a number of subchannels or interlaces corresponding to the transmission resources for the first PSSCH.

The resources in the fifth candidate transmission resource set in the granularity of the resource block group may be indexed in the following manner:

1) the transmission resources in the fifth candidate transmission resources are indexed in an order of: indexes of resource block groups in an ascending order, and then indexes of code-domain resources in an ascending order; or
2) the transmission resources in the fifth candidate transmission resources are indexed in an order of: indexes of resource block groups in a descending order, and then indexes of code-domain resources in a descending order.

The first terminal device may determine an index corresponding to the transmission resources for the first PSFCH in the fifth candidate transmission resource set based on the nineteenth parameter. For example, if the nineteenth parameter includes the ninth parameter, then the index of the transmission resources for the first PSFCH in the fifth candidate transmission resource set may be determined based on the ninth parameter.

Through each of the aforementioned manner 1 to manner 5, it is possible to determine the index corresponding to the transmission resources for the first PSFCH in the third candidate transmission resource set. The first terminal device may determine the at least one dedicated RB or transmission resource occupied by the first PSFCH based on the index.

In some embodiments, the transmission resources for the first PSSCH may correspond to at least one RB set. The at least one RB set may include a second RB set. The first terminal device may determine the transmission resources for the first PSFCH from the second RB set. Alternatively, the first terminal device may determine the transmission resources for the first PSFCH based on the information of the second RB set.

In a possible implementation, the first terminal device determines the transmission resources for the first PSFCH from the second RB set based on one or more of following parameters: index information corresponding to the second RB set; an index corresponding to a first subchannel of transmission resources for the first PSSCH in the second RB set, an index corresponding to a first interlace of the transmission resources for the first PSSCH in the second RB set, or an index corresponding to a first RB of the transmission resources for the first PSSCH in the second RB set; a number of subchannels, a number of interlaces, or a number of RBs included in the transmission resources for the first PSSCH in the second RB set; an index of a slot corresponding to the transmission resources for the first PSSCH; an index of a transmission occasion corresponding to the first PSFCH; a total number of at least one transmission occasion corresponding to the first PSFCH; and first identification information. The first identification information may include second identification information and/or third identification information, the second identification information is determined based on a source identification included in first SCI for scheduling the first PSSCH, and the third identification information is 0 or the third identification information is determined based on a member identification of the terminal device in a communication group.

In some embodiments, the second RB set may be any one of at least one RB set corresponding to the transmission resources for the first PSSCH. For example, the second RB set may be a first one or a last one of the at least one RB set. The first terminal device may determine the second RB set from at least one RB set corresponding to the transmission resources for the first PSSCH or determine the at least one RB set corresponding to the transmission resources for the first PSFCH based on one or more of the following: information predefined in a protocol; pre-configuration information; configuration information of a network device; and indication information sent by a target terminal device.

It is to be noted that the target terminal device is a terminal device sending the first PSFCH, a terminal device receiving the first PSFCH, a terminal device sending a first PSSCH, or a terminal device receiving the first PSSCH. As can be seen that the target terminal device may be the first terminal device. Alternatively, the target terminal device may be a terminal device that performs the sidelink communication with the first terminal device.

In some embodiments, in a case where the transmission resources for the first PSSCH correspond to multiple RB sets, the multiple RB sets may include a third RB set. In some embodiments, the third RB set may be any RB set other than the second RB set among the multiple RB sets corresponding to the transmission resources for the first PSSCH.

In some implementations, the first terminal device may determine the transmission resources for the first PSFCH in the third RB set. That is to say, the first terminal device may determine the transmission resources for the first PSFCH corresponding to the second RB set in the second RB set and determine the transmission resources for the first PSFCH corresponding to the third RB set in the third RB set respectively, and the first PSFCHs in both RB sets correspond to the same time-domain resource. In a case where the transmission resources for the first PSSCH correspond to multiple RB sets, for each RB set, the transmission resources for the first PSFCH may be determined in the RB set. For example, the transmission resources for the first PSSCH correspond to four RB sets, the second RB set is the first one of the four RB sets, the third RB set includes the second one, the third one, and the fourth one of the four RB sets, and the first terminal device determines the transmission resources for the first PSFCH from each of the four RB sets, respectively.

After the transmission resources for the first PSFCH in each RB set are determined, the first terminal device may simultaneously send the first PSFCHs in all RB sets.

The first terminal device determines the transmission resources for the first PSFCH in the third RB set based on one or more of following parameters: index information corresponding to the third RB set; an index corresponding to a first subchannel of transmission resources for the first PSSCH in the third RB set, an index corresponding to a first interlace of the transmission resources for the first PSSCH in the third RB set, or an index corresponding to a first RB of the transmission resources for the first PSSCH in the third RB set; a number of subchannels a number of interlaces, or a number of RBs included in the transmission resources for the first PSSCH in the third RB set; an index of a slot corresponding to the transmission resources for the first PSSCH; an index of a transmission occasion corresponding to the first PSFCH; a total number of at least one transmission occasion corresponding to the first PSFCH; and first identification information,

It is to be understood that if the first PSSCH includes multiple RB sets, and the sending device of the first PSSCH initiates a COT when sending the first PSSCH, and the COT is shared with the sending device of the first PSFCH, when the first PSFCH is only located in one RB set and there is no PSFCH to be sent in other RB sets, then in other RB sets, devices of other systems (such as WIFi systems) may preempt the shared spectrum within the time range corresponding to the PSFCH transmission occasion, which results in that the subsequent sidelink transmission cannot be performed. According to the above technical solution of the present disclosure, the case where there is no PSFCH to be sent in an RB set can be avoided as much as possible, thereby avoiding the shared spectrum from being occupied by devices of other systems, and thus realizing normal sidelink transmission.

Optionally, whether to determine the transmission resources for the first PSFCH in the third RB set may be determined based on: whether the first terminal device has a PSFCH to be sent in the third RB set. If the first terminal device has no PSFCH to be sent in the third RB set, the first terminal device may determine the transmission resources for the first PSFCH in the third RB set. If the first terminal device has a PSFCH to be sent in the third RB set (the PSFCH is to be sent to the second terminal device or another terminal device), the first terminal device does not determine the transmission resources for the first PSFCH in the third RB set.

If there is PSFCH to be sent in the third RB set, the PSFCH to be sent will occupy the third RB set, and even if the transmission resources for the first PSFCH is not determined in the third RB set, it can ensure that the sidelink system user continuously occupies the channel.

In some implementations, the first terminal device may determine the transmission resources for the third PSFCH in the third RB set. The transmission resources for the third PSFCH may include a common interlace in the third RB set, and time-domain resources for the third PSFCH are the same as the time-domain resources for the first PSFCH.

As a possible implementation, the transmission resources for the third PSFCH may merely include a common interlace in the third RB set. It is to be understood that since the third PSFCH does not occupy the dedicated RBs, the third PSFCH is a redundant PSFCH in this case. That is to say, no valid sidelink feedback information is sent on the transmission resources for the third PSFCH.

For example, the second RB set may be the first one of the multiple RB sets corresponding to the transmission resources for the first PSSCH. The transmission resources for the first PSFCH (including the common interlace and the dedicated RBs) are located in the first RB one of the multiple RB sets corresponding to the transmission resources for the first PSSCH, and the first terminal device may determine the transmission resources for the third PSFCH (including only the common interlace) in other RB sets the at least one RB set than the first one of the multiple RB sets.

For another example, the second RB set may be one of the multiple RB sets corresponding to the transmission resources for the first PSSCH. The transmission resources for the first PSFCH (including the common interlace and the dedicated RBs) are located in the RB set, and the first terminal device may determine the transmission resources for the third PSFCH (merely including the common interlace) in other RB sets other than the RB set.

It is to be understood that in a case where the transmission resources for the third PSFCH merely include the common interlace in the third RB set, it can realize occupation of the frequency-domain resources of the third RB set, avoid preemption by devices of other systems, without causing interference to the PSFCH transmission of other users in the sidelink system.

As a possible implementation, the transmission resources for the third PSFCH may include the common interlace in the third RB set and at least one dedicated RB occupied by the third PSFCH. That is to say, valid feedback information may be sent on the transmission resources for the third PSFCH.

For example, the third PSFCH is also associated with the first PSSCH. That is to say, the sidelink feedback information carried in the third PSFCH is the sidelink feedback information for the first PSSCH. For the third RB set, the first terminal device may determine the transmission resources for the third PSFCH in the third RB set based on the transmission resources for the first PSSCH in the third RB set. Exemplarily, the transmission resources for the third PSFCH in the third RB set may be determined based on one or more of the following parameters: an index corresponding to a first subchannel of transmission resources for the first PSSCH in the third RB set, an index corresponding to a first interlace of the transmission resources for the first PSSCH in the third RB set, or an index corresponding to a first RB of the transmission resources for the first PSSCH in the third RB set; a number of subchannels, a number of interlaces, or a number of RBs included in the transmission resources for the first PSSCH in the third RB set; a slot index corresponding to the transmission resources for the first PSSCH.

Optionally, whether to determine the transmission resources for the third PSFCH in the third RB set may be determined based on: whether the first terminal device has a PSFCH to be sent in the third RB set (the PSFCH is to be sent to the second terminal device or another terminal device). If the first terminal device has no PSFCH to be sent in the third RB set, the first terminal device may determine the transmission resources for the third PSFCH in the third RB set. If the first terminal device has a PSFCH to be sent in the third RB set, the first terminal device does not determine the transmission resources for the third PSFCH in the third RB set.

If there is PSFCH to be sent in the third RB set, the PSFCH to be sent will occupy the third RB set, and even if the transmission resources for the first PSFCH are not determined in the third RB set, it can ensure that the sidelink system user continuously occupies the channel.

After the transmission resources for the third PSFCH are determined, the first terminal device may send the first PSFCH and the third PSFCH.

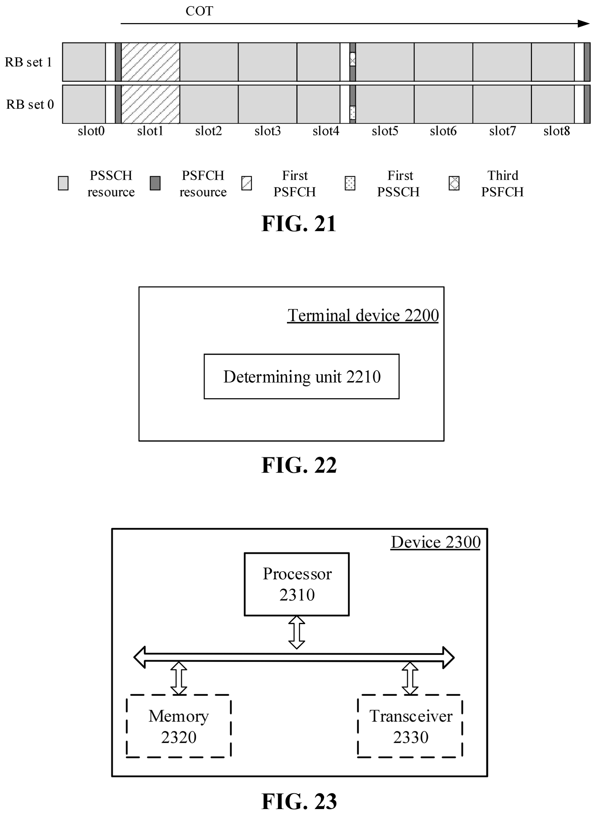

The present disclosure will be described in detail with reference to FIG. 21 below. In the example illustrated in FIG. 21, the first terminal device is UE2, and the second terminal device is UE1. The second RB set is RB set 0, and the third RB set is RB set 1.

As illustrated in FIG. 21, The UE1 sends the first PSSCH to the UE2 in a slot 1. The transmission resources for the first PSSCH are located in RB set 0 and RB set 1. The UE1 initiates the COT and shares the COT with the UE2. Based on the transmission resources for the first PSSCH, the UE 2 may determine that the transmission resources for the first PSFCH associated with the UE 2 are located in the RB set 0. In the PSFCH transmission occasion in the slot 4, if the UE 2 does not send the PSFCH in the RB set 1 and only sends the first PSFCH in the RB set 0, devices of other systems may preempt the channel on the RB set 1 within the time range corresponding to the transmission resources for the PSFCH, which results in the fact that the COT shared by the UE 1 cannot be used by other users of the sidelink system in the RB set 1, and the transmission efficiency of the SL system is reduced. Therefore, in the PSFCH transmission occasion in slot 4, the UE 2 may determine the transmission resources for the third PSFCH in the RB set 1, and the third PSFCH may merely occupy the common interlace in the RB set 1. The UE 2 may send the first PSFCH and the third PSFCH in the RB set 0 and the RB set 1, respectively, so as to realize the continuous occupation of the channel by the sidelink system user, thereby preventing other system users from preempting the channel.

It is to be understood that in the above example, in the PSFCH transmission occasion in the slot 4, if the UE 2 has a fourth PSFCH to be sent in RB set 1, e.g., the fourth PSFCH is to be sent by the UE 2 to the UE 3, the UE 2 does not need to determine the third PSFCH in RB set 1. This is because the fourth PSFCH sent by the UE 2 can also occupy the RB set 1 in this case, which can ensure that the sidelink system user continuously occupies the channel.

In some embodiments, a PSFCH with a higher priority may be preferentially sent within the same time-domain resource. Optionally, the smaller the value of the priority, the higher the priority of the PSFCH.

In some implementations, the priority of the first PSFCH may be determined based on the priority of the first PSSCH associated with first PSFCH. For example, the priority of the first PSFCH may be the same as the priority of the first PSSCH.

In some implementations, the priority of the third PSFCH may be the same as the priority of the first PSFCH. For example, in a case where the transmission resources for the third PSFCH include the dedicated RBs, the priority of the third PSFCH may be the same as the priority of the first PSFCH. In this case, the third PSFCH may also be used for the transmission of the HARQ information, and therefore, the priority of the third PSFCH may be determined based on the priority of the first PSSCH associated with the third PSFCH, i.e., the priority of the third PSFCH may be the same as the priority of the first PSFCH.

In some implementations, the priority of the third PSFCH may be lower than the priority of the first PSFCH. For example, in a case where the transmission resources for the third PSFCH merely include the common interlace, the priority of the third PSFCH may be lower than the priority of the first PSFCH, so as to preferentially send the first PSFCH carrying the valid sidelink feedback information.

In some implementations, the priority of the third PSFCH may be lower than the priority of the PSFCH carrying the valid sidelink feedback information. For example, in the case where the transmission resources for the third PSFCH merely include the common interlace, the value range of the priority of the PSFCH carrying the valid sidelink feedback information may be [1, 8], and the value of the priority of the third PSFCH may be greater than 8. In this implementation, the PSFCH carrying the valid sidelink feedback information may be preferentially sent, i.e., the transmission of the feedback information may be preferentially ensured.

In some implementations, the priority of the third PSFCH may be higher than the priorities of some or all of the PSFCHs carrying the valid feedback information. For example, the value range of the priority of the PSFCH carrying the valid feedback information may be [1, 8], and the value of the priority of the third PSFCH may be less than or equal to 1. In this implementation, it can prioritize the continuous occupation of the channel by the user of the sidelink system, i.e., it is preferentially ensured that the channel is not preempted by users of other system.

In some implementations, the value of the priority of the third PSFCH may be determined based on one or more of: information predefined in a protocol; pre-configuration information; configuration information of a network device; and indication information sent by a target terminal device. For example, the pre-configuration information or the network configuration information includes indication information, and the indication information is used for indicating that the value of the priority of the third PSFCH is 8.

It is to be noted that the target terminal device is a terminal device sending the first PSFCH, a terminal device receiving the first PSFCH, a terminal device sending a first PSSCH, or a terminal device receiving the first PSSCH. As can be seen that the target terminal device may be the first terminal device. Alternatively, the target terminal device may be a terminal device that performs the sidelink communication with the first terminal device.

In the embodiment of the present disclosure, the RB is also referred to as a PRB. That is to say, the RB can be equivalent to the PRB.

It is to be noted that the dedicated RB is also referred to as the specific PRB. That is to say, the dedicated RB can be equivalent to the specific PRB.

The method embodiments of the present disclosure have been described in detail above, and the device embodiments of the present disclosure are described in detail below. It is to be understood that the method embodiments correspond to the device embodiments, and the portions not described in detail of the device embodiments may refer to the method embodiments.

FIG. 22 is a schematic structural diagram of a terminal device 2200 according to an embodiment of the present disclosure. The terminal device 2200 is a first terminal device. The terminal device 2200 may include a determining unit 2210.

The determining unit is configured to determine transmission resources for a first PSFCH, where the transmission resources for the first PSFCH include one or more of: a common interlace occupied by the first PSFCH; and at least one dedicated RB occupied by the first PSFCH.

In some embodiments, the common interlace is determined based on one or more of: information predefined in a protocol; pre-configuration information; configuration information of a network device; and indication information sent by a target terminal device, where the target terminal device is a terminal device sending the first PSFCH, a terminal device receiving the first PSFCH, a terminal device sending a first PSSCH, or a terminal device receiving the first PSSCH, the first PSSCH being associated with the first PSFCH.

In some embodiments, for one PSFCH transmission occasion, the at least one dedicated RB occupied by the first PSFCH is determined from a first candidate transmission resource set.

In some embodiments, transmission resources in the first candidate transmission resource set are indexed in an order of: at least one index of at least one available RB set in an ascending order, then indexes of interlaces in an ascending order, then indexes of resource block groups in an ascending order, and then indexes of code-domain resources in an ascending order; or transmission resources in the first candidate transmission resource set are indexed in an order of: indexes of interlaces in an ascending order, then indexes of resource block groups in an ascending order, then at least one index of at least one available RB set in an ascending order, and then indexes of code-domain resources in an ascending order; or transmission resources in the first candidate transmission resource set are indexed in an order of: indexes of interlaces in an ascending order, then at least one index of at least one available RB set in an ascending order, then indexes of resource block groups in an ascending order, and then indexes of code-domain resources in an ascending order; or transmission resources in the first candidate transmission resource set are indexed in an order of: indexes of resource block groups in an ascending order, then indexes of interlaces in an ascending order, then at least one index of at least one available RB set in an ascending order, and then indexes of code-domain resources in an ascending order.

In some embodiments, the at least one available RB set is determined based on one or more of: at least one RB set corresponding to transmission resources for a first PSSCH; at least one RB set included in a resource pool corresponding to the first PSSCH; and whether a transmission occasion corresponding to the first PSFCH is a first one of N PSFCH transmission occasions associated with the first PSSCH, where the first PSSCH is associated with the first PSFCH.

In some embodiments, if the transmission occasion corresponding to the first PSFCH is the first one of the N PSFCH transmission occasions, the at least one available RB set includes the at least one RB set corresponding to the transmission resources for the first PSSCH; and/or if the transmission occasion corresponding to the first PSFCH is not the first one of the N PSFCH transmission occasions, the at least one available RB set includes the RB set included in the resource pool.

In some embodiments, a frequency-domain range of one interlace in the first candidate transmission resource set corresponds to a frequency-domain range of one interlace within one RB set.

In some embodiments, the first candidate transmission resource set does not include the common interlace.

In some embodiments, interlaces available for PSFCH transmission that are configured for different RB sets in the resource pool are independently configured.

In some embodiments, one resource block group corresponds to K3 RBs in one interlace, where K3 is equal to a number of the at least one dedicated RB, and K3 is a positive integer greater than or equal to 1.

In some embodiments, if one interlace includes A RBs, a number of resource block groups included in one interlace is equal to $C_A^{K3}$, where A is a positive integer greater than or equal to 1, and $C_A^{K3}$ represents a number of combinations formed by randomly selecting K3 elements from A elements.

In some embodiments, if one interlace includes A RBs, a number of resource block groups included in one interlace is equal to floor(A/K3), where A is a positive integer greater than or equal to 1, and floor represents downward rounding.

In some embodiments, if one interlace includes A RBs and K3=1, a number of resource block groups included in one interlace is equal to A, where A is a positive integer greater than or equal to 1.

In some embodiments, if one RB set includes a first interlace and a second interlace, a number of RBs included in the first interlace is the same as or different from a number of RBs included in the second interlace.

In some embodiments, a number of the code-domain resources is determined based on one or more of: a number of cyclic shift pairs that can be code-division-multiplexed within one RB; and a number of resources that can be code-division-multiplexed among RBs included in one resource block group.

In some embodiments, the at least one dedicated RB occupied by the first PSFCH is determined from the first candidate transmission resource set based on a first parameter, and the first parameter includes one or more of: a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH; a third parameter determined based on a number of subchannels, a number of interlaces, or a number of RBs comprised in the transmission resources for the first PSSCH; a fourth parameter determined based on a slot index corresponding to the transmission resources for the first PSSCH; a fifth parameter determined based on at least one index of at least one RB set corresponding to the transmission resources for the first PSSCH; a sixth parameter determined based on a number of at least one RB set corresponding to the transmission resources for the first PSSCH, a seventh parameter determined based on at least one index of at least one transmission occasion corresponding to the first PSFCH; an eighth parameter determined based on a total number of at least one transmission occasion corresponding to the first PSFCH; a ninth parameter determined based on first identification information, where the first identification information includes second identification information and/or third identification information, the second identification information is determined based on a source identification included in first SCI for scheduling the first PSSCH, and the third identification information is 0 or the third identification information is determined based on a member identification of the terminal device in a communication group; and a tenth parameter determined based on a total number of resources included in the first candidate transmission resource set, where the first PSSCH is associated with the first PSFCH.

In some embodiments, the at least one dedicated RB occupied by the first PSFCH is determined from a second candidate transmission resource set, and the second candidate transmission resource set is determined based on at least one index of at least one PSFCH transmission occasion.

In some embodiments, a number of transmission resources included in the second candidate transmission resource set is determined based on one or more of: a first number determined based on a number of first RB set(s) available for PSFCH transmission; a second number determined based on a number of interlaces available for the PSFCH transmission that are included in one RB in the first RB set(s); a third number determined based on a number of resource block groups available for the PSFCH transmission that are included in one interlace in the one RB set; and a fourth number determined based on a number N of PSFCH transmission occasions.

In some embodiments, a number of transmission resources included in the second candidate transmission resource set is determined based on the first number and the fourth number.

In some embodiments, the number $L_0$ of RB sets included in the second candidate transmission resource set satisfies: $L_0$ = floor(A/N), where A represents the first number and floor representing downward rounding.

In some embodiments, determination of the second candidate transmission resource set based on at least one index of at least one PSFCH transmission occasion includes: at least one RB set available for transmission of the first PSFCH is determined based on at least one index of at least one PSFCH transmission occasion, where the at least one RB set constitutes the second candidate transmission resource set.

In some embodiments, transmission resources in the second candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or transmission resources in the second candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or transmission resources in the second candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or transmission resources in the second candidate transmission resource set are indexed in an order of: indexes of resource block groups in an ascending order, then indexes of interlaces in an ascending order, then at least one index of the at least one RB set in an ascending order, and then indexes of code-domain resources in an ascending order.

In some embodiments, a number of transmission resources included in the second candidate transmission resource set is determined based on the first number, the second number, and the fourth number.

In some embodiments, a number $L_1$ of interlaces included in the second candidate transmission resource set satisfies: $L_1 = \text{floor}(\frac{\sum_{a=0}^{A-1} B_a}{N})$, where A represents the first number, $B_a$ represents the second number, N represents the fourth number, floor represents downward rounding, and a is an integer and is in a value range of [0, A-1].

In some embodiments, determination of the second candidate transmission resource set based on at least one index of at least one PSFCH transmission occasion includes: at least one interlace available for transmission of the first PSFCH is determined based on at least one index of at least one PSFCH transmission occasion, where the at least one interlace constitutes the second candidate transmission resource set.

In some embodiments, transmission resources in the second candidate transmission resource set are indexed in an order of: indexes of interlaces in an ascending order, then indexes of resource block groups in an ascending order, and then indexes of code-domain resources in an ascending order; or transmission resources in the second candidate transmission resource set are indexed in an order of: indexes of resource block groups in an ascending order, then indexes of interlaces in an ascending order, and then indexes of code-domain resources in an ascending order.

In some embodiments, a number of transmission resources included in the second candidate transmission resource set is determined based on the first number, the second number, the third number, and the fourth number.

In some embodiments, a number $L_2$ of resource block groups included in the second candidate transmission resource set satisfies: $L_2 = \text{floor}(\frac{\sum_{a=0}^{A-1} \sum_{b=0}^{B_a-1} C_{a,b}}{N})$, where A represents the first number, $B_a$ represents the second number, $C_{a,b}$ represents the third number, N represents the fourth number, floor represents downward rounding, both a and b are integers, a is in a value range of [0, A-1], and b is in a value range of [0, $B_a$-1].

In some embodiments, determination of the second candidate transmission resource set based on at least one index of at least one PSFCH transmission occasion includes: at least one resource block group available for transmission of the first PSFCH is determined based on the at least one index of the at least one PSFCH transmission occasion, where the at least one resource block group constitutes the second candidate transmission resource set.

In some embodiments, transmission resources in the second candidate transmission resource set are indexed in an order of: indexes of resource block groups in an ascending order, and then indexes of code-domain resources in an ascending order.

In some embodiments, the at least one dedicated RB occupied by the first PSFCH is determined from the second candidate transmission resource set based on a twenty-first parameter, and the twenty-first parameter includes one or more of: a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH; a third parameter determined based on a number of subchannels, a number of interlaces, or a number of RBs comprised in the transmission resources for the first PSSCH; a fourth parameter determined based on a slot index corresponding to the transmission resources for the first PSSCH; a fifth parameter determined based on at least one index of at least one RB set corresponding to the transmission resources for the first PSSCH; a sixth parameter determined based on a number of at least one RB set corresponding to the transmission resources for the first PSSCH, a seventh parameter determined based on at least one index of at least one transmission occasion corresponding to the first PSFCH; an eighth parameter determined based on a total number of at least one transmission occasion corresponding to the first PSFCH; a ninth parameter determined based on first identification information, where the first identification information includes second identification information and/or third identification information, the second identification information is determined based on a source identification included in first SCI for scheduling the first PSSCH, and the third identification information is 0 or the third identification information is determined based on a member identification of the terminal device in a communication group; and an eleventh parameter determined based on a total number of resources included in the second candidate transmission resource set, where the first PSSCH is associated with the first PSFCH.

In some embodiments, determination of the at least one dedicated RB occupied by the first PSFCH from the second candidate transmission resource set based on the twenty-first parameter includes: determining the at least one dedicated RB occupied by the first PSFCH based on an index of the transmission resources for the first PSFCH, where the index is determined from the second candidate transmission resource set based on the twenty-first parameter.

In some embodiments, the at least one dedicated RB occupied by the first PSFCH is determined from a third candidate transmission resource set, and the third candidate transmission resource set is determined from the second candidate transmission resource set.

In some embodiments, the third candidate transmission resource set is determined from the second candidate transmission resource set based on a twelfth parameter, and the twelfth parameter includes one or more of: a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH; a third parameter determined based on a number of subchannels, a number of interlaces, or a number of RBs comprised in the transmission resources for the first PSSCH; a fourth parameter determined based on a slot index corresponding to the transmission resources for the first PSSCH; a fifth parameter determined based on at least one index of at least one RB set corresponding to the transmission resources for the first PSSCH; a sixth parameter determined based on a number of at least one RB set corresponding to the transmission resources for the first PSSCH; and an eleventh parameter determined based on a total number of resources included in the second candidate transmission resource set,

In some embodiments, the at least one dedicated RB occupied by the first PSFCH is determined from the third candidate transmission resource set based on a thirteenth parameter, and the thirteenth parameter includes one or more of: a third parameter determined based on a number of subchannels, a number of interlaces, or a number of RBs comprised in the transmission resources for the first PSSCH; a fifth parameter determined based on at least one index of at least one RB set corresponding to the transmission resources for the first PSSCH; a sixth parameter determined based on a number of at least one RB set corresponding to the transmission resources for the first PSSCH, a ninth parameter determined based on first identification information, where the first identification information includes second identification information and/or third identification information, the second identification information is determined based on a source identification included in first SCI for scheduling the first PSSCH, and the third identification information is 0 or the third identification information is determined based on a member identification of the terminal device in a communication group; and a fourteenth parameter determined based on a total number of resources included in the third candidate transmission resource set.

In some embodiments, determination of the second candidate transmission resource set based on at least one index of at least one PSFCH transmission occasion includes: at least one RB set available for transmission of the first PSFCH is determined based on the at least one index of the at least one PSFCH transmission occasion, where the at least one RB set constitutes the second candidate transmission resource set; determination of the third candidate transmission resource set from the second candidate transmission resource set based on the twelfth parameter includes: at least one interlace available for transmission of the first PSFCH is determined from the second candidate transmission resource set based on the twelfth parameter, where the at least one interlace constitutes the third candidate transmission resource set.

In some embodiments, transmission resources in the second candidate transmission resources are indexed in an order of: at least one index of the at least one RB set in an ascending order, and then indexes of interlaces in an ascending order, or transmission resources in the second candidate transmission resources are indexed in an order of: indexes of interlaces in an ascending order, and then at least one index of the at least one RB set in an ascending order.

In some embodiments, transmission resources in the third candidate transmission resources are indexed in an order of: indexes of interlaces in an ascending order, then indexes of resource block groups in an ascending order, and then indexes of code-domain resources in an ascending order; or transmission resources in the third candidate transmission resources are indexed in an order of: indexes of resource block groups in an ascending order, then indexes of interlaces in an ascending order, and then indexes of code-domain resources in an ascending order.

In some embodiments, determination of the second candidate transmission resource set based on at least one index of at least one PSFCH transmission occasion includes: at least one RB set available for transmission of the first PSFCH is determined based on the at least one index of the at least one PSFCH transmission occasion, where the at least one RB set constitutes the second candidate transmission resource set; determination of the third candidate transmission resource set from the second candidate transmission resource set based on the twelfth parameter includes: at least one resource block group available for transmission of the first PSFCH is determined from the second candidate transmission resource set based on the twelfth parameter, where the at least one resource block group constitutes the third candidate transmission resource set.

In some embodiments, transmission resources in the second candidate transmission resources are indexed in an order of: at least one index of the at least one RB set in an ascending order, then indexes of interlaces in an ascending order, and then indexes of resource block groups in an ascending order; or transmission resources in the second candidate transmission resources are indexed in an order of: indexes of resource block groups in an ascending order, then indexes of interlaces in an ascending order, and then at least one index of the at least one RB set in an ascending order; or transmission resources in the second candidate transmission resources are indexed in an order of: indexes of interlaces in an ascending order, then at least one index of the at least one RB set in an ascending order, and then indexes of resource block groups in an ascending order; or transmission resources in the second candidate transmission resources are indexed in an order of: indexes of interlaces in an ascending order, then indexes of resource block groups in an ascending order, and then at least one index of the at least one RB set in an ascending order.

In some embodiments, transmission resources in the third candidate transmission resources are indexed in an order of: indexes of resource block groups in an ascending order, and then indexes of code-domain resources in an ascending order.

In some embodiments, determination of the second candidate transmission resource set based on at least one index of at least one PSFCH transmission occasion includes: at least one interlace available for transmission of the first PSFCH is determined based on the at least one index of the at least one PSFCH transmission occasion, where the at least one interlace constitutes the second candidate transmission resource set; determination of the third candidate transmission resource set from the second candidate transmission resource set based on the twelfth parameter includes: at least one interlace available for transmission of the first PSFCH is determined from the second candidate transmission resource set based on the twelfth parameter, where the at least one interlace constitutes the third candidate transmission resource set.

In some embodiments, the second candidate transmission resource set is indexed according to indexes of interlaces in an ascending order.

In some embodiments, transmission resources in the third candidate transmission resources are indexed in an order of: indexes of interlaces in an ascending order, then indexes of resource block groups in an ascending order, and then indexes of code-domain resources in an ascending order; or transmission resources in the third candidate transmission resources are indexed in an order of: indexes of resource block groups in an ascending order, then indexes of interlaces in an ascending order, and then indexes of code-domain resources in an ascending order.

In some embodiments, determination of the second candidate transmission resource set based on at least one index of at least one PSFCH transmission occasion includes: at least one interlace available for transmission of the first PSFCH is determined based on the at least one index of the at least one PSFCH transmission occasion, where the at least one interlace constitutes the second candidate transmission resource set; determination of the third candidate transmission resource set from the second candidate transmission resource set based on the twelfth parameter includes: at least one resource block group available for transmission of the first PSFCH is determined from the second candidate transmission resource set based on the twelfth parameter, where the at least one resource block group constitutes the third candidate transmission resource set.

In some embodiments, transmission resources in the second candidate transmission resources are indexed in an order of: indexes of interlaces in an ascending order, and then indexes of resource block groups in an ascending order; or transmission resources in the second candidate transmission resources are indexed in an order of: indexes of resource block groups in an ascending order, and then indexes of interlaces in an ascending order.

In some embodiments, transmission resources in the third candidate transmission resources are indexed in an order of: indexes of resource block groups in an ascending order, and then indexes of code-domain resources in an ascending order.

In some embodiments, determination of the second candidate transmission resource set based on at least one index of at least one PSFCH transmission occasion includes: at least one resource block group available for transmission of the first PSFCH is determined based on the at least one index of the at least one PSFCH transmission occasion, where the at least one resource block group constitutes the second candidate transmission resource set; and determination of the third candidate transmission resource set from the second candidate transmission resource set based on the twelfth parameter includes: at least one resource block group available for transmission of the first PSFCH is determined from the second candidate transmission resource set based on the twelfth parameter, where the at least one resource block group

46

constitutes the third candidate transmission resource set.

In some embodiments, transmission resources in the second candidate transmission resources are indexed according to indexes of resource block groups in an ascending order.

In some embodiments, transmission resources in the third candidate transmission resources are indexed in an order of: indexes of resource block groups in an ascending order, and then indexes of code-domain resources in an ascending order.

In some embodiments, determination of the at least one dedicated RB occupied by the first PSFCH from the third candidate transmission resource set based on the thirteenth parameter includes: determining the at least one dedicated RB occupied by the first PSFCH based on an index of the transmission resources for the first PSFCH, where the index is determined from the third candidate transmission resource set based on the thirteenth parameter.

In some embodiments, the at least one dedicated RB occupied by the first PSFCH is determined from the fourth candidate transmission resource set, the fourth candidate transmission resource set is determined based on a fifteenth parameter, and the fifteenth parameter includes one or more of: a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH; a third parameter determined based on a number of subchannels, a number of interlaces, or a number of RBs comprised in the transmission resources for the first PSSCH; a fourth parameter determined based on a slot index corresponding to the transmission resources for the first PSSCH; a fifth parameter determined based on at least one index of at least one RB set corresponding to the transmission resources for the first PSSCH; and a sixth parameter determined based on a number of at least one RB set corresponding to the transmission resources for the first PSSCH, where the first PSSCH is associated with the first PSFCH.

In some embodiments, determination of the fourth candidate transmission resource set based on the fifteenth parameter includes: at least one RB set available for transmission of the first PSFCH is determined based on the fifteenth parameter, where the at least one RB set constitutes the fourth candidate transmission resource set.

In some embodiments, transmission resources in the fourth candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or transmission resources in the fourth candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or transmission resources in the fourth candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or transmission resources in the fourth candidate transmission resource set are indexed in an order of: indexes of resource block groups in an ascending order, then indexes of interlaces in an ascending order, then at least one index of the at least one RB set in an ascending order, and then indexes of code-domain resources in an ascending order.

In some embodiments, determination of the fourth candidate transmission resource set based on the fifteenth parameter includes: at least one interlace available for transmission of the first PSFCH is determined based on the fifteenth parameter, where the at least one interlace constitutes the fourth candidate transmission resource set.

In some embodiments, transmission resources in the fourth candidate transmission resource set are indexed in an order of: indexes of interlaces in an ascending order, then indexes of resource block groups in an ascending order, and then indexes of code-domain resources in an ascending order; or transmission resources in the fourth candidate transmission resource set are indexed in an order of: indexes of resource block groups in an ascending order, then indexes of interlaces in an ascending order, and then indexes of code-domain resources in an ascending order.

In some embodiments, determination of the fourth candidate transmission resource set based on the fifteenth parameter includes: at least one resource block group available for transmission of the first PSFCH is determined based on the fifteenth parameter, where the at least one resource block group constitutes the fourth candidate transmission resource set.

In some embodiments, transmission resources in the fourth candidate transmission resource set are indexed in an order of: indexes of resource block groups in an ascending order, and then indexes of code-domain resources in an ascending order.

In some embodiments, the at least one dedicated RB occupied by the first PSFCH is determined from the fourth candidate transmission resource set based on a sixteenth parameter, and the sixteenth parameter includes one or more of: a third parameter determined based on a number of subchannels, a number of interlaces, or a number of RBs comprised in the transmission resources for the first PSSCH; a fifth parameter determined based on at least one index of at least one RB set corresponding to the transmission resources for the first PSSCH; a sixth parameter determined based on a number of at least one RB set corresponding to the transmission resources for the first PSSCH, a seventh parameter determined based on at least one index of at least one transmission occasion corresponding to the first PSFCH; an eighth parameter determined based on a total number of at least one transmission occasion corresponding to the first PSFCH; a ninth parameter determined based on first identification information, where the first identification information includes second identification information and/or third identification information, the second identification information is determined based on a source identification included in first SCI for scheduling the first PSSCH, and the third identification information is 0 or the third identification information is determined based on a member identification of the terminal device in a communication group; and a seventeenth parameter determined based on a total number of resources included in the fourth candidate transmission resource set, where the first PSSCH is associated with the first PSFCH.

In some embodiments, determination of the at least one dedicated RB occupied by the first PSFCH from the fourth candidate transmission resource set based on the sixteenth parameter includes: determining an index corresponding to the transmission resources for the first PSFCH from the fourth candidate transmission resource set based on the sixteenth parameter, and determining the at least one dedicated RB occupied by the first PSFCH based on the index.

In some embodiments, the at least one dedicated RB occupied by the first PSFCH is determined from a fifth candidate transmission resource set, and the fifth candidate transmission resource set is determined from the fourth candidate transmission resource set.

In some embodiments, the fifth candidate transmission resource set is determined from the fourth candidate transmission resource set based on a eighteenth parameter, and the eighteenth parameter includes one or more of: a seventh parameter determined based on at least one index of at least one transmission occasion corresponding to the first PSFCH; an eighth parameter determined based on a total number of at least one transmission occasion corresponding to the first PSFCH; and a seventeenth parameter determined based on a total number of resources included in the fourth candidate transmission resource set.

In some embodiments, the at least one dedicated RB occupied by the first PSFCH is determined from the fifth candidate transmission resource set based on a nineteenth parameter, and the nineteenth parameter includes one or more of: a third parameter determined based on a number of subchannels, a number of interlaces, or a number of RBs comprised in the transmission resources for the first PSSCH; a fifth parameter determined based on at least one index of at least one RB set corresponding to the transmission resources for the first PSSCH; a sixth parameter determined based on a number of at least one RB set corresponding to the transmission resources for the first PSSCH, a ninth parameter determined based on first identification information, where the first identification information includes second identification information and/or third identification information, the second identification information is determined based on a source identification included in first SCI for scheduling the first PSSCH, and the third identification information is 0 or the third identification information is determined based on a member identification of the terminal device in a communication group; and a twentieth parameter determined based on a total number of resources included in the fifth candidate transmission resource set.

In some embodiments, determination of the fourth candidate transmission resource set based on the fifteenth parameter includes: at least one RB set available for transmission of the first PSFCH is determined based on the fifteenth parameter, where the at least one RB set constitutes the fourth candidate transmission resource set. Determination of the fifth candidate transmission resource set from the fourth candidate transmission resource set based on the eighteenth parameter includes: at least one interlace available for transmission of the first PSFCH is determined from the fourth candidate transmission resource set based on the eighteenth parameter, where the at least one interlace constitutes the fifth candidate transmission resource set.

In some embodiments, transmission resources in the fourth candidate transmission resources are indexed in an order of: at least one index of the at least one RB set in an ascending order, and then indexes of interlaces in an ascending order, or transmission resources in the fourth candidate transmission resources are indexed in an order of: indexes of interlaces in an ascending order, and then at least one index of the at least one RB set in an ascending order.

In some embodiments, transmission resources in the fifth candidate transmission resources are indexed in an order of: indexes of interlaces in an ascending order, then indexes of resource block groups in an ascending order, and then indexes of code-domain resources in an ascending order; or transmission resources in the fifth candidate transmission resources are indexed in an order of: indexes of resource block groups in an ascending order, then indexes of interlaces in an ascending order, and then indexes of code-domain resources in an ascending order.

In some embodiments, determination of the fourth candidate transmission resource set based on the fifteenth parameter includes: at least one RB set available for transmission of the first PSFCH is determined based on the fifteenth parameter, where the at least one RB set constitutes the fourth candidate transmission resource set. Determination of the fifth candidate transmission resource set from the fourth candidate transmission resource set based on the eighteenth parameter includes: at least one resource block group available for transmission of the first PSFCH is determined from the fourth candidate transmission resource set based on the eighteenth parameter, where the at least one resource block group constitutes the fifth candidate transmission resource set.

In some embodiments, transmission resources in the fourth candidate transmission resources are indexed in an order of: at least one index of the at least one RB set in an ascending order, then indexes of interlaces in an ascending order, and then indexes of resource block groups in an ascending order; or transmission resources in the fourth candidate transmission resources are indexed in an order of: indexes of resource block groups in an ascending order, then indexes of interlaces in an ascending order, and then at least one index of the at least one RB set in an ascending order; or transmission resources in the fourth candidate transmission resources are indexed in an order of: indexes of interlaces in an ascending order, then at least one index of the at least one RB set in an ascending order, and then indexes of resource block groups in an ascending order; or transmission resources in the fourth candidate transmission resources are indexed in an order of: indexes of interlaces in an ascending order, then indexes of resource block groups in an ascending order, and then at least one index of the at least one RB set in an ascending order.

In some embodiments, transmission resources in the fifth candidate transmission resources are indexed in an order of: indexes of resource block groups in an ascending order, and then indexes of code-domain resources in an ascending order.

In some embodiments, determination of the fourth candidate transmission resource set based on the fifteenth parameter includes: at least one interlace available for transmission of the first PSFCH is determined based on the fifteenth parameter, where the at least one interlace constitutes the fourth candidate transmission resource set. The determination of the fifth candidate transmission resource set from the fourth candidate transmission resource set based on the eighteenth parameter includes: at least one interlace available for transmission of the first PSFCH from the is determined fourth candidate transmission resource set based on the eighteenth parameter, where the at least one interlace constitutes the fifth candidate transmission resource set.

In some embodiments, transmission resources in the fourth candidate transmission resources are indexed according to indexes of interlaces in an ascending order.

In some embodiments, transmission resources in the fifth candidate transmission resources are indexed in an order of: indexes of interlaces in an ascending order, then indexes of resource block groups in an ascending order, and then indexes of code-domain resources in an ascending order; or transmission resources in the fifth candidate transmission resources are indexed in an order of: indexes of resource block groups in an ascending order, then indexes of interlaces in an ascending order, and then indexes of code-domain resources in an ascending order.

In some embodiments, determination of the fourth candidate transmission resource set based on the fifteenth parameter includes: at least one interlace available for transmission of the first PSFCH is determined based on the fifteenth parameter, where the at least one interlace constitutes the fourth candidate transmission resource set. Determination of the fifth candidate transmission resource set from the fourth candidate transmission resource set based on the eighteenth parameter includes: at least one resource block group available for transmission of the first PSFCH is determined from the fourth candidate transmission resource set based on the eighteenth parameter, where the at least one resource block group constitutes the fifth candidate transmission resource set.

In some embodiments, transmission resources in the fourth candidate transmission resources are indexed in an order of: indexes of interlaces in an ascending order, and then indexes of resource block groups in an ascending order; or

In some embodiments, transmission resources in the fourth candidate transmission resources are indexed in an order of: indexes of resource block groups in an ascending order, and then indexes of interlaces in an ascending order.

In some embodiments, transmission resources in the fifth candidate transmission resources are indexed in an order of: indexes of resource block groups in an ascending order, and then indexes of code-domain resources in an ascending order.

In some embodiments, determination of the fourth candidate transmission resource set based on the fifteenth parameter includes: at least one resource block group available for transmission of the first PSFCH is determined based on the fifteenth parameter, where the at least one resource block group constitutes the fourth candidate transmission resource set; and determination of the fifth candidate transmission resource set from the fourth candidate transmission resource set based on the eighteenth parameter includes: at least one resource block group available for transmission of the first PSFCH is determined from the fourth candidate transmission resource set based on the eighteenth parameter, where the at least one resource block group constitutes the fifth candidate transmission resource set.

In some embodiments, transmission resources in the fourth candidate transmission resources are indexed according to indexes of resource block groups in an ascending order.

In some embodiments, transmission resources in the fifth candidate transmission resources are indexed in an order of: indexes of resource block groups in an ascending order, and then indexes of code-domain resources in an ascending order.

In some embodiments, determination of the transmission resource occupied by the first PSFCH from the fifth candidate transmission resource set based on the nineteenth parameter includes: determining an index corresponding to the transmission resources for the first PSFCH from the fifth candidate transmission resource set based on the nineteenth parameter, and determining the at least one dedicated RB occupied by the first PSFCH based on the index.

In some embodiments, in a case where the first terminal device determines transmission resources for a second PSFCH, if the at least one RB set where the transmission resources for the first PSFCH are located is the same as at least one RB set where the transmission resources for the second PSFCH are located, the common interlace included in the transmission resources for the first PSFCH is the same as a common interlace included in the transmission resources for the second PSFCH.

In some embodiments, a first PSSCH is associated with the first PSFCH, transmission resources for the first PSSCH includes a second RB set, and the determining unit is configured to: determine the transmission resources for the first PSFCH in the second RB set, where the first PSSCH is associated with the first PSFCH.

In some embodiments, determination of the transmission resources for the first PSFCH in the second RB set includes: determining the transmission resources for the first PSFCH in the second RB set based on one or more of following parameters: index information corresponding to the second RB set; an index corresponding to a first subchannel of transmission resources for the first PSSCH in the second RB set, an index corresponding to a first interlace of the transmission resources for the first PSSCH in the second RB set, or an index corresponding to a first RB of the transmission resources for the first PSSCH in the second RB set; a number of subchannels, a number of interlaces, or a number of RBs included in the transmission resources for the first PSSCH in the second RB set; an index of a slot corresponding to the transmission resources for the first PSSCH; an index of a transmission occasion corresponding to the first PSFCH; a total number of at least one transmission occasion corresponding to the first PSFCH; and first identification information, where the first identification information includes second identification information and/or third identification information, the second identification information is determined based on a source identification included in first SCI for scheduling the first PSSCH, and the third identification information is 0 or the third identification information is determined based on a member identification of the terminal device in a communication group.

In some embodiments, the second RB set is a first one of at least one RB set corresponding to the transmission resources for the first PSSCH.

In some embodiments, the transmission resources for the first PSSCH further include a third RB set, and the determining unit is configured to: determine the transmission resources for the first PSFCH in the third RB set.

In some embodiments, determination of the transmission resources for the first PSFCH in the third RB set includes: if the first terminal device has no PSFCH to be sent in the third RB set within time-domain resources corresponding to the transmission resources for the first PSFCH, determining the transmission resources for the first PSFCH in the third RB set.

In some embodiments, if the transmission resources for the first PSSCH correspond to multiple RB sets, determining, by the first terminal device, the transmission resources for the first PSFCH in each of the multiple RB sets respectively.

In some embodiments, the transmission resources for the first PSSCH further include a third RB set, and the terminal device is further configured to: determine transmission resources for a third PSFCH in the third RB set, where the transmission resources for the third PSFCH include a common interlace in the third RB set, and time-domain resources of the third PSFCH are the same as time-domain resources of the first PSFCH.

In some embodiments, determination of the transmission resources for the third PSFCH in the third RB set includes: if the first terminal device has no PSFCH to be sent in the third RB set within time-domain resources corresponding to the transmission resources for the first PSFCH, determining the transmission resources for the third PSFCH in the third RB set.

In some embodiments, the terminal device is further configured to: send the first PSFCH and the third PSFCH.

In an optional embodiment, the determining unit 2210 may be the processor 2310. The terminal device 2200 may further include a memory 2320 and a transceiver 2330, as specifically illustrated in FIG. 23.

FIG. 23 is a schematic structural diagram of a device for communication according to an embodiment of the present disclosure. The dashed line in FIG. 23 indicates that the unit or module is optional. The device 2300 may be used to implement the method described in the aforementioned method embodiments. The device 2300 may be a chip, a terminal device, or a network device.

The device 2300 may include one or more processors 2310. The processor 2310 may support the device 2300 to implement the methods described in the aforementioned method embodiments. The processor 2310 may be a general-purpose processor or a special-purpose processor. For example, the processor may be a Central Processing Unit (CPU). Alternatively, the processor may also be another general-purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like. The general-purpose processor may be a microprocessor or the processor may be any conventional processor or the like.

The device 2300 may also include one or more memories 2320. The memory 2320 has stored a program that is executable by the processor 2310 to cause the processor 2310 to perform each of the methods described in the aforementioned method embodiments. The memory 2320 may be independent of the processor 2310 or may be integrated in the processor 2310.

The device 2300 may also include a transceiver 2330. The processor 2310 may communicate with other devices or chips through the transceiver 2330. For example, through the transceiver 2330, the processor 2310 may send data to other devices or chips, and receive data from other devices or chips.

An embodiment of the present disclosure further provides a computer-readable storage medium configured to store a program. The computer-readable storage medium may be applied to the terminal device in the embodiments of the present disclosure, and the computer program causes a computer to perform each of the methods performed by the terminal device in various embodiments of the present disclosure

An embodiment of the present disclosure further provides a computer program product, which includes a computer program. The computer program product may be applied to the terminal device in the embodiments of the present disclosure, and the computer program causes a computer to perform each of the methods performed by the terminal device in various embodiments of the present disclosure.

An embodiment of the present disclosure further provides a computer program. The computer program may be applied to the terminal in the embodiments of the present disclosure, and the computer program causes a computer to perform each of the methods performed by the terminal device in various embodiments of the present disclosure.

It is to e understood that the terms "s stem" and "network" are often used interchangeably herein. In addition, the terms used in the embodiments of the present disclosure are used only for explanation of specific embodiments of the present disclosure, and the terms are not intended to limit the re sent disclosure. The terms "first", "second", "third", "fourth" and the like in the description and claims of the present disclosure and the accompanying drawings are used to distinguish different objects and are not used to describe a particular sequence. Furthermore, the terms "including" and "having" and an variations thereof are intended to cover non-exclusive inclusion.

The "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the em odim ents of the re sent disclosure, the ex ressi on "B corres onding to A" means that B is associated with A, and B may be determined based on A. However, it is also to be understood that determining B based on A does not mean that B is determined based on A alone, but that B may also be determined based on A and/or other information.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the em odim ents of the re sent disclosure, the " r edefined" or " reco nfigured" may be achieved by pre-storing corresponding codes, tables or other means used for indicating relevant information in devices (e.g., including terminal devices and network devices), and the specific implementation thereof is not limited in the present disclosure. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

In the em o diments of the re sent disclosure, the term "including" ma refer to direct inclusion or indirect inclusion. Alternativel , the reference to "including" in the em odi ments of the res ent disclosure ma e re lace d with "indicating" or "used to determine". For example, A includes B, which may be replaced with that A indicates B, or A is used to determine B.

In various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

In the several embodiments provided in the present disclosure, it is to be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, digital subscriber line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

**Claims**

1. A method for sidelink transmission, comprising:

   determining, by a first terminal device, transmission resources for a first Physical Sidelink Feedback Channel (PSFCH),
   wherein the transmission resources for the first PSFCH comprises one or more of:

   a common interlace occupied by the first PSFCH; and
   at least one dedicated Resource Block (RB) occupied by the first PSFCH.

2. The method of claim 1, wherein the common interlace is determined based on one or more of:

   information predefined in a protocol;
   pre-configuration information;
   configuration information of a network device; and
   indication information sent by a target terminal device,
   wherein the target terminal device is a terminal device sending the first PSFCH, a terminal device receiving the first PSFCH, a terminal device sending a first Physical Sidelink Shared Channel (PSSCH), or a terminal device receiving the first PSSCH, the first PSSCH being associated with the first PSFCH.

3. The method of claim 1 or 2, wherein for one PSFCH transmission occasion, the at least one dedicated RB occupied by the first PSFCH is determined from a first candidate transmission resource set.

4. The method of claim 3, wherein

   transmission resources in the first candidate transmission resource set are indexed in an order of: at least one index of at least one available RB set in an ascending order, then indexes of interlaces in an ascending order, then indexes of resource block groups in an ascending order, and then indexes of code-domain resources in an ascending order; or
   transmission resources in the first candidate transmission resource set are indexed in an order of: indexes of interlaces in an ascending order, then indexes of resource block groups in an ascending order, then at least one index of at least one available RB set in an ascending order, and then indexes of code-domain resources in an ascending order; or
   transmission resources in the first candidate transmission resource set are indexed in an order of: indexes of interlaces in an ascending order, then at least one index of at least one available RB set in an ascending order, then indexes of resource block groups in an ascending order, and then indexes of code-domain resources in an ascending order; or

transmission resources in the first candidate transmission resource set are indexed in an order of: indexes of resource block groups in an ascending order, then indexes of interlaces in an ascending order, then at least one index of at least one available RB set in an ascending order, and then indexes of code-domain resources in an ascending order.

5. The method of claim 4, wherein the at least one available RB set is determined based on one or more of:

at least one RB set corresponding to transmission resources for a first PSSCH;
at least one RB set comprised in a resource pool corresponding to the first PSSCH; and
whether a transmission occasion corresponding to the first PSFCH is a first one of N PSFCH transmission occasions associated with the first PSSCH,
wherein the first PSSCH is associated with the first PSFCH.

6. The method of claim 5, wherein

if the transmission occasion corresponding to the first PSFCH is the first one of the N PSFCH transmission occasions, the at least one available RB set comprises the at least one RB set corresponding to the transmission resources for the first PSSCH; and/or
if the transmission occasion corresponding to the first PSFCH is not the first one of the N PSFCH transmission occasions, the at least one available RB set comprises the at least one RB set comprised in the resource pool.

7. The method of any one of claims 4 to 6, wherein a frequency-domain range of one interlace in the first candidate transmission resource set corresponds to a frequency-domain range of one interlace within one RB set.

8. The method of any one of claims 4 to 7, wherein interlaces in the first candidate transmission resource set do not comprise the common interlace.

9. The method of any one of claims 4 to 8, wherein interlaces available for PSFCH transmission that are configured for different RB sets in the resource pool are independently configured.

10. The method of any one of claims 4 to 9, wherein one resource block group corresponds to K3 RBs in one interlace, wherein K3 is equal to a number of the at least one dedicated RB, and K3 is a positive integer greater than or equal to 1.

11. The method of claim 10, wherein if one interlace comprises A RBs, a number of resource block groups comprised in one interlace is equal to $C_A^{K3}$ , wherein A is a positive integer greater than or equal to 1, and $C_A^{K3}$ represents a number of combinations formed by randomly selecting K3 elements from A elements.

12. The method of claim 10, wherein if one interlace comprises A RBs, a number of resource block groups comprised in one interlace is equal to floor(A/K3), wherein A is a positive integer greater than or equal to 1, and floor represents downward rounding.

13. The method of claim 10, wherein if one interlace comprises A RBs and K3=1, a number of resource block groups comprised in one interlace is equal to A, wherein A is a positive integer greater than or equal to 1.

14. The method of any one of claims 4 to 13, wherein if one RB set comprises a first interlace and a second interlace, a number of RBs comprised in the first interlace is the same as or different from a number of RBs comprised in the second interlace.

15. The method of any one of claims 4 to 14, wherein a number of the code-domain resources is determined based on one or more of:

a number of cyclic shift pairs that can be code-division-multiplexed within one RB; and
a number of resources that can be code-division-multiplexed among RBs comprised in one resource block group.

16. The method of any one of claims 3 to 15, wherein the at least one dedicated RB occupied by the first PSFCH is determined from the first candidate transmission resource set based on a first parameter, and the first parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;

a third parameter determined based on a number of subchannels, a number of interlaces, or a number of RBs comprised in the transmission resources for the first PSSCH;

a fourth parameter determined based on a slot index corresponding to the transmission resources for the first PSSCH;

a fifth parameter determined based on at least one index of at least one RB set corresponding to the transmission resources for the first PSSCH;

a sixth parameter determined based on a number of at least one RB set corresponding to the transmission resources for the first PSSCH;

a seventh parameter determined based on at least one index of at least one transmission occasion corresponding to the first PSFCH;

an eighth parameter determined based on a total number of at least one transmission occasion corresponding to the first PSFCH;

a ninth parameter determined based on first identification information, wherein the first identification information comprises second identification information and/or third identification information, the second identification information is determined based on a source identification comprised in first Sidelink Control Information (SCI) for scheduling the first PSSCH, and the third identification information is 0 or the third identification information is determined based on a member identification of the terminal device in a communication group; and

a tenth parameter determined based on a total number of resources comprised in the first candidate transmission resource set,

wherein the first PSSCH is associated with the first PSFCH.

17. The method of claim 1 or 2, wherein the at least one dedicated RB occupied by the first PSFCH is determined from a second candidate transmission resource set, and the second candidate transmission resource set is determined based on at least one index of at least one PSFCH transmission occasion.

18. The method of claim 17, wherein a number of transmission resources comprised in the second candidate transmission resource set is determined based on one or more of:

a first number determined based on a number of at least one first RB set available for PSFCH transmission;

a second number determined based on a number of interlaces available for the PSFCH transmission that are comprised in one RB in the at least one first RB set;

a third number determined based on a number of resource block groups available for the PSFCH transmission that are comprised in one interlace in the one RB set; and

a fourth number determined based on a number N of PSFCH transmission occasions.

19. The method of claim 18, wherein a number of transmission resources comprised in the second candidate transmission resource set is determined based on the first number and the fourth number.

20. The method of claim 18 or 19, wherein the number $L_0$ of RB sets comprised in the second candidate transmission resource set satisfies: $L_0 = A/N$ or $L_0 = floor(A/N)$, wherein A represents the first number and floor representing downward rounding.

21. The method of any one of claims 17 to 20, wherein determination of the second candidate transmission resource set based on at least one index of at least one PSFCH transmission occasion comprises:

determining at least one RB set available for transmission of the first PSFCH based on the at least one index of the at least one PSFCH transmission occasion, wherein the at least one RB set constitutes the second candidate transmission resource set.

22. The method of claim 21, wherein

transmission resources in the second candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or

transmission resources in the second candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or

transmission resources in the second candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or

transmission resources in the second candidate transmission resource set are indexed in an order of: indexes of resource block groups in an ascending order, then indexes of interlaces in an ascending order, then at least one index of the at least one RB set in an ascending order, and then indexes of code-domain resources in an ascending order.

23. The method of claim 18, wherein a number of transmission resources comprised in the second candidate transmission resource set is determined based on the first number, the second number, and the fourth number.

24. The method of claim 18 or 23, wherein a number $L_1$ of interlaces comprised in the second candidate transmission resource set satisfies: $L_1 = \text{floor}(\frac{\sum_{a=0}^{A-1} B_a}{N})$ , wherein A represents the first number, $B_a$ represents the second number, N represents the fourth number, floor represents downward rounding, and a is an integer and is in a value range of [0, A-1].

25. The method of claim 17, 18, 23, or 24, wherein determination of the second candidate transmission resource set based on at least one index of at least one PSFCH transmission occasion comprises:
determining at least one interlace available for transmission of the first PSFCH based on the at least one index of the at least one PSFCH transmission occasion, wherein the at least one interlace constitutes the second candidate transmission resource set.

26. The method of claim 25, wherein

transmission resources in the second candidate transmission resource set are indexed in an order of: indexes of the interlaces in an ascending order, then indexes of resource block groups in an ascending order, and then indexes of code-domain resources in an ascending order; or

transmission resources in the second candidate transmission resource set are indexed in an order of: indexes of resource block groups in an ascending order, then indexes of the interlaces in an ascending order, and then indexes of code-domain resources in an ascending order.

27. The method of claim 18, wherein a number of transmission resources comprised in the second candidate transmission resource set is determined based on the first number, the second number, the third number, and the fourth number.

28. The method of claim 27, wherein a number $L_2$ of resource block groups comprised in the second candidate transmission resource set satisfies: $L_2 = \text{floor}(\frac{\sum_{a=0}^{A-1} \sum_{b=0}^{B_a-1} C_{a,b}}{N})$ , wherein A represents the first number, $B_a$ represents the second number, $C_{a,b}$ represents the third number, N represents the fourth number, floor represents downward rounding, both a and b are integers, a is in a value range of [0, A-1], and b is in a value range of [0, $B_a$-1].

29. The method of claim 17, 18, 27 or 28, wherein determination of the second candidate transmission resource set based on at least one index of at least one PSFCH transmission occasion comprises:
determining at least one resource block group available for transmission of the first PSFCH based on the at least one index of the at least one PSFCH transmission occasion, wherein the at least one resource block group constitutes the second candidate transmission resource set.

30. The method of claim 29, wherein
transmission resources in the second candidate transmission resource set are indexed in an order of: indexes of the resource block groups in an ascending order, and then indexes of code-domain resources in an ascending order.

31. The method of any one of claims 17 to 30, wherein the at least one dedicated RB occupied by the first PSFCH is determined from the second candidate transmission resource set based on a twenty-first parameter, and the twenty-first parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;
a third parameter determined based on a number of subchannels, a number of interlaces, or a number of RBs comprised in the transmission resources for the first PSSCH;
a fourth parameter determined based on a slot index corresponding to the transmission resources for the first PSSCH;
a fifth parameter determined based on at least one index of at least one RB set corresponding to the transmission resources for the first PSSCH;
a sixth parameter determined based on a number of at least one RB set corresponding to the transmission resources for the first PSSCH;
a seventh parameter determined based on at least one index of at least one transmission occasion corresponding to the first PSFCH;
an eighth parameter determined based on a total number of at least one transmission occasion corresponding to the first PSFCH;
a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and
an eleventh parameter determined based on a total number of resources comprised in the second candidate transmission resource set,
wherein the first PSSCH is associated with the first PSFCH.

32. The method of claim 31, wherein determination of the at least one dedicated RB occupied by the first PSFCH from the second candidate transmission resource set based on the twenty-first parameter comprises:
determining the at least one dedicated RB occupied by the first PSFCH based on an index of the transmission resources for the first PSFCH, wherein the index is determined from the second candidate transmission resource set based on the twenty-first parameter.

33. The method of claim 17, wherein the at least one dedicated RB occupied by the first PSFCH is determined from a third candidate transmission resource set, and the third candidate transmission resource set is determined from the second candidate transmission resource set.

34. The method of claim 33, wherein the third candidate transmission resource set is determined from the second candidate transmission resource set based on a twelfth parameter, and the twelfth parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;
a third parameter determined based on a number of subchannels, a number of interlaces, or a number of RBs comprised in the transmission resources for the first PSSCH;
a fourth parameter determined based on a slot index corresponding to the transmission resources for the first PSSCH;
a fifth parameter determined based on at least one index of at least one RB set corresponding to the transmission resources for the first PSSCH;
a sixth parameter determined based on a number of at least one RB set corresponding to the transmission resources for the first PSSCH; and
an eleventh parameter determined based on a total number of resources comprised in the second candidate transmission resource set.

35. The method of any one of claims 33 to 34, wherein the at least one dedicated RB occupied by the first PSFCH is determined from the third candidate transmission resource set based on a thirteenth parameter, and the thirteenth parameter comprises one or more of:

a third parameter determined based on a number of subchannels, a number of interlaces, or a number of RBs comprised in the transmission resources for the first PSSCH;

a fifth parameter determined based on at least one index of at least one RB set corresponding to the transmission resources for the first PSSCH;

a sixth parameter determined based on a number of at least one RB set corresponding to the transmission resources for the first PSSCH;

a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and

a fourteenth parameter determined based on a total number of resources comprised in the third candidate transmission resource set.

36. The method of claim 34 or 35, wherein determination of the second candidate transmission resource set based on at least one index of at least one PSFCH transmission occasion comprises:

determining at least one RB set available for transmission of the first PSFCH based on the at least one index of the at least one PSFCH transmission occasion, wherein the at least one RB set constitutes the second candidate transmission resource set,

determination of the third candidate transmission resource set from the second candidate transmission resource set based on the twelfth parameter comprises:

determining at least one interlace available for transmission of the first PSFCH from the second candidate transmission resource set based on the twelfth parameter, wherein the at least one interlace constitutes the third candidate transmission resource set.

37. The method of claim 36, wherein

transmission resources in the second candidate transmission resources are indexed in an order of: at least one index of the at least one RB set in an ascending order, and then indexes of interlaces in an ascending order, or transmission resources in the second candidate transmission resources are indexed in an order of: indexes of interlaces in an ascending order, and then at least one index of the at least one RB set in an ascending order.

38. The method of claim 36 or 37, wherein

transmission resources in the third candidate transmission resources are indexed in an order of: indexes of interlaces in an ascending order, then indexes of resource block groups in an ascending order, and then indexes of code-domain resources in an ascending order; or

transmission resources in the third candidate transmission resources are indexed in an order of: indexes of resource block groups in an ascending order, then indexes of interlaces in an ascending order, and then indexes of code-domain resources in an ascending order.

39. The method of claim 34 or 35, wherein determination of the second candidate transmission resource set based on at least one index of at least one PSFCH transmission occasion comprises:

determining at least one RB set available for transmission of the first PSFCH based on the at least one index of the at least one PSFCH transmission occasion, wherein the at least one RB set constitutes the second candidate transmission resource set; and

determination of the third candidate transmission resource set from the second candidate transmission resource set based on the twelfth parameter comprises:

determining at least one resource block group available for transmission of the first PSFCH from the second candidate transmission resource set based on the twelfth parameter, wherein the at least one resource block group constitutes the third candidate transmission resource set.

40. The method of claim 39, wherein

transmission resources in the second candidate transmission resources are indexed in an order of: at least one index of the at least one RB set in an ascending order, then indexes of interlaces in an ascending order, and then indexes of the resource block groups in an ascending order; or

transmission resources in the second candidate transmission resources are indexed in an order of: indexes of the resource block groups in an ascending order, then indexes of interlaces in an ascending order, and then at least one index of the at least one RB set in an ascending order; or

transmission resources in the second candidate transmission resources are indexed in an order of: indexes of interlaces in an ascending order, then at least one index of the at least one RB set in an ascending order, and then indexes of the resource block groups in an ascending order; or

transmission resources in the second candidate transmission resources are indexed in an order of: indexes of interlaces in an ascending order, then indexes of the resource block groups in an ascending order, and then at least one index of the at least one RB set in an ascending order.

41. The method of claim 39 or 40, wherein

transmission resources in the third candidate transmission resources are indexed in an order of: indexes of resource block groups in an ascending order, and then indexes of code-domain resources in an ascending order.

42. The method of claim 34 or 35, wherein determination of the second candidate transmission resource set based on at least one index of at least one PSFCH transmission occasion comprises:

determining at least one interlace available for transmission of the first PSFCH based on the at least one index of the at least one PSFCH transmission occasion, wherein the at least one interlace constitutes the second candidate transmission resource set;

determination of the third candidate transmission resource set from the second candidate transmission resource set based on the twelfth parameter comprises:

determining at least one interlace available for transmission of the first PSFCH from the second candidate transmission resource set based on the twelfth parameter, wherein the at least one interlace constitutes the third candidate transmission resource set.

43. The method of claim 42, wherein the second candidate transmission resource set is indexed according to indexes of the interlaces in an ascending order.

44. The method of claim 42 or 43, wherein

transmission resources in the third candidate transmission resource set are indexed in an order of: indexes of the interlaces in an ascending order, then indexes of resource block groups in an ascending order, and then indexes of code-domain resources in an ascending order; or

transmission resources in the third candidate transmission resources are indexed in an order of: indexes of resource block groups in an ascending order, then indexes of interlaces in an ascending order, and then indexes of code-domain resources in an ascending order.

45. The method of claim 34 or 35, wherein determination of the second candidate transmission resource set based on at least one index of at least one PSFCH transmission occasion comprises:

determining at least one interlace available for transmission of the first PSFCH based on the at least one index of the at least one PSFCH transmission occasion, wherein the at least one interlace constitutes the second candidate transmission resource set;

determination of the third candidate transmission resource set from the second candidate transmission resource set based on the twelfth parameter comprises:

determining at least one resource block group available for transmission of the first PSFCH from the second candidate transmission resource set based on the twelfth parameter, wherein the at least one resource block group constitutes the third candidate transmission resource set.

46. The method of claim 45, wherein

transmission resources in the second candidate transmission resources are indexed in an order of: indexes of interlaces in an ascending order, and then indexes of resource block groups in an ascending order; or

transmission resources in the second candidate transmission resources are indexed in an order of: indexes of resource block groups in an ascending order, and then indexes of interlaces in an ascending order.

47. The method of claim 45 or 46, wherein
transmission resources in the third candidate transmission resources are indexed in an order of: indexes of resource block groups in an ascending order, and then indexes of code-domain resources in an ascending order.

48. The method of claim 34 or 35, wherein determination of the second candidate transmission resource set based on at least one index of at least one PSFCH transmission occasion comprises:

determining at least one resource block group available for transmission of the first PSFCH based on the at least one index of the at least one PSFCH transmission occasion, wherein the at least one resource block group constitutes the second candidate transmission resource set; and
determination of the third candidate transmission resource set from the second candidate transmission resource set based on the twelfth parameter comprises:
determining at least one resource block group available for transmission of the first PSFCH from the second candidate transmission resource set based on the twelfth parameter, wherein the at least one resource block group constitutes the third candidate transmission resource set.

49. The method of claim 48, wherein
transmission resources in the second candidate transmission resources are indexed according to indexes of resource block groups in an ascending order.

50. The method of claim 48 or 49, wherein
transmission resources in the third candidate transmission resources are indexed in an order of: indexes of resource block groups in an ascending order, and then indexes of code-domain resources in an ascending order.

51. The method of any one of claims 38, 41, 44, 47, or 50, wherein determination of the at least one dedicated RB occupied by the first PSFCH from the third candidate transmission resource set based on the thirteenth parameter comprises:
determining the at least one dedicated RB occupied by the first PSFCH based on an index of the transmission resources for the first PSFCH, wherein the index is determined from the third candidate transmission resource set based on the thirteenth parameter.

52. The method of any one of claims 1 to 2, wherein the at least one dedicated RB occupied by the first PSFCH is determined from a fourth candidate transmission resource set, the fourth candidate transmission resource set is determined based on a fifteenth parameter, and the fifteenth parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;
a third parameter determined based on a number of subchannels, a number of interlaces, or a number of RBs comprised in the transmission resources for the first PSSCH;
a fourth parameter determined based on a slot index corresponding to the transmission resources for the first PSSCH;
a fifth parameter determined based on at least one index of at least one RB set corresponding to the transmission resources for the first PSSCH; and
a sixth parameter determined based on a number of at least one RB set corresponding to the transmission resources for the first PSSCH,
wherein the first PSSCH is associated with the first PSFCH.

53. The method of claim 52, wherein determination of the fourth candidate transmission resource set based on the fifteenth parameter comprises:
determining at least one RB set available for transmission of the first PSFCH based on the fifteenth parameter, wherein the at least one RB set constitutes the fourth candidate transmission resource set.

54. The method of claim 53, wherein

transmission resources in the fourth candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or

transmission resources in the fourth candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or

transmission resources in the fourth candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or

transmission resources in the fourth candidate transmission resource set are indexed in an order of: indexes of resource block groups in an ascending order, then indexes of interlaces in an ascending order, then at least one index of the at least one RB set in an ascending order, and then indexes of code-domain resources in an ascending order.

55. The method of claim 52, wherein determination of the fourth candidate transmission resource set based on the fifteenth parameter comprises:
determining at least one interlace available for transmission of the first PSFCH based on the fifteenth parameter, wherein the one or more interlaces constitute the fourth candidate transmission resource set.

56. The method of claim 55, wherein

transmission resources in the fourth candidate transmission resource set are indexed in an order of: indexes of interlaces in an ascending order, then indexes of resource block groups in an ascending order, and then indexes of code-domain resources in an ascending order; or

transmission resources in the fourth candidate transmission resource set are indexed in an order of: indexes of resource block groups in an ascending order, then indexes of interlaces in an ascending order, and then indexes of code-domain resources in an ascending order.

57. The method of claim 52, wherein determination of the fourth candidate transmission resource set based on the fifteenth parameter comprises:

determining at least one resource block group available for transmission of the first PSFCH based on the fifteenth parameter, wherein the at least one resource block group constitutes the fourth candidate transmission resource set.

58. The method of claim 57, wherein
transmission resources in the fourth candidate transmission resource set are indexed in an order of: indexes of resource block groups in an ascending order, and then indexes of code-domain resources in an ascending order.

59. The method of any one of claims 52 to 58, wherein the at least one dedicated RB occupied by the first PSFCH is determined from the fourth candidate transmission resource set based on a sixteenth parameter, and the sixteenth parameter comprises one or more of:

a third parameter determined based on a number of subchannels, a number of interlaces, or a number of RBs comprised in the transmission resources for the first PSSCH;
a fifth parameter determined based on at least one index of at least one RB set corresponding to the transmission resources for the first PSSCH;
a sixth parameter determined based on a number of at least one RB set corresponding to the transmission resources for the first PSSCH,
a seventh parameter determined based on at least one index of at least one transmission occasion corresponding to the first PSFCH;
an eighth parameter determined based on a total number of at least one transmission occasion corresponding to the first PSFCH;
a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and
a seventeenth parameter determined based on a total number of resources comprised in the fourth candidate transmission resource set,
wherein the first PSSCH is associated with the first PSFCH.

60. The method of claim 59, wherein determination of the at least one dedicated RB occupied by the first PSFCH from the fourth candidate transmission resource set based on the sixteenth parameter comprises:
determining an index corresponding to the transmission resources for the first PSFCH from the fourth candidate transmission resource set based on the sixteenth parameter, and determining the at least one dedicated RB occupied by the first PSFCH based on the index.

61. The method of claim 52, wherein the at least one dedicated RB occupied by the first PSFCH is determined from a fifth candidate transmission resource set, and the fifth candidate transmission resource set is determined from the fourth candidate transmission resource set.

62. The method of claim 61, wherein the fifth candidate transmission resource set is determined from the fourth candidate transmission resource set based on an eighteenth parameter, and the eighteenth parameter comprises one or more of:

a seventh parameter determined based on at least one index of at least one transmission occasion corresponding to the first PSFCH;
an eighth parameter determined based on a total number of at least one transmission occasion corresponding to the first PSFCH; and
a seventeenth parameter determined based on a total number of resources comprised in the fourth candidate transmission resource set.

63. The method of any one of claims 61 to 62, wherein the at least one dedicated RB occupied by the first PSFCH is determined from the fifth candidate transmission resource set based on a nineteenth parameter, and the nineteenth parameter comprises one or more of:

a third parameter determined based on a number of subchannels, a number of interlaces, or a number of RBs comprised in the transmission resources for the first PSSCH;
a fifth parameter determined based on at least one index of at least one RB set corresponding to the transmission resources for the first PSSCH;
a sixth parameter determined based on a number of at least one RB set corresponding to the transmission resources for the first PSSCH,
a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and
a twentieth parameter determined based on a total number of resources comprised in the fifth candidate transmission resource set.

64. The method of claim 62 or 63, wherein determination of the fourth candidate transmission resource set based on the fifteenth parameter comprises:

determining at least one RB set available for transmission of the first PSFCH based on the fifteenth parameter, wherein the at least one RB set constitutes the fourth candidate transmission resource set; and
determination of the fifth candidate transmission resource set from the fourth candidate transmission resource set based on the eighteenth parameter comprises:
determining at least one interlace available for transmission of the first PSFCH from the fourth candidate transmission resource set based on the eighteenth parameter, wherein the at least one interlace constitutes the fifth candidate transmission resource set.

65. The method of claim 64, wherein

transmission resources in the fourth candidate transmission resources are indexed in an order of: at least one index of the at least one RB set in an ascending order, and then indexes of interlaces in an ascending order, or transmission resources in the fourth candidate transmission resources are indexed in an order of: indexes of interlaces in an ascending order, and then at least one index of the at least one RB set in an ascending order.

66. The method of claim 64 or 65, wherein

transmission resources in the fifth candidate transmission resources are indexed in an order of: indexes of interlaces in an ascending order, then indexes of resource block groups in an ascending order, and then indexes of code-domain resources in an ascending order; or
transmission resources in the fifth candidate transmission resources are indexed in an order of: indexes of resource block groups in an ascending order, then indexes of interlaces in an ascending order, and then indexes of code-domain resources in an ascending order.

67. The method of claim 62 or 63, wherein determination of the fourth candidate transmission resource set based on the fifteenth parameter comprises:

determining at least one RB set available for transmission of the first PSFCH based on the fifteenth parameter, wherein the at least one RB set constitutes the fourth candidate transmission resource set; and
determination of the fifth candidate transmission resource set from the fourth candidate transmission resource set based on the eighteenth parameter comprises:
determining at least one resource block group available for transmission of the first PSFCH from the fourth candidate transmission resource set based on the eighteenth parameter, wherein the at least one resource block group constitutes the fifth candidate transmission resource set.

68. The method of claim 67, wherein

transmission resources in the fourth candidate transmission resources are indexed in an order of: at least one index of the at least one RB set in an ascending order, then indexes of interlaces in an ascending order, and then indexes of resource block groups in an ascending order; or
transmission resources in the fourth candidate transmission resources are indexed in an order of: indexes of resource block groups in an ascending order, then indexes of interlaces in an ascending order, and then at least one index of the at least one RB set in an ascending order; or
transmission resources in the fourth candidate transmission resources are indexed in an order of: indexes of interlaces in an ascending order, then at least one index of the at least one RB set in an ascending order, and then indexes of resource block groups in an ascending order; or
transmission resources in the fourth candidate transmission resources are indexed in an order of: indexes of interlaces in an ascending order, then indexes of resource block groups in an ascending order, and then at least one index of the at least one RB set in an ascending order.

69. The method of claim 67 or 68, wherein
transmission resources in the fifth candidate transmission resources are indexed in an order of: indexes of resource block groups in an ascending order, and then indexes of code-domain resources in an ascending order.

70. The method of claim 62 or 63, wherein determination of the fourth candidate transmission resource set based on the fifteenth parameter comprises:

determining at least one interlace available for transmission of the first PSFCH based on the fifteenth parameter, wherein the one or more interlaces constitute the fourth candidate transmission resource set; and
determination of the fifth candidate transmission resource set from the fourth candidate transmission resource set based on the eighteenth parameter comprises:
determining at least one interlace available for transmission of the first PSFCH from the fourth candidate transmission resource set based on the eighteenth parameter, wherein the at least one interlace constitutes the fifth candidate transmission resource set.

71. The method of claim 70, wherein
transmission resources in the fourth candidate transmission resources are indexed according to indexes of interlaces in an ascending order.

**72.** The method of claim 70 or 71, wherein

transmission resources in the fifth candidate transmission resources are indexed in an order of: indexes of interlaces in an ascending order, then indexes of resource block groups in an ascending order, and then indexes of code-domain resources in an ascending order; or

transmission resources in the fifth candidate transmission resources are indexed in an order of: indexes of resource block groups in an ascending order, then indexes of interlaces in an ascending order, and then indexes of code-domain resources in an ascending order.

**73.** The method of claim 62 or 63, wherein determination of the fourth candidate transmission resource set based on the fifteenth parameter comprises:

determining at least one interlace available for transmission of the first PSFCH based on the fifteenth parameter, wherein the one or more interlaces constitute the fourth candidate transmission resource set; and

determination of the fifth candidate transmission resource set from the fourth candidate transmission resource set based on the eighteenth parameter comprises:

determining at least one resource block group available for transmission of the first PSFCH from the fourth candidate transmission resource set based on the eighteenth parameter, wherein the at least one resource block group constitutes the fifth candidate transmission resource set.

**74.** The method of claim 73, wherein

transmission resources in the fourth candidate transmission resources are indexed in an order of: indexes of interlaces in an ascending order, and then indexes of resource block groups in an ascending order; or

transmission resources in the fourth candidate transmission resources are indexed in an order of: indexes of resource block groups in an ascending order, and then indexes of interlaces in an ascending order.

**75.** The method of claim 73 or 74, wherein
transmission resources in the fifth candidate transmission resources are indexed in an order of: indexes of resource block groups in an ascending order, and then indexes of code-domain resources in an ascending order.

**76.** The method of claim 62 or 63, wherein determination of the fourth candidate transmission resource set based on the fifteenth parameter comprises:

determining at least one resource block group available for transmission of the first PSFCH based on the fifteenth parameter, wherein the at least one resource block group constitutes the fourth candidate transmission resource set; and

determination of the fifth candidate transmission resource set from the fourth candidate transmission resource set based on the eighteenth parameter comprises:

determining at least one resource block group available for transmission of the first PSFCH from the fourth candidate transmission resource set based on the eighteenth parameter, wherein the at least one resource block group constitutes the fifth candidate transmission resource set.

**77.** The method of claim 76, wherein
transmission resources in the fourth candidate transmission resources are indexed according to indexes of resource block groups in an ascending order.

**78.** The method of claim 76 or 77, wherein
transmission resources in the fifth candidate transmission resources are indexed in an order of: indexes of resource block groups in an ascending order, and then indexes of code-domain resources in an ascending order.

**79.** The method of any one of claims 66, 69, 72, 75 or 78, wherein determination of the transmission resource occupied by the first PSFCH from the fifth candidate transmission resource set based on the nineteenth parameter comprises: determining an index corresponding to the transmission resources for the first PSFCH from the fifth candidate transmission resource set based on the nineteenth parameter, and determining the at least one dedicated RB occupied by the first PSFCH based on the index.

**80.** The method of any one of claims 1 to 79, wherein in a case where the first terminal device determines transmission resources for a second PSFCH, if the at least one RB set where the transmission resources for the first PSFCH are located is the same as at least one RB set where the transmission resources for the second PSFCH are located, the common interlace comprised in the transmission resources for the first PSFCH is the same as a common interlace comprised in the transmission resources for the second PSFCH.

81. The method of any one of claims 1 to 80, wherein a first PSSCH is associated with the first PSFCH, transmission resources for the first PSSCH comprises a second RB set, and determining, by the first terminal device, the transmission resources for the first PSFCH comprises:
   determining, by the first terminal device, the transmission resources for the first PSFCH in the second RB set.

82. The method of claim 81, wherein determining, by the first terminal device, the transmission resources for the first PSFCH in the second RB set comprises:
   determining, by the first terminal device, the transmission resources for the first PSFCH in the second RB set based on one or more of following parameters:

   index information corresponding to the second RB set;
   an index corresponding to a first subchannel of transmission resources for the first PSSCH in the second RB set, an index corresponding to a first interlace of the transmission resources for the first PSSCH in the second RB set, or an index corresponding to a first RB of the transmission resources for the first PSSCH in the second RB set;
   a number of subchannels, a number of interlaces, or a number of RBs comprised in the transmission resources for the first PSSCH in the second RB set;
   an index of a slot corresponding to the transmission resources for the first PSSCH;
   an index of a transmission occasion corresponding to the first PSFCH;
   a total number of at least one transmission occasion corresponding to the first PSFCH; and
   first identification information,
   wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group.

83. The method of claim 81 or 82, wherein the second RB set is a first one of at least one RB set corresponding to the transmission resources for the first PSSCH.

84. The method of any one of claims 81 to 83, wherein the transmission resources for the first PSSCH comprises a third RB set, and determining, by the first terminal device, the transmission resources for the first PSFCH comprises:
   determining, by the first terminal device, the transmission resources for the first PSFCH in the third RB set.

85. The method of claim 84, wherein determining, by the first terminal device, the transmission resources for the first PSFCH in the third RB set comprises:
   if the first terminal device has no PSFCH to be sent in the third RB set within time-domain resources corresponding to the transmission resources for the first PSFCH, determining, by the first terminal device, the transmission resources for the first PSFCH in the third RB set.

86. The method of any one of claims 81 to 83, wherein if the transmission resources for the first PSSCH corresponds to a plurality of RB sets, determining, by the first terminal device, the transmission resources for the first PSFCH in each of the plurality of RB sets respectively.

87. The method of any one of claims 81 to 83, wherein the transmission resources for the first PSSCH further comprises a third RB set, and the method further comprises:

   determining, by the first terminal device, transmission resources for a third PSFCH in the third RB set,
   wherein the transmission resources for the third PSFCH comprise a common interlace in the third RB set, and time-domain resources for the third PSFCH are the same as time-domain resources for the first PSFCH.

88. The method of claim 87, wherein determining, by the first terminal device, the transmission resources for the third PSFCH in the third RB set comprise:
   if the first terminal device has no PSFCH to be sent in the third RB set within time-domain resources corresponding to the transmission resources for the first PSFCH, determining, by the first terminal device, the transmission resources for the third PSFCH in the third RB set.

89. The method of claim 87 or 88, further comprising:
sending, by the first terminal device, the first PSFCH and the third PSFCH.

90. A terminal device, wherein the terminal device is a first terminal device and comprises:

a determining unit, configured to determine transmission resources for a first Physical Sidelink Feedback Channel (PSFCH),
wherein the transmission resources for the first PSFCH comprise one or more of:

a common interlace occupied by the first PSFCH; and
at least one dedicated Resource Block (RB) occupied by the first PSFCH.

91. The terminal device of claim 90, wherein the common interlace is determined based on one or more of:

information predefined in a protocol;
pre-configuration information;
configuration information of a network device; and
indication information sent by a target terminal device,
wherein the target terminal device is a terminal device sending the first PSFCH, a terminal device receiving the first PSFCH, a terminal device sending a first Physical Sidelink Shared Channel (PSSCH), or a terminal device receiving the first PSSCH, the first PSSCH being associated with the first PSFCH.

92. The terminal device of claim 90 or 91, wherein for one PSFCH transmission occasion, the at least one dedicated RB occupied by the first PSFCH is determined from a first candidate transmission resource set.

93. The terminal device of claim 92, wherein

transmission resources in the first candidate transmission resource set are indexed in an order of: at least one index of at least one available RB set in an ascending order, then indexes of interlaces in an ascending order, then indexes of resource block groups in an ascending order, and then indexes of code-domain resources in an ascending order; or
transmission resources in the first candidate transmission resource set are indexed in an order of: indexes of interlaces in an ascending order, then indexes of resource block groups in an ascending order, then at least one index of at least one available RB set in an ascending order, and then indexes of code-domain resources in an ascending order; or
transmission resources in the first candidate transmission resource set are indexed in an order of: indexes of interlaces in an ascending order, then at least one index of at least one available RB set in an ascending order, then indexes of resource block groups in an ascending order, and then indexes of code-domain resources in an ascending order; or
transmission resources in the first candidate transmission resource set are indexed in an order of: indexes of resource block groups in an ascending order, then indexes of interlaces in an ascending order, then at least one index of at least one available RB set in an ascending order, and then indexes of code-domain resources in an ascending order.

94. The terminal device of claim 93, wherein the at least one available RB set is determined based on one or more of:

at least one RB set corresponding to transmission resources for a first PSSCH;
at least one RB set comprised in a resource pool corresponding to the first PSSCH; and
whether a transmission occasion corresponding to the first PSFCH is a first one of N PSFCH transmission occasions associated with the first PSSCH,
wherein the first PSSCH is associated with the first PSFCH.

95. The terminal device of claim 94, wherein

if the transmission occasion corresponding to the first PSFCH is the first one of the N PSFCH transmission occasions, the at least one available RB set comprises the at least one RB set corresponding to the transmission resources for the first PSSCH; and/or

if the transmission occasion corresponding to the first PSFCH is not the first one of the N PSFCH transmission occasions, the at least one available RB set comprises the at least one RB set comprised in the resource pool.

96. The terminal device of any one of claims 93 to 95, wherein a frequency-domain range of one interlace in the first candidate transmission resource set corresponds to a frequency-domain range of one interlace within one RB set.

97. The terminal device of any one of claims 93 to 96, wherein interlaces in the first candidate transmission resource set comprise no common interlace.

98. The terminal device of any one of claims 93 to 97, wherein interlaces available for PSFCH transmission that are configured for different RB sets in the resource pool are independently configured.

99. The terminal device of any one of claims 93 to 98, wherein one resource block group corresponds to K3 RBs in one interlace, wherein K3 is equal to a number of the at least one dedicated RB, and K3 is a positive integer greater than or equal to 1.

100.
The terminal device of claim 99, wherein if one interlace comprises A RBs, a number of resource block groups comprised in one interlace is equal to $C_A^{K3}$, wherein A is a positive integer greater than or equal to 1, and $C_A^{K3}$ represents a number of combinations formed by randomly selecting K3 elements from A elements.

101.
The terminal device of claim 99, wherein if one interlace comprises A RBs, a number of resource block groups comprised in one interlace is equal to floor(A/K3), wherein A is a positive integer greater than or equal to 1, and floor represents downward rounding.

102.
The terminal device of claim 99, wherein if one interlace comprises A RBs and K3=1, a number of resource block groups comprised in one interlace is equal to A, wherein A is a positive integer greater than or equal to 1.

103.
The terminal device of any one of claims 93 to 102, wherein if one RB set comprises a first interlace and a second interlace, a number of RBs comprised in the first interlace is the same as or different from a number of RBs comprised in the second interlace.

104.
The terminal device of any one of claims 93 to 103, wherein a number of the code-domain resources is determined based on one or more of:

a number of cyclic shift pairs that can be code-division-multiplexed within one RB; and
a number of resources that can be code-division-multiplexed among RBs comprised in one resource block group.

105.
The terminal device of any one of claims 92 to 104, wherein the at least one dedicated RB occupied by the first PSFCH is determined from the first candidate transmission resource set based on a first parameter, and the first parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;
a third parameter determined based on a number of subchannels, a number of interlaces, or a number of RBs comprised in the transmission resources for the first PSSCH;
a fourth parameter determined based on a slot index corresponding to the transmission resources for the first PSSCH;
a fifth parameter determined based on at least one index of at least one RB set corresponding to the transmission resources for the first PSSCH;

a sixth parameter determined based on a number of at least one RB set corresponding to the transmission resources for the first PSSCH,

a seventh parameter determined based on at least one index of at least one transmission occasion corresponding to the first PSFCH;

an eighth parameter determined based on a total number of at least one transmission occasion corresponding to the first PSFCH;

a ninth parameter determined based on first identification information, wherein the first identification information comprises second identification information and/or third identification information, the second identification information is determined based on a source identification comprised in first Sidelink Control Information (SCI) for scheduling the first PSSCH, and the third identification information is 0 or the third identification information is determined based on a member identification of the terminal device in a communication group; and

a tenth parameter determined based on a total number of resources comprised in the first candidate transmission resource set,

wherein the first PSSCH is associated with the first PSFCH.

106.

The terminal device of claim 90 or 91, wherein the at least one dedicated RB occupied by the first PSFCH is determined from a second candidate transmission resource set, and the second candidate transmission resource set is determined based on at least one index of at least one PSFCH transmission occasion.

107.

The terminal device of claim 106, wherein a number of transmission resources comprised in the second candidate transmission resource set is determined based on one or more of:

a first number determined based on a number of at least one first RB set available for PSFCH transmission;

a second number determined based on a number of interlaces available for the PSFCH transmission that are comprised in one RB in the at least one first RB set;

a third number determined based on a number of resource block groups available for the PSFCH transmission that are comprised in one interlace in the one RB set; and

a fourth number determined based on a number N of PSFCH transmission occasions.

108.

The terminal device of claim 107, wherein a number of transmission resources comprised in the second candidate transmission resource set is determined based on the first number and the fourth number.

109.

The terminal device of claim 107 or 108, wherein the number $L_0$ of RB sets comprised in the second candidate transmission resource set satisfies: $L_0 = A/N$ or $L_0 = \text{floor}(A/N)$, wherein A represents the first number and floor representing downward rounding.

110.

The terminal device of any one of claims 106 to 109, wherein determination of the second candidate transmission resource set based on at least one index of at least one PSFCH transmission occasion comprises:

determining at least one RB set available for transmission of the first PSFCH based on the at least one index of the at least one PSFCH transmission occasion, wherein the at least one RB set constitutes the second candidate transmission resource set.

111. The terminal device of claim 110, wherein

transmission resources in the second candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or

transmission resources in the second candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or

transmission resources in the second candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or

transmission resources in the second candidate transmission resource set are indexed in an order of: indexes of resource block groups in an ascending order, then indexes of interlaces in an ascending order, then at least one index of the at least one RB set in an ascending order, and then indexes of code-domain resources in an ascending order.

**112.**

The terminal device of claim 107, wherein a number of transmission resources comprised in the second candidate transmission resource set is determined based on the first number, the second number, and the fourth number.

**113.**

The terminal device of claim 107 or 112, wherein a number $L_1$ of interlaces comprised in the second candidate transmission resource set satisfies: $L_1 = \text{floor}(\frac{\sum_{a=0}^{A-1} B_a}{N})$ , wherein A represents the first number, $B_a$ represents the second number, N represents the fourth number, floor represents downward rounding, and a is an integer and is in a value range of [0, A-1].

**114.**

The terminal device of claim 106, 107, 112, or 113, wherein determination of the second candidate transmission resource set based on at least one index of at least one PSFCH transmission occasion comprises:

determining at least one interlace available for transmission of the first PSFCH based on the at least one index of the at least one PSFCH transmission occasion, wherein the at least one interlace constitutes the second candidate transmission resource set.

**115.**

The terminal device of claim 114, wherein

transmission resources in the second candidate transmission resource set are indexed in an order of: indexes of interlaces in an ascending order, then indexes of resource block groups in an ascending order, and then indexes of code-domain resources in an ascending order; or

transmission resources in the second candidate transmission resource set are indexed in an order of: indexes of resource block groups in an ascending order, then indexes of interlaces in an ascending order, and then indexes of code-domain resources in an ascending order.

**116.**

The terminal device of claim 107, wherein a number of transmission resources comprised in the second candidate transmission resource set is determined based on the first number, the second number, the third number, and the fourth number.

**117.**

The terminal device of claim 116, wherein a number $L_2$ of resource block groups comprised in the second candidate transmission resource set satisfies: $L_2 = \text{floor}(\frac{\sum_{a=0}^{A-1} \sum_{b=0}^{B_a-1} C_{a,b}}{N})$ , wherein A represents the first number, $B_a$ represents the second number, $C_{a,b}$ represents the third number, N represents the fourth number, floor represents downward rounding, both a and b being are integers, a is in a value range of [0, A-1], and b is in a value range of [0, $B_a$-1].

**118.**

The terminal device of claim 106, 107, 116, or 117, wherein determination of the second candidate transmission resource set based on at least one index of at least one PSFCH transmission occasion comprises:

determining at least one resource block group available for transmission of the first PSFCH based on the at least one index of the at least one PSFCH transmission occasion, wherein the at least one resource block group constitutes the second candidate transmission resource set.

**119.**

The terminal device of claim 118, wherein

transmission resources in the second candidate transmission resource set are indexed in an order of: indexes of resource block groups in an ascending order, and then indexes of code-domain resources in an ascending order.

**120.**

The terminal device of any one of claims 106 to 119, wherein the at least one dedicated RB occupied by the first PSFCH is determined from the second candidate transmission resource set based on a twenty-first parameter, and the twenty-first parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;

a third parameter determined based on a number of subchannels, a number of interlaces, or a number of RBs comprised in the transmission resources for the first PSSCH;

a fourth parameter determined based on a slot index corresponding to the transmission resources for the first PSSCH;

a fifth parameter determined based on at least one index of at least one RB set corresponding to the transmission resources for the first PSSCH;

a sixth parameter determined based on a number of at least one RB set corresponding to the transmission resources for the first PSSCH,

a seventh parameter determined based on at least one index of at least one transmission occasion corresponding to the first PSFCH;

an eighth parameter determined based on a total number of at least one transmission occasion corresponding to the first PSFCH;

a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and

an eleventh parameter determined based on a total number of resources comprised in the second candidate transmission resource set,

wherein the first PSSCH is associated with the first PSFCH.

**121.**

The terminal device of claim 120, wherein determination of the at least one dedicated RB occupied by the first PSFCH from the second candidate transmission resource set based on the twenty-first parameter comprises:

determining the at least one dedicated RB occupied by the first PSFCH based on an index of the transmission resources for the first PSFCH, wherein the index is determined from the second candidate transmission resource set based on the twenty-first parameter.

**122.**

The terminal device of claim 106, wherein the at least one dedicated RB occupied by the first PSFCH is determined from a third candidate transmission resource set, and the third candidate transmission resource set is determined from the second candidate transmission resource set.

**123.**

The terminal device of claim 122, wherein the third candidate transmission resource set is determined from the second candidate transmission resource set based on a twelfth parameter, and the twelfth parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;

a third parameter determined based on a number of subchannels, a number of interlaces, or a number of RBs comprised in the transmission resources for the first PSSCH;

a fourth parameter determined based on a slot index corresponding to the transmission resources for the first PSSCH;

a fifth parameter determined based on at least one index of at least one RB set corresponding to the transmission resources for the first PSSCH;

a sixth parameter determined based on a number of at least one RB set corresponding to the transmission resources for the first PSSCH; and

an eleventh parameter determined based on a total number of resources comprised in the second candidate transmission resource set.

124.

The terminal device of any one of claims 122 to 123, wherein the at least one dedicated RB occupied by the first PSFCH is determined from the third candidate transmission resource set based on a thirteenth parameter, and the thirteenth parameter comprises one or more of:

a third parameter determined based on a number of subchannels, a number of interlaces, or a number of RBs comprised in the transmission resources for the first PSSCH;

a fifth parameter determined based on at least one index of at least one RB set corresponding to the transmission resources for the first PSSCH;

a sixth parameter determined based on a number of at least one RB set corresponding to the transmission resources for the first PSSCH,

a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and

a fourteenth parameter determined based on a total number of resources comprised in the third candidate transmission resource set.

125.

The terminal device of claim 123 or 124, wherein determination of the second candidate transmission resource set based on at least one index of at least one PSFCH transmission occasion comprises:

determining at least one RB set available for transmission of the first PSFCH based on the at least one index of the at least one PSFCH transmission occasion, wherein the at least one RB set constitutes the second candidate transmission resource set,

determination of the third candidate transmission resource set from the second candidate transmission resource set based on the twelfth parameter comprises:

determining at least one interlace available for transmission of the first PSFCH from the second candidate transmission resource set based on the twelfth parameter, wherein the at least one interlace constitutes the third candidate transmission resource set.

126.

The terminal device of claim 125, wherein

transmission resources in the second candidate transmission resources are indexed in an order of: at least one index of the at least one RB set in an ascending order, and then indexes of interlaces in an ascending order, or transmission resources in the second candidate transmission resources are indexed in an order of: indexes of interlaces in an ascending order, and then at least one index of the at least one RB set in an ascending order.

127.

The terminal device of claim 125 or 126, wherein

transmission resources in the third candidate transmission resources are indexed in an order of: indexes of interlaces in an ascending order, then indexes of resource block groups in an ascending order, and then indexes of code-domain resources in an ascending order; or

transmission resources in the third candidate transmission resources are indexed in an order of: indexes of resource block groups in an ascending order, then indexes of interlaces in an ascending order, and then indexes of code-domain resources in an ascending order.

128.

The terminal device of claim 123 or 124, wherein determination of the second candidate transmission resource set based on at least one index of at least one PSFCH transmission occasion comprises:

determining at least one RB set available for transmission of the first PSFCH based on the at least one index of the at least one PSFCH transmission occasion, wherein the at least one RB set constitutes the second candidate transmission resource set,

determination of the third candidate transmission resource set from the second candidate transmission resource set based on the twelfth parameter comprises:

determining at least one resource block group available for transmission of the first PSFCH from the second candidate transmission resource set based on the twelfth parameter, wherein the at least one resource block group constitutes the third candidate transmission resource set.

**129.**

The terminal device of claim 128, wherein

transmission resources in the second candidate transmission resources are indexed in an order of: at least one index of the at least one RB set in an ascending order, then indexes of interlaces in an ascending order, and then indexes of resource block groups in an ascending order; or

transmission resources in the second candidate transmission resources are indexed in an order of: indexes of resource block groups in an ascending order, then indexes of interlaces in an ascending order, and then at least one index of the at least one RB set in an ascending order; or

transmission resources in the second candidate transmission resources are indexed in an order of: indexes of interlaces in an ascending order, then at least one index of the at least one RB set in an ascending order, and then indexes of resource block groups in an ascending order; or

transmission resources in the second candidate transmission resources are indexed in an order of: indexes of interlaces in an ascending order, then indexes of resource block groups in an ascending order, and then at least one index of the at least one RB set in an ascending order.

**130.**

The terminal device of claim 128 or 129, wherein

transmission resources in the third candidate transmission resources are indexed in an order of: indexes of resource block groups in an ascending order, and then indexes of code-domain resources in an ascending order.

**131.**

The terminal device of claim 123 or 124, wherein determination of the second candidate transmission resource set based on at least one index of at least one PSFCH transmission occasion comprises:

determining at least one interlace available for transmission of the first PSFCH based on the at least one index of the at least one PSFCH transmission occasion, wherein the at least one interlace constitutes the second candidate transmission resource set;

determination of the third candidate transmission resource set from the second candidate transmission resource set based on the twelfth parameter comprises:

determining at least one interlace available for transmission of the first PSFCH from the second candidate transmission resource set based on the twelfth parameter, wherein the at least one interlace constitutes the third candidate transmission resource set.

**132.**

The terminal device of claim 131, wherein the second candidate transmission resource set is indexed according to indexes of interlaces in an ascending order.

**133.**

The terminal device of claim 131 or 132, wherein

transmission resources in the third candidate transmission resources are indexed in an order of: indexes of the interlaces in an ascending order, then indexes of resource block groups in an ascending order, and then indexes of code-domain resources in an ascending order; or

transmission resources in the third candidate transmission resources are indexed in an order of: indexes of resource block groups in an ascending order, then indexes of interlaces in an ascending order, and then indexes of code-domain resources in an ascending order.

**134.**

The terminal device of claim 123 or 124, wherein determination of the second candidate transmission resource set based on at least one index of at least one PSFCH transmission occasion comprises:

determining at least one interlace available for transmission of the first PSFCH based on the at least one index of the at least one PSFCH transmission occasion, wherein the at least one interlace constitutes the second candidate transmission resource set;
determination of the third candidate transmission resource set from the second candidate transmission resource set based on the twelfth parameter comprises:
determining at least one resource block group available for transmission of the first PSFCH from the second candidate transmission resource set based on the twelfth parameter, wherein the at least one resource block group constitutes the third candidate transmission resource set.

**135.**

The terminal device of claim 134, wherein

transmission resources in the second candidate transmission resources are indexed in an order of: indexes of interlaces in an ascending order, and then indexes of resource block groups in an ascending order; or transmission resources in the second candidate transmission resources are indexed in an order of: indexes of resource block groups in an ascending order, and then indexes of interlaces in an ascending order.

**136.**

The terminal device of claim 134 or 135, wherein
transmission resources in the third candidate transmission resources are indexed in an order of: indexes of resource block groups in an ascending order, and then indexes of code-domain resources in an ascending order.

**137.**

The terminal device of claim 123 or 124, wherein determination of the second candidate transmission resource set based on at least one index of at least one PSFCH transmission occasion comprises:

determining at least one resource block group available for transmission of the first PSFCH based on the at least one index of the at least one PSFCH transmission occasion, wherein the at least one resource block group constitutes the second candidate transmission resource set; and
determination of the third candidate transmission resource set from the second candidate transmission resource set based on the twelfth parameter comprises:
determining at least one resource block group available for transmission of the first PSFCH from the second candidate transmission resource set based on the twelfth parameter, wherein the at least one resource block group constitutes the third candidate transmission resource set.

**138.**

The terminal device of claim 137, wherein
transmission resources in the second candidate transmission resources are indexed according to indexes of resource block groups in an ascending order.

**139.**

The terminal device of claim 137 or 138, wherein
transmission resources in the third candidate transmission resources are indexed in an order of: indexes of resource block groups in an ascending order, and then indexes of code-domain resources in an ascending order.

**140.**

The terminal device of any one of claims 127, 130, 133, 136 or 139, wherein determination of the at least one dedicated RB occupied by the first PSFCH from the third candidate transmission resource set based on the thirteenth parameter comprises:
determining the at least one dedicated RB occupied by the first PSFCH based on an index of the transmission resources for the first PSFCH, wherein the index is determined from the third candidate transmission resource set based on the thirteenth parameter.

**141.**

The terminal device of claim 90 or 91, wherein the at least one dedicated RB occupied by the first PSFCH is determined from a fourth candidate transmission resource set, the fourth candidate transmission resource set is determined based on a fifteenth parameter, and the fifteenth parameter comprises one or more of:

a second parameter determined based on an index corresponding to a first subchannel of transmission resources for the first PSSCH, an index corresponding to a first interlace of the transmission resources for the first PSSCH, or an index corresponding to a first RB of the transmission resources for the first PSSCH;

a third parameter determined based on a number of subchannels, a number of interlaces, or a number of RBs comprised in the transmission resources for the first PSSCH;

a fourth parameter determined based on a slot index corresponding to the transmission resources for the first PSSCH;

a fifth parameter determined based on at least one index of at least one RB set corresponding to the transmission resources for the first PSSCH; and

a sixth parameter determined based on a number of at least one RB set corresponding to the transmission resources for the first PSSCH,

wherein the first PSSCH is associated with the first PSFCH.

**142.**
The terminal device of claim 141, wherein determination of the fourth candidate transmission resource set based on the fifteen parameter comprises:

determining at least one RB set available for transmission of the first PSFCH based on the fifteenth parameter, wherein the at least one RB set constitutes the fourth candidate transmission resource set.

**143.**
The terminal device of claim 142, wherein

transmission resources in the fourth candidate transmission resource set are indexed in an order of: at least one index of the at least one RB set in an ascending order, then indexes of interlaces in an ascending order, then indexes of resource block groups in an ascending order, and then indexes of code-domain resources in an ascending order; or

transmission resources in the fourth candidate transmission resource set are indexed in an order of: indexes of interlaces in an ascending order, then indexes of resource block groups in an ascending order, then at least one index of the at least one RB set in an ascending order, and then indexes of code-domain resources in an ascending order; or

transmission resources in the fourth candidate transmission resource set are indexed in an order of: indexes of interlaces in an ascending order, then at least one index of the at least one RB set in an ascending order, then indexes of resource block groups in an ascending order, and then indexes of code-domain resources in an ascending order; or

transmission resources in the fourth candidate transmission resource set are indexed in an order of: indexes of resource block groups in an ascending order, then indexes of interlaces in an ascending order, then at least one index of the at least one RB set in an ascending order, and then indexes of code-domain resources in an ascending order.

**144.**
The terminal device of claim 141, wherein determination of the fourth candidate transmission resource set based on the fifteen parameter comprises:

determining at least one interlace available for transmission of the first PSFCH based on the fifteenth parameter, wherein the one or more interlaces constitute the fourth candidate transmission resource set.

**145.**
The terminal device of claim 144, wherein

transmission resources in the fourth candidate transmission resource set are indexed in an order of: indexes of interlaces in an ascending order, then indexes of resource block groups in an ascending order, and then indexes of code-domain resources in an ascending order; or

transmission resources in the fourth candidate transmission resource set are indexed in an order of: indexes of resource block groups in an ascending order, then indexes of interlaces in an ascending order, and then indexes of code-domain resources in an ascending order.

**146.**

The terminal device of claim 141, wherein determination of the fourth candidate transmission resource set based on the fifteen parameter comprises:

determining at least one resource block group available for transmission of the first PSFCH based on the fifteenth parameter, wherein the at least one resource block group constitutes the fourth candidate transmission resource set.

**147.**

The terminal device of claim 146, wherein

transmission resources in the fourth candidate transmission resource set are indexed in an order of: indexes of resource block groups in an ascending order, and then indexes of code-domain resources in an ascending order.

**148.**

The terminal device of any one of claims 141 to 147, wherein the at least one dedicated RB occupied by the first PSFCH is determined from the fourth candidate transmission resource set based on a sixteenth parameter, and the sixteenth parameter comprises one or more of:

a third parameter determined based on a number of subchannels, a number of interlaces, or a number of RBs comprised in the transmission resources for the first PSSCH;

a fifth parameter determined based on at least one index of at least one RB set corresponding to the transmission resources for the first PSSCH;

a sixth parameter determined based on a number of at least one RB set corresponding to the transmission resources for the first PSSCH,

a seventh parameter determined based on at least one index of at least one transmission occasion corresponding to the first PSFCH;

an eighth parameter determined based on a total number of at least one transmission occasion corresponding to the first PSFCH;

a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and

a seventeenth parameter determined based on a total number of resources comprised in the fourth candidate transmission resource set,

wherein the first PSSCH is associated with the first PSFCH.

**149.**

The terminal device of claim 148, wherein determination of the at least one dedicated RB occupied by the first PSFCH from the fourth candidate transmission resource set based on the sixteenth parameter comprises:

determining an index corresponding to the transmission resources for the first PSFCH from the fourth candidate transmission resource set based on the sixteenth parameter, and determining the at least one dedicated RB occupied by the first PSFCH based on the index.

**150.**

The terminal device of claim 141, wherein the at least one dedicated RB occupied by the first PSFCH is determined from a fifth candidate transmission resource set, and the fifth candidate transmission resource set is determined from the fourth candidate transmission resource set.

**151.**

The terminal device of claim 150, wherein the fifth candidate transmission resource set is determined from the fourth candidate transmission resource set based on an eighteenth parameter, and the eighteenth parameter comprises one or more of:

a seventh parameter determined based on at least one index of at least one transmission occasion corresponding to the first PSFCH;

an eighth parameter determined based on a total number of at least one transmission occasion corresponding to the first PSFCH; and

a seventeenth parameter determined based on a total number of resources comprised in the fourth candidate transmission resource set.

**152.**

The terminal device of any one of claims 150 to 151, wherein the at least one dedicated RB occupied by the first PSFCH is determined from the fifth candidate transmission resource set based on a nineteenth parameter, and the nineteenth parameter comprises one or more of:

a third parameter determined based on a number of subchannels, a number of interlaces, or a number of RBs comprised in the transmission resources for the first PSSCH;
a fifth parameter determined based on at least one index of at least one RB set corresponding to the transmission resources for the first PSSCH;
a sixth parameter determined based on a number of at least one RB set corresponding to the transmission resources for the first PSSCH,
a ninth parameter determined based on first identification information, wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group; and
a twentieth parameter determined based on a total number of resources comprised in the fifth candidate transmission resource set.

**153.**

The terminal device of claim 150 or 151, wherein determination of the fourth candidate transmission resource set based on the fifteenth parameter comprises:

determining at least one RB set available for transmission of the first PSFCH based on the fifteenth parameter, wherein the at least one RB set constitutes the fourth candidate transmission resource set; and
determination of the fifth candidate transmission resource set from the fourth candidate transmission resource set based on the eighteenth parameter comprises:
determining at least one interlace available for transmission of the first PSFCH from the fourth candidate transmission resource set based on the eighteenth parameter, wherein the at least one interlace constitutes the fifth candidate transmission resource set.

**154.**

The terminal device of claim 153, wherein

transmission resources in the fourth candidate transmission resources are indexed in an order of: at least one index of the at least one RB set in an ascending order, and then indexes of interlaces in an ascending order, or transmission resources in the fourth candidate transmission resources are indexed in an order of: indexes of interlaces in an ascending order, and then at least one index of the at least one RB set in an ascending order.

**155.**

The terminal device of claim 153 or 154, wherein

transmission resources in the fifth candidate transmission resources are indexed in an order of: indexes of interlaces in an ascending order, then indexes of resource block groups in an ascending order, and then indexes of code-domain resources in an ascending order; or
transmission resources in the fifth candidate transmission resources are indexed in an order of: indexes of resource block groups in an ascending order, then indexes of interlaces in an ascending order, and then indexes of code-domain resources in an ascending order.

**156.**

The terminal device of claim 151 or 152, wherein determination of the fourth candidate transmission resource set based on the fifteenth parameter comprises:

determining at least one RB set available for transmission of the first PSFCH based on the fifteenth parameter, wherein the at least one RB set constitutes the fourth candidate transmission resource set; and
determination of the fifth candidate transmission resource set from the fourth candidate transmission resource set based on the eighteenth parameter comprises:
determining at least one resource block group available for transmission of the first PSFCH from the fourth candidate transmission resource set based on the eighteenth parameter, wherein the at least one resource block group constitutes the fifth candidate transmission resource set.

**157.**

The terminal device of claim 156, wherein

transmission resources in the fourth candidate transmission resources are indexed in an order of: at least one index of the at least one RB set in an ascending order, then indexes of interlaces in an ascending order, and then indexes of resource block groups in an ascending order; or

transmission resources in the fourth candidate transmission resources are indexed in an order of: indexes of resource block groups in an ascending order, then indexes of interlaces in an ascending order, and then at least one index of the at least one RB set in an ascending order; or

transmission resources in the fourth candidate transmission resources are indexed in an order of: indexes of interlaces in an ascending order, then at least one index of the at least one RB set in an ascending order, and then indexes of resource block groups in an ascending order; or

transmission resources in the fourth candidate transmission resources are indexed in an order of: indexes of interlaces in an ascending order, then indexes of resource block groups in an ascending order, and then at least one index of the at least one RB set in an ascending order.

**158.**

The terminal device of claim 156 or 157, wherein
transmission resources in the fifth candidate transmission resources are indexed in an order of: indexes of resource block groups in an ascending order, and then indexes of code-domain resources in an ascending order.

**159.**

The terminal device of claim 151 or 152, wherein determination of the fourth candidate transmission resource set based on the fifteenth parameter comprises:

determining at least one interlace available for transmission of the first PSFCH based on the fifteenth parameter, wherein the one or more interlaces constitute the fourth candidate transmission resource set; and

determination of the fifth candidate transmission resource set from the fourth candidate transmission resource set based on the eighteenth parameter comprises:

determining at least one interlace available for transmission of the first PSFCH from the fourth candidate transmission resource set based on the eighteenth parameter, wherein the at least one interlace constitutes the fifth candidate transmission resource set.

**160.**

The terminal device of claim 159, wherein
transmission resources in the fourth candidate transmission resources are indexed according to indexes of interlaces in an ascending order.

**161.**

The terminal device of claim 159 or 160, wherein

transmission resources in the fifth candidate transmission resources are indexed in an order of: indexes of interlaces in an ascending order, then indexes of resource block groups in an ascending order, and then indexes of code-domain resources in an ascending order; or

transmission resources in the fifth candidate transmission resources are indexed in an order of: indexes of resource block groups in an ascending order, then indexes of interlaces in an ascending order, and then indexes of code-domain resources in an ascending order.

**162.**

The terminal device of claim 151 or 152, wherein determination of the fourth candidate transmission resource set based on the fifteenth parameter comprises:

determining at least one interlace available for transmission of the first PSFCH based on the fifteenth parameter, wherein the at least one interlace constitutes the fourth candidate transmission resource set; and

determination of the fifth candidate transmission resource set from the fourth candidate transmission resource set based on the eighteenth parameter comprises:
determining at least one resource block group available for transmission of the first PSFCH from the fourth candidate transmission resource set based on the eighteenth parameter, wherein the at least one resource block group constitutes the fifth candidate transmission resource set.

**163.**
The terminal device of claim 162, wherein

transmission resources in the fourth candidate transmission resources are indexed in an order of: indexes of interlaces in an ascending order, and then indexes of resource block groups in an ascending order; or
transmission resources in the fourth candidate transmission resources are indexed in an order of: indexes of resource block groups in an ascending order, and then indexes of interlaces in an ascending order.

**164.**
The terminal device of claim 162 or 163, wherein
transmission resources in the fifth candidate transmission resources are indexed in an order of: indexes of resource block groups in an ascending order, and then indexes of code-domain resources in an ascending order.

**165.**
The terminal device of claim 151 or 152, wherein determination of the fourth candidate transmission resource set based on the fifteenth parameter comprises:

determining at least one resource block group available for transmission of the first PSFCH based on the fifteenth parameter, wherein the at least one resource block group constitutes the fourth candidate transmission resource set; and
determination of the fifth candidate transmission resource set from the fourth candidate transmission resource set based on the eighteenth parameter comprises:
determining at least one resource block group available for transmission of the first PSFCH from the fourth candidate transmission resource set based on the eighteenth parameter, wherein the at least one resource block group constitutes the fifth candidate transmission resource set.

**166.**
The terminal device of claim 165, wherein
transmission resources in the fourth candidate transmission resources are indexed according to indexes of resource block groups in an ascending order.

**167.**
The terminal device of claim 165 or 166, wherein
transmission resources in the fifth candidate transmission resources are indexed in an order of: indexes of resource block groups in an ascending order, and then indexes of code-domain resources in an ascending order.

**168.**
The terminal device of any one of claims 155, 158, 161, 164 or 167, wherein determination of the transmission resource occupied by the first PSFCH from the fifth candidate transmission resource set based on the nineteenth parameter comprises:
determining an index corresponding to the transmission resources for the first PSFCH from the fifth candidate transmission resource set based on the nineteenth parameter, and determining the at least one dedicated RB occupied by the first PSFCH based on the index.

**169.**
The terminal device of any one of claims 90 to 168, wherein in a case where the first terminal device determines transmission resources for a second PSFCH, if the at least one RB set where the transmission resources for the first PSFCH are located is the same as at least one RB set where the transmission resources for the second PSFCH are located, the common interlace comprised in the transmission resources for the first PSFCH is the same as a common interlace comprised in the transmission resources for the second PSFCH.

**170.**
The terminal device of any one of claims 90 to 169, wherein a first PSSCH is associated with the first PSFCH, transmission resources for the first PSSCH comprises a second RB set, and the determining unit is configured to:
determine the transmission resources for the first PSFCH in the second RB set.

**171.**

The terminal device of claim 170, wherein determination of the transmission resources for the first PSFCH in the second RB set comprises:
determining the transmission resources for the first PSFCH in the second RB set based on one or more of following parameters:

index information corresponding to the second RB set;
an index corresponding to a first subchannel of transmission resources for the first PSSCH in the second RB set, an index corresponding to a first interlace of the transmission resources for the first PSSCH in the second RB set, or an index corresponding to a first RB of the transmission resources for the first PSSCH in the second RB set;
a number of subchannels, a number of interlaces, or a number of RBs comprised in the transmission resources for the first PSSCH in the second RB set;
an index of a slot corresponding to the transmission resources for the first PSSCH;
an index of a transmission occasion corresponding to the first PSFCH;
a total number of at least one transmission occasion corresponding to the first PSFCH; and
first identification information,
wherein the first identification information comprises second identification information and/or third identification information, the second identification information is determined based on a source identification comprised in first SCI for scheduling the first PSSCH, and the third identification information is 0 or the third identification information is determined based on a member identification of the terminal device in a communication group.

**172.**

The terminal device of claim 170 or 171, wherein the second RB set is a first one of at least one RB set corresponding to the transmission resources for the first PSSCH.

**173.**

The terminal device of any one of claims 170 to 172, wherein the transmission resources for the first PSSCH further comprise a third RB set, and the determining unit is configured to:
determine the transmission resources for the first PSFCH in the third RB set.

**174.**

The terminal device of claim 173, wherein determination of the transmission resources for the first PSFCH in the third RB set comprise:
if the first terminal device has no PSFCH to be sent in the third RB set within time-domain resources corresponding to the transmission resources for the first PSFCH, determining the transmission resources for the first PSFCH in the third RB set.

**175.**

The terminal device of any one of claims 170 to 172, wherein if the transmission resources for the first PSSCH correspond to a plurality of RB sets, the first terminal device is configured to determine the transmission resources for the first PSFCH in each of the plurality of RB sets respectively.

**176.**

The terminal device of any one of claims 170 to 172, wherein the transmission resources for the first PSSCH further comprise a third RB set, and the terminal device is further configured to:

determine transmission resources for a third PSFCH in the third RB set,
wherein the transmission resources for the third PSFCH comprise a common interlace in the third RB set, and time-domain resources for the third PSFCH are the same as time-domain resources for the first PSFCH.

**177.**

The terminal device of claim 176, wherein determination of the transmission resources for the third PSFCH in the third RB set comprises:
if the first terminal device has no PSFCH to be sent in the third RB set within time-domain resources corresponding to the transmission resources for the first PSFCH, determining the transmission resources for the third PSFCH in the third RB set.

**178.**

The terminal device of claim 176 or 177, wherein the terminal device is further configured to:
send the first PSFCH and the third PSFCH.

**179.**

A terminal device comprising a memory and a processor, wherein the memory is configured to store a program, and the processor is configured to call the program in the memory to cause the terminal device to perform the method of any one of claims 1-89.

**180.**

A device comprising a processor configured to call a program from a memory to cause the device to perform the method of any one of claims 1-89.

**181.**

A chip comprising: a processor configured to call a computer program from a memory, to enable a device on which the chip is mounted to perform the method of any one of claims 1-89.

**182.**

A computer-readable storage medium configured to store a computer program, wherein the computer program causes a computer to perform the method of any one of claims 1-89.

**183.**

A computer program product, comprising programs, wherein the programs cause a computer to perform the method of any one of claims 1-89.

**184.**

A computer program, wherein the computer program causes a computer to perform the method of any one of claims 1-89.

**FIG. 1**

Sidelink
communication

**FIG. 2**

110

**FIG. 3**

120b          120b

Sidelink
communication

**FIG. 4**

**Communication
group**

Terminal
device 1

Resource
allocation          Resource
allocation

Terminal
device 2          Terminal
device 3

Sidelink
communication

**FIG. 5**

Terminal device 2

Terminal device 6

Terminal device 3

**Terminal device 1**

Terminal device 5

Terminal device 4

**FIG. 6**

Terminal device 1          Terminal device 2

Sidelink data

**FIG. 7**

**Communication group**

Terminal device 2

Terminal device 1

Terminal device 3

Terminal device 4

**FIG. 8**

UE1                                              UE2

Sidelink data

Sidelink feedback
information

**FIG. 9**

Frequency
domain

| 0 | 1 | 2 | 3 | 4 | 5 | 6 | 7 | 8 | 9 | 10 | 11 | 12 | 13 |

Time
domain

AGC     PSCCH     PSSCH     PSFCH     GP

**FIG. 10**

Slot    0    1    2    3    4    5    6    7    8    9    10    11    12

PSSCH     PSFCH

**FIG. 11**

FIG. 12

FIG. 13

**FIG. 14**

Interlace 1  Interlace 2

**FIG. 15**

**FIG. 16**

**FIG. 17**

Slot    0    1    2    3    4    5    6    7    8    9    10    11

PSSCH

First one of PSFCH transmission occasions

Second one of PSFCH transmission occasions

**FIG. 18**

Determine transmission resources for a first PSFCH    S1910

**FIG. 19**

FIG. 20

EP 4 704 485 A1

**FIG. 21**

**FIG. 22**

**FIG. 23**

## INTERNATIONAL SEARCH REPORT

International application No.

**PCT/CN2023/113861**

### A. CLASSIFICATION OF SUBJECT MATTER

H04W 72/40(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 物理侧行反馈信道, 资源, 配置, 公共, 专有, 优先级, 物理侧行共享信道, physical sidelink feedback channel, PSFCH, resource, common, special, PRI, PSSCH, physical sidelink shared channel

### C. DOCUMENTS CONSIDERED TO BE RELEVANT

| Category* | Citation of document, with indication, where appropriate, of the relevant passages | Relevant to claim No. |
|---|---|---|
| X | CN 115549866 A (HUAWEI TECHNOLOGIES CO., LTD.) 30 December 2022 (2022-12-30) description, paragraphs [0203]-[0329] | 1-10, 90-99, 179-184 |
| X | CN 111865504 A (BEIJING SAMSUNG TELECOM R&D CENTER et al.) 30 October 2020 (2020-10-30) description, paragraphs [0200]-[0463] | 1-10, 90-99, 179-184 |
| A | CN 114365559 A (GUANGDONG OPPO MOBILE COMMUNICATIONS CO., LTD.) 15 April 2022 (2022-04-15) entire document | 1-184 |
| A | CN 115553005 A (GUANGDONG OPPO MOBILE COMMUNICATIONS CO., LTD.) 30 December 2022 (2022-12-30) entire document | 1-184 |
| A | CN 115580383 A (HUAWEI TECHNOLOGIES CO., LTD.) 06 January 2023 (2023-01-06) entire document | 1-184 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 April 2024** | **30 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/113861** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115589596 A (QUECTEL WIRELESS SOLUTIONS CO., LTD.) 10 January 2023 (2023-01-10)<br>entire document | 1-184 |
| A | CN 116326057 A (NOKIA SHANGHAI BELL CO., LTD. et al.) 23 June 2023 (2023-06-23)<br>entire document | 1-184 |

Form PCT/ISA/210 (second sheet) (July 2022)

## INTERNATIONAL SEARCH REPORT
### Information on patent family members

International application No.

**PCT/CN2023/113861**

| Patent document cited in search report | | | Publication date (day/month/year) | Patent family member(s) | Publication date (day/month/year) |
|---|---|---|---|---|---|
| CN | 115549866 | A | 30 December 2022 | None | |
| CN | 111865504 | A | 30 October 2020 | None | |
| CN | 114365559 | A | 15 April 2022 | None | |
| CN | 115553005 | A | 30 December 2022 | None | |
| CN | 115580383 | A | 06 January 2023 | None | |
| CN | 115589596 | A | 10 January 2023 | None | |
| CN | 116326057 | A | 23 June 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112650 W